# EUROPEAN PATENT APPLICATION

(11) **EP 1 583 011 A1**
(43) Date of publication of application: **05.10.2005**
(21) Application number: 03782839.9
(22) Date of filing: 19.12.2003
(51) Int. Cl.: G06F 17/60

(54) **NOZZLE INFORMATION SEARCH SYSTEM AND NOZZLE CATALOG DATABASE**

(30) Priority: 19.12.2002 JP 2002367941; 17.02.2003 JP 2003038490; 17.02.2003 JP 2003038541; 13.06.2003 JP 2003169458; 29.09.2003 JP 2003337703; 01.10.2003 JP 2003343449
(71) Applicant: Nozzle Network Co., Ltd., Hyogo 669-3309 (JP)
(72) Inventor: ASAKAWA, Hiroyoshi, Nishinomiya-shi, Hyogo 662-0894 (JP)
(74) Representative: Sajda, Wolf E.
(86) International application number: PCT/JP2003/016335
(87) International publication number: WO 2004/057510

(57) **Abstract**

There is provided a nozzle information search system, wherein a data base is constructed based on a nozzle catalog in a server system installed on a network, and the nozzle user can retrieve the nozzle information by accessing the server system through a data base search means, **characterized in that** the server system includes: a first nozzle model number search means to extract the nozzle model number information from the data base by inputting the search criteria of a first level; a second nozzle model number search means capable of extracting, from the data base, the nozzle model number information narrowed more than the first nozzle model number search by inputting more detailed search criteria than the first level; a nozzle specification search means to search the data base for the nozzle specification information by inputting the nozzle model number information; and similar nozzle search means capable of extracting the nozzle model number information of a nozzle having similar specification from the data base by inputting reference nozzle information.

## Description

### TECHNICAL FIELD

The present invention relates to a nozzle information search system and a nozzle catalog data base used for the system, in which a data base is constructed based on a nozzle catalog in a server system installed on a network, and the nozzle user can retrieve the nozzle information by accessing the server system.

### BACKGROUND ART

As a system described above, the nozzle information search system disclosed in Japanese Unexamined Patent Publication No. -6 is known. In this system, the nozzle information carried in nozzle catalogs of nozzle manufactures are set as a data base in a server installed on a network (internet), and the nozzle user can retrieve the desired nozzle information by accessing the server. To provide this nozzle information search system, various pages (web site or web page) are constructed in the server system. In order to allow the user to search the data base and retrieve the information on the desired nozzle, an input form to input the search criteria is required to be supplied so that the result of search is displayed on the screen.

From the standpoint of the user desiring a nozzle, the search criteria to retrieve the nozzle are considered to be greatly varied. By supplying the user with a variety of search methods, therefore, a high convenience is required to be secured. Also, some users are skilled in nozzle search while other users are not. Therefore, a search method is required taking this situation into consideration.

This invention has been achieved in view of this situation, and the object thereof is to provide a nozzle information search system in which the nozzle user in searching the data base is supplied with a variety of search methods very conveniently.

### DISCLOSURE OF THE INVENTION

In order to solve the problem described above, according to this invention, there is provided a nozzle information search system, wherein a data base is constructed based on a nozzle catalog in a server system installed on a network, and the nozzle user can retrieve the nozzle information by accessing the server system through a data base search means, characterized in that the server system includes:
a first nozzle model number search means to extract the nozzle model number information from the data base by inputting the search criteria of a first level;
a second nozzle model number search means capable of extracting, from the data base, the nozzle model number information narrowed more than the first nozzle model number search by inputting more detailed search criteria than the first level;
a nozzle specification search means to search the data base for the nozzle specification information by inputting the nozzle model number information; and
a similar nozzle search means capable of extracting the nozzle model number information of a nozzle having similar specification from the data base by inputting reference nozzle information.

The operation and effects of the search system having this configuration are described below. The server system installed on the network includes the following four search means, which can be constructed by software installed in the server system.

First, the first nozzle model number search means extracts the nozzle model number information by inputting the first-level search criteria. The second nozzle model number search means similarly extracts the nozzle model number information by inputting the second-level search criteria more detailed than the first-level search criteria. Therefore, the second nozzle model number search means can retrieve the nozzle in narrower range and therefore considered adapted for more skilled users.

The nozzle specification search means, contrary to the nozzle model number search means, is intended to retrieve the nozzle specification information from the data base by inputting the nozzle model number information. In this case, the nozzle model number information is not necessarily a full model number, but preferably the search is possible by partial coincidence (by what is called the ambiguous search). This search method can makes it possible for the user, for example, to secure the detailed information on the nozzle used by him/her from the catalog data of the manufactures.

The similar nozzle search means provides a search method to extract, from the data base, the nozzle model number information of similar specifications by inputting the reference nozzle information. For example, the user may be desirous of studying a nozzle of a different manufacture having similar specifications to the nozzle (nozzle having a similar pressure-flow rate characteristic, for example) now used or considered to be used by the user. In such a case, the similar nozzle search is useful. As described above, the four search methods of different features provide a very convenient nozzle information search system in which the nozzle user searching the data base can be supplied with a variety of search methods.

According to this invention, the first nozzle model number search means and the second nozzle model number search means preferably include a means for supplying an input form to input the first-step search criteria and a means for supplying an input form to input the second-step search criteria, each step being switched by changing the page,
wherein a display area is provided to display the search criteria already input on the display screen for displaying the input form and the display screen for displaying the search result.

The first and second nozzle model number search means provide an input form adapted to input the search criteria over at least two stages including the first and second steps. Each step is implemented by changing the page. On the input form display screen, the display area to display the search criteria already input is provided. Also on the input form display screen of the second step, therefore, the contents of the search criteria input at the first step can be confirmed on the display area. In the case where wrong search criteria are input, therefore, the process can be returned to the first step to input the search criteria again. In similar fashion, also on the display screen to display the search result, the search criteria input at each step are displayed on the display area, and therefore it is possible to confirm whether the search criteria are correct or not.

First, the first nozzle model number search means preferably includes a first means to supply an input form for inputting the nozzle category as a search criteria, a second means to supply an input form for inputting the spray pattern, and a third means to supply an input form for inputting the nozzle specification.

In conducting nozzle search, particular steps to be executed to input the search criteria are crucial as they are related to the operability of the system as viewed from the user. The first nozzle model number search means supplies an input form adapted to input the nozzle category, the spray pattern and the nozzle specification in stages. By setting these three search criteria, a rough nozzle search is made possible.

The second nozzle model number search means, on the other hand, includes a fourth means to supply an input form for inputting the nozzle category, a fifth means to supply an input form for inputting the inlet direction of a fluid, a sixth means to supply an input form for inputting the spray pattern and a seventh means to supply an input form for inputting the nozzle specification, as search criteria.

The second nozzle model number search means supplies an input form to input the nozzle category, the inlet direction, the spray pattern and the nozzle specification in stages. This means involves one more search criteria than the first nozzle model number search means and makes possible the search in a narrower form.

In the first nozzle model number search, the input form is preferably so configured that a plurality of the spray patterns are displayed by illustration to make selectable any of one of the spray patterns.

The spray pattern is one of the important items for nozzle selection. The type of spray pattern is difficult to express in words and the expression has not been unified among the nozzle manufactures and the nozzle users. How to input the spray pattern, therefore, affects the convenience of the search system. In view of this, a plurality of spray patterns difficult to express in words are displayed by illustration to permit the user to select any one of them. As a result, the selection of the spray pattern is simplified for an improved convenience.

Also in the second nozzle model number search means, the input form is preferably so configured that a plurality of inlet directions and a plurality of spray patterns are displayed by illustration to make selectable any one of the inlet directions and the spray patterns.

Like the spray pattern, the inlet direction is also difficult to express in words and the expression has not been unified. By illustrating the inlet direction and the spray pattern, therefore, the convenience can be improved.

In this configuration, in the case where one of the inlet directions is selected, only the spray pattern corresponding to the selected inlet direction is preferably displayed by illustration.

The spray pattern and the inlet direction are related to each other. In the case where all the illustrated spray patterns are displayed, those spray patterns not related to the selected inlet direction are also displayed. As a result, the search criteria may be input erroneously and the search result may not be successfully obtained. By displaying only the spray pattern corresponding to the selected inlet direction as described above, the user can positively retrieve the spray pattern without hesitation.

The nozzle model number search means is preferably so configured that the input items of the nozzle specification that can be input include the liquid pressure, the injection fluid flow rate and the spray angle for the third means, and in addition to these input items, the orifice material and the free passage diameter for the seventh means.

The setting of the input items is an important factor for proper nozzle search. In the case of the first nozzle model number search means, the fluid pressure, the injection fluid flow rate and the spray angle can be input as nozzle characteristics. A rough nozzle search is made possible by inputting the numerical value for at least one of these items. In the case of the second nozzle model number search means, on the other hand, other items such as the orifice material and the free passage diameter can be input in addition to the fluid pressure, the injection fluid flow rate and the spray angle. As a result, the search in narrower form (pin-point) is made possible.

Further, the allowable tolerance can preferably be also input together with the fluid pressure and the injection fluid flow rate.

The fluid pressure and the injection fluid flow rate are important factors of the nozzle characteristics. In the case where search is made with only with specific numerical values of these physical quantities, the nozzles not covered by the numerical values cannot be retrieved. In spite of the actual presence of a nozzle desired by the user, therefore, the search result might fail to include it. By inputting the allowable tolerance together with the physical values, the nozzle desired by the user can be positively retrieved.

According to another aspect of the invention, there is provided a nozzle information search system wherein a data base is constructed based on a nozzle catalog in a server system installed on a network, and the nozzle user can retrieve the nozzle information by accessing the server system, comprising:
a data base search means to search the data base based on the reference nozzle identification information that has been input;
a means to supply a display screen to display a list of reference nozzles extracted by search and select one reference nozzle from the displayed list;
a means to supply an input form for inputting the similar criteria of nozzles having similar specifications to the reference nozzle selected through the display screen; and
the data base search means to extract a similar nozzle by searching the data base according to the similar criteria input by the input form.

The operation and effects of the nozzle information search system having this configuration are described below. The data base constituting a nucleus of the search system is constructed based on the data described in nozzle catalogs. The nozzle user trying to retrieve a similar nozzle having a similar specification with a specified nozzle as a reference nozzle follows the procedure described below. First, to retrieve the reference nozzle from the data base, the identification information of the reference nozzle is input. The identification information may be the nozzle model number assigned by the nozzle manufacture or the identification information uniquely set by the search system. Based on the identification information, the data base is searched and the extracted reference nozzle is displayed. In the case where the reference nozzle can be extracted, one or a plurality of reference nozzles are retrieved and a list thereof is displayed. Next, once the reference nozzles are selected on this screen, the process proceeds to the input form display screen to input the similar criteria of the similar nozzles. On this screen, the similar criteria for retrieving the similar nozzles having similar specifications to the reference nozzles are input. The data base search means, based on the similar criteria thus input, searches the data base and extracts and displays the similar nozzle. As described above, a nozzle information search system can be provided in which a similar nozzle having a similar specification to a specified reference nozzle can be easily retrieved.

This invention is preferably so configured that the input form can be supplied in the form of table comparing the specification of the reference nozzle with the specification of the similar nozzles.

In the case where the specification of the reference nozzle and the specification of the similar nozzles are displayed in the form compared with each other on the screen, the similar criteria can be input while being confirmed and therefore a search system convenient to use is provided.

In this invention, the similar criteria include the pressure, flow rate and the spray angle characteristics. In the nozzle characteristics, the pressure, flow rate and the spray angle (injection angle) characteristics assume a considerably large weight. By inputting the pressure, flow rate and the spray angle characteristics as the similar criteria, therefore, the similar nozzle desired by the user can be retrieved easily.

This invention is preferably so configured that in the presence of a plurality of combination data of the pressure value and the flow rate value of the reference nozzle, one or a plurality of combinations can be designated as the similar criteria.

Some nozzle catalogs carry combination data including the pressure value and the flow rate value paired as nozzle characteristics, and these data are also stored as nozzle information in the data base. The similar criteria to retrieve the similar nozzles are often used in the case where the user desires to retrieve the nozzle having similar characteristics of the pressure value and the flow rate value in actual application. By making it possible to designate the combination of pressure value and flow rate value as similar criteria as described above, therefore, the similar nozzle desired by the user can be retrieved easily.

This invention is preferably so configured that the flow rate value and the search allowable tolerance of the flow rate value can be input.

By setting the search allowable tolerance, the search of the similar nozzle is facilitated. Specifically, by changing the size of allowable tolerance, the number of times the similar nozzle is retrieved is changed.

This invention is preferably so configured that at least one of the nozzle manufactures, the valve function, the strainer, the orifice material and the mounting structure can be selected as the similar criteria.

These criteria can also be used to narrow the range of similar nozzles to be retrieved. As a result, a high-quality similar nozzle search is made possible.

As the similar criteria according to the invention, the spray pattern and the inlet direction of the fluid can be preferably selected.

Some users regard nozzles having different spray patterns or different inlet directions as similar nozzles. In the case where these characteristics can be selected, therefore, the search for the similar nozzle desired by the user can be facilitated.

According to still another aspect of the invention, there is provided a nozzle information search system characterized by comprising:
a data base search means to search the data base based on the input values input by the nozzle user through the nozzle search screen;
a display data generating means to generate the display data for displaying the search result on the computer screen of the nozzle user; and
a unit conversion means in which in the case where the unit of the input value input by the nozzle user for search is different from the unit described in the nozzle catalog, one of the units is converted to unify the two units;
wherein the data base search means is so configured that the data base is searched based on the result of conversion by the unit conversion means, and
wherein the display data is generated in such a manner that the unit to be displayed can be selected by the nozzle user through the search result display screen.

This system comprises a data base for storing the nozzle catalog information of each nozzle manufacture, and the nozzle user can search the data base through the search screen displayed on the computer screen of the user by inputting the nozzle characteristic values as parameters for search. The nozzle characteristic values are physical quantities such as the flow rate, pressure or injection angle. These physical quantities can be expressed not by a single unit but by any one of plural units. The pressure, for example, can be expressed in MPa, bar, kgf/cm², etc. The user selects and inputs a specified one of the plurality of units. The unit of the characteristic value thus input is not always identical with the unit of the characteristic value stored in the data base. Thus, the unit conversion means executes the conversion process to unify the different units. The nozzle user, therefore, inputs the unit of his/her liking and is not required to make the calculation for unit conversion.

Upon complete data base search, the display data is generated for displaying the search result on the computer screen of the nozzle user. On this display screen, the units of the nozzle characteristic values on display can be selected. In the case where the manufactures are difficult to compare and evaluate on the display screen, therefore, a unit is selected and converted to facilitate comparative evaluation. The unit conversion can be effected based on the function of the unit conversion means. As a result, a nozzle information search system is provided in which the bothersome job of unit conversion is eliminated for retrieving the nozzle information.

According to this invention, the data base is preferably constructed based on the unit described in the nozzle catalog.

A method is also available in which the characteristic value described in the nozzle catalogs is stored as a data base by inputting the data unified into a specified unit. This method is not desirable, however, since numerical values different from those actually described in the catalogs are stored in the data base. The use of the very unit described in the nozzle catalogs can provide an accurate data base reflecting the intention of the nozzle manufacture.

According to this invention, the display data is preferably generated in such a manner that the unit described in the nozzle catalog is displayed on the first search result display screen.

By displaying the unit described in the catalog on the first search result display screen, the search result reflecting the specific contents described in the nozzle catalog can be obtained. The user desirous of display in another unit can select the particular unit. As a result, the search result display screen after unit conversion can be obtained thereby to facilitate the comparative determination.

According to this invention, the display data is preferably generated in such a manner that the units used by the nozzle manufactures can be collectively converted by selecting the unit to be displayed.

A configuration is also conceivable in which the unit to be displayed is selected for each manufacture or each nozzle product. By collective conversion, however, the unit conversion can be carried out efficiently.

According to the invention, the display data is preferably generated in such a manner that the unit input by the nozzle user on the nozzle search screen is visually recognizable in the unit selector for collective unit conversion on the first search result display screen.

As a result, the user can immediately recognize the unit selected by him/her. Also, the unit conversion can be carried out efficiently by selecting the unit selected by him/her in the unit selector.

Preferably, according to this invention, the nozzle information including the nozzle manufactures and the model numbers retrieved are displayed as a list on the search result display screen and the display data is generated in such a manner as to display the detailed information on the nozzle of a particular model number by selecting a specific one of the model numbers.

On the search result display screen, the nozzle information including the manufactures and the model numbers are displayed as a list. As a result, the manufactures and the nozzle model numbers retrieved can be recognized at a glance. Also, the required minimum information are included in the list, and in the case where more detailed information is desired on the nozzle of a specific model number, the nozzle of the particular model number is selected (by clicking a specified point on the screen, for example). As a result, the detailed information can be acquired.

This invention is preferably so configured that the table of the pressure and flow rate characteristics can be displayed as the detailed information and the unit conversion can be carried out at the same time.

The pressure and flow rate characteristic table is a table showing the relation between pressure and flow rate. This table is carried in the catalog and constitutes an important data indicating the nozzle characteristics. The units of pressure and flow rate shown in this characteristic table may be different from the units input by the user, and therefore the table is so configured that unit conversion is possible. By doing so, a user-friendly search system is provided. Further, preferably, a pressure and injection angle characteristic table is displayed as the detailed information while at the same time making possible unit conversion. This is because the pressure and spray angle characteristic table represents also an important data indicating the nozzle characteristics.

The nozzle information search system according to the invention can be constructed by the nozzle information search system installed in the server.

According to this invention, there is provided a nozzle catalog data base constructed based on the data described in the nozzle catalogs to retrieve the nozzle information, characterized by a configuration in which:
the pressure, flow rate and the spray angle described in the catalog are handled as a combination unit and this combination unit is registered with corresponding nozzle model number information;
in the case where the spray angle corresponding to the combination of pressure and flow rate is not described in the catalog, the appropriate one of the spray angles described in the catalogs which corresponds to the pressure is registered as a provisional spray angle;
the provisional spray angle is registered together with the identification data indicating that the spray angle is provisional; and
in the case where the nozzle model number is retrieved based on the pressure, flow rate and the spray angle, the fact that the spray angle is provisional can be displayed on the search result display screen.

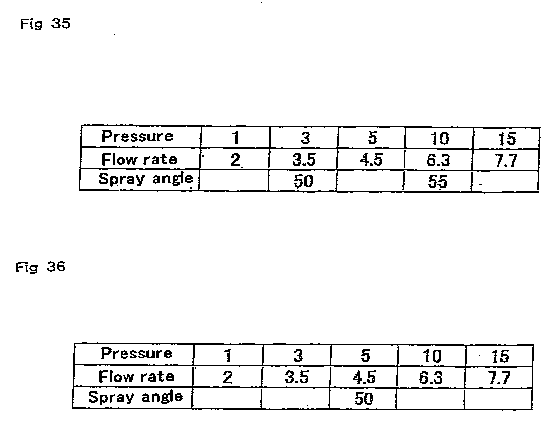

The operation and effects of the nozzle catalog data base having this configuration are described below. The data described in the catalog is registered in the data base with the three characteristic values of pressure, flow rate and spray angle as one combination unit. This combination unit data and the corresponding nozzle model number form a data base. In the case of Fig. 35, for example, the pressure, flow rate and spray angle are registered as combination units of [3, 3.5, 50 ] and [10, 6.3, 55 ]. In the absence of a corresponding spray angle, the appropriate one of the values described in the catalogs is registered as a provisional spray angle. In the case of Fig. 35, for example, the combination [5, 4.5 ] of pressure and flow rate is not accompanied by the description of the spray angle. As an appropriate value, however, the spray angle 50 is selected for the pressure 3 and registered as a provisional spray angle. In this way, the pressure, flow rate and spray angle expressed as [5, 4.5, 50 ] is registered as a combination. The pressure, flow rate and spray angle are registered as a combination unit in this way for the entire pressure range described in the catalog, and therefore the entire range of the characteristic values described in the catalog can be retrieved. In the case where a provisional spray angle is registered, on the other hand, the identification data indicating that the spray angle is provisional is also stored together with the provisional angle in the data base. As a result, in the case where the provisional spray angle is displayed on the search result display screen, the difference from the description in the catalog can also be displayed. Thus, the expression in the catalog is rewritten not freely but in a manner posing no problem in commercial transactions. The user can check the catalog actually as required or by making an inquiry directly to the nozzle manufacture. As a result, even in the pressure range with no spray angle description in the catalog, the nozzle search is possible, and therefore a nozzle catalog data base very reliable for both the user and the manufacture is provided.

According to the invention, in the case where the spray angle corresponding to the combination of pressure and flow rate is not described but a different combination is described in the catalog, the spray angle corresponding to the pressure nearest to the particular pressure is preferably registered as a provisional spray angle,

In the case where a provisional spray angle is registered, an appropriate value is employed preferably as a spray angle corresponding to the particular pressure. In the case of Fig. 35, for example, the spray angle 50 for the pressure 3 is considered more accurate than the spray angle 55 for the pressure 10 to employ as a provisional spray angle for the pressure 5. Thus, a characteristic value as near to the actual figure as possible can be displayed.

According to this invention, in the case where only one spray angle is described, the particular spray angle is preferably registered as a provisional spray angle.

In the case of Fig. 36, for example, the spray angle 50 is the only value described in the catalog for the pressure 5, and therefore the pressure 50 is registered as a provisional spray angle for all the other spray angles corresponding to pressures 1, 3, 10, 15. With regard to the nozzle having only one spray angle, the spray angle normally remains unchanged considerably with pressure. Therefore, this value can be employed as a provisional spray angle.

According to this invention, in the case where the spray distance and the spray width are described in the catalog, these figures converted into the spray angle is preferably registered as a provisional spray angle together with the second identification data.

Some nozzle manufactures describe no spray angle in the catalog but the spray distance and the spray width. In such a case, the spray angle can be calculated from the spray distance and the spray width. The spray angle thus determined is stored in the data base as a provisional spray angle. This spray angle, however, is not described in the catalog and therefore registered together with the identification data (explained as the second identification data in the fourth embodiment). The user can be informed, therefore, that the search result displayed is different from the description in the catalog.

According to yet another aspect of the invention, there is provided a nozzle information search system wherein the nozzle model number information can be extracted by inputting the pressure, flow rate and spray angle as a search key word using the nozzle catalog data base according to the invention, characterized by comprising:
a first means to supply a search screen through which at least the pressure, flow rate and spray angle can be input as a search key word;
a data base search means to search the nozzle catalog data base based on the input search key word and extract the corresponding nozzle model number information; and
a second means to supply a search result display screen for displaying the nozzle model number information retrieved;
wherein in the case where the spray angle to be displayed on the search result display screen is a provisional spray angle, the second means generates the display data in such a form that the provisional spray angle can be recognized.

In the case where the nozzle is retrieved by the nozzle information search system having this configuration, first, the search screen is displayed and the pressure, flow rate and the spray angle are input as a search key word. Based on the pressure, flow rate and the spray angle thus input, the data base search means searches the data base. In the case where the nozzle model number meeting the search criteria input is extracted, the particular nozzle model number information is displayed as a search result display screen. On this display screen, the pressure, flow rate and the spray angle are displayed for the particular nozzle model number, and a provisional spray angle, if any, is displayed in recognizable form. This display control operation can be determined according to the presence or absence of the identification data. As a result, the user can recognize from the search result that the spray angle is different from the actual value described in the catalog. This display can also maintain the reliability of commercial transactions. As a result, the nozzle can be retrieved even in the pressure range in which no spray angle is described in the catalog, and therefore a nozzle information search system highly reliable for both the user and the manufacture is provided.

According to a further aspect of the invention, there is provided a nozzle information search system, characterized in that the server system includes:
a data base search means to extract the nozzle information from the data base by inputting predetermined search criteria;
a page supply means to supply the search result page for displaying the nozzle information and the thumbnail image of the nozzle catalog as a result of search; and
an electronic mail starting means arranged in the search result page;
the system further comprising, on the electronic mail generating screen started by the electronic mail starting means,
an address setting means to automatically set the mail address of the nozzle manufacture of the nozzle retrieved, and
a page attaching means to attach the search result page to the electronic mail;
wherein the page attaching means executes the process in such a manner that the nozzle information and the thumbnail image are attached while at the same time deleting from the page the predetermined text information requiring no transmission and the predetermined image information other than the thumbnail image.

The operation and effects of this nozzle information search system are described below. A server system includes a means to retrieve the nozzle information, and by inputting predetermined search criteria, the nozzle information can be extracted from the data base. With regard to a specific nozzle obtained by search, the nozzle information and the thumbnail image of the catalog thereof can be displayed as the search result page on the computer screen of the user. This page includes an electronic mail starting means. By clicking a specific portion in the page, for example, the electronic mail software is started. Utilizing this, an electronic mail can be transmitted to the nozzle manufacture and other destinations to which transmission of the nozzle information is desired. In this case, the search result page is attached and transmitted to the destination.

In this case, the nozzle information (normally configured of the text data) described in the page and the thumbnail image of the catalog is attached to the electronic mail. Also, the page itself is not transmitted but after deleting the unnecessary data. The page normally contains various image information, and the unnecessary image information (linked to the image file) other than the thumbnail image of the catalog are deleted. The text data, etc. not related to the nozzle information are also deleted. After deleting the unnecessary data in this way, the nozzle information with the thumbnail image attached thereto are transmitted. In view of the fact that the thumbnail image is transmitted at the same time, the party receiving the electronic mail can view the thumbnail image without any access right to the server system. As a result, a nozzle information search system is provided in which in the case where the page displaying the search result is attached to the electronic mail and transmitted, the party receiving the mail can positively view the necessary information.

According to this invention, the attached information are preferably a HTML file and an image file of the thumbnail image.

The image file of the thumbnail image as well as the HTML file is transmitted, and therefore the web page with the thumbnail image built therein can be viewed without accessing the server system.

According to a still further aspect of the invention, there is provided a nozzle information search system utilizing a nozzle data base, characterized in that the server system includes:
a means to supply a first page group generated based on a first language to supply the user with a product search service;
a means to supply a second page group with the same contents as the first page group generated based on the second language;
a means to supply a specified page for explaining at least the summary of the search system in a part of the page group; and
a guide means to guide the user to the specified page;
wherein the specified page is generated based on at least one third language in addition to the first and second languages.

The operation and effects of the nozzle information search system having this configuration are described below. This nozzle information search system is configured of a server system installed on a network such as an internet. With this server system, a nozzle information data base is constructed based on the nozzle catalogs. In order to supply the user with the nozzle information search service, the first page group generated based on the first language is prepared in the server. The page group is configured of a multiplicity of sites (pages). The page is a web page (web site), for example, and stored in the server system in the form of a HTML file. Also, a page group having the same contents as the first page group is prepared in the second language, and held in the same server system as a second page group. The user who can understand the first language, therefore, can receive the service of the search system by the first page group. Also, the user who can understand the second language can use the second page group.

Further, a part of this page group is prepared in a third language and defined as a specified page. In the specified page, the summary of the search system is explained. The user who can understand the third language, therefore, can be informed of the summary of the search system by viewing the specified page. Also, assuming that the second language is English, for example, a user living in the third language world other than the English world is expected to understand English to some degree, and therefore the convenience is improved. The page prepared in the third language constitutes a part of the page group and therefore the page production cost can be considerably reduced. As a result, a nozzle information search system is provided in which the convenience can be improved for all the users in the world while at the same time considerably reducing the page production cost.

Also, a guide means to guide the user to the specified page is provided. As a result, the user can be positively guided to the specified page and can recognize the outline of the search system.

Incidentally, as to the page prepared in the fist language, all the languages in the page are not necessarily prepared in the first language. For example, the title may be described in the second language or in both the first and second languages. Also, the third language is not necessarily single but may be plural. By preparing the specified page in as many third languages as possible, the convenience can be improved.

The server system according to this invention comprises a second means to supply the page at the top of the search system or a page linked to the top page, wherein at least one of the pages functions as a language select page adapted to select one of the first, second and third languages, the system further comprising:
a third means to supply a first content page prepared based on the first language, arranged for explaining the table of contents of the search system and linked to the specified page prepared based on the language selected by selecting the language type;
a fourth means to supply a second content page having the same content as the first content page prepared based on the second language; and
a fifth means to supply a second specified page prepared based on the third language for explaining the presence of the specified page;
wherein the guide means is preferably so configured that the first content page is linked in the case where the first language is selected in the language select page, the second content page is linked in the case where the second language is so selected and the second specified page is linked in the case where the third language is so selected.

In the case where the specified page prepared in the third language is provided, a mechanism (guide means) to make the user recognize the presence of the specified page is required. First, therefore, the top page (or a page linked thereto) of the search system is rendered to function as a language select page. This language select page has the function to select any one of at least three types of languages including first, second and third languages. Assuming that the first language is selected, the process can proceed to the first content page in the first language. The content page is for explaining the table of contents of the search system. In the case where the second language is selected, on the other hand, the process can proceed to the second content page. In the case where the third language is selected, the content page is not linked immediately but the process proceeds to the second specified page. In this second specified page, the presence of the specified page for explaining the summary of the search system can be notified. The second specified page is prepared in the third language, and therefore the convenience can be improved for numerous users in the world.

According to this invention, the guide means is preferably so configured that the second specified page is linked to one of the first content page and the second content page.

As a result, even in the case where the third language is selected, as in the case where the first or second language is selected, the process can always proceed to the content page. Regardless of which language is selected, therefore, the process always can proceed (can be guided) to the first content page or the second content page.

According to this invention, the guide means may be so configured that the first content page and the second content page are linked to the specified page and have the function to select the first, second and third languages, and by selecting one of these languages, the specified page prepared in the selected language is linked.

With the guide means described above, the user can always reach the specified page through a content page. The specified page is prepared in the first, second and third languages. The user having the third language as the mother language can be also easily informed of the summary of the search system.

According to this invention, at least a part of the pages included in the first page group and the second page group may be linked to a translation site for translating the first or second language to the third language.

Only a small part of the pages in the search system according to the invention is prepared in the third language. By linking at least a part of the page to the translation site for translation into the third language, therefore, the chance of translation is given while at the same time improving the convenience for the user having the third language as the mother language.

### BRIEF DESCRIPTION OF THE DRAWINGS

Fig. 1: A schematic diagram showing a configuration of a nozzle information search system.
Fig. 2: A diagram showing a control block configuration of a server system.
Fig. 3: A diagram showing a configuration of a site map.
Fig. 4: A diagram showing a configuration of a site map.
Fig. 5: A diagram showing a configuration of a site map.
Fig. 6: A diagram showing an example of a configuration of a search method select screen.
Fig. 7: A diagram showing an example of a configuration of a step-1 search screen in the standard search.
Fig. 8: A diagram showing an example of a configuration of a step-2 search screen in the standard search.
Fig. 9: A diagram showing an example of a configuration of a step-3 search screen in the standard search.
Fig. 10: A diagram showing an example of a configuration of the screen for displaying a list of the search results in the standard search.
Fig. 11: A diagram showing an example of a configuration of the screen for displaying the detail of the search result in the standard search.
Fig. 12: A diagram showing an example of a configuration of the screen for displaying the detail of the search result in the standard search
Fig. 13: A diagram showing an example of a configuration of a step-1 search screen in the expert search.
Fig. 14: A diagram showing an example of a configuration of a step-2 search screen in the expert search.
Fig. 15: A diagram showing an example of a configuration of a step-3 search screen in the expert search.
Fig. 16: A diagram showing an example of a configuration of a step-4 search screen in the expert search.
Fig. 17: A diagram showing an example of a configuration of the search screen in the nozzle specification search.
Fig. 18: A diagram showing an example of a configuration of the search screen in the similar nozzle search.

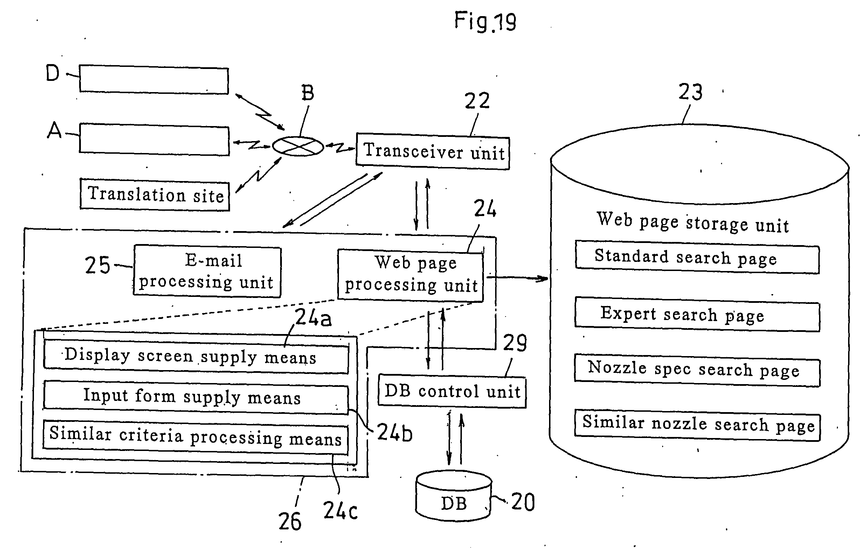

Fig. 19: A diagram showing a control block configuration of the server system.
Fig. 20: A flowchart showing the search process in the similar nozzle search.
Fig. 21: A diagram showing an example of a configuration of a step-1 search screen in the similar nozzle search.
Fig. 22: A diagram showing an example of a screen configuration of the no-search result in the similar nozzle search.
Fig. 23: A diagram showing an example of a configuration of a step-2 search screen in the similar nozzle search.
Fig. 24: A diagram showing an example of a configuration of a step-3 search screen (part 1) in the similar nozzle search.
Fig. 25: A diagram showing an example of a configuration of a step-3 search screen (part 2) in the similar nozzle search.
Fig. 26: A diagram showing an example of a configuration of the screen for displaying a list of the search results in the similar nozzle search.
Fig. 27: A diagram showing an example of a configuration of the screen for displaying the detail of the search result in the similar nozzle search.
Fig. 28: A diagram showing a function block configuration of a system according to a third embodiment.
Fig. 29: A diagram showing the search result (list).
Fig. 30: An example showing a configuration of the detailed information display screen.
Fig. 31: An example showing a configuration of the detailed information display screen.
Fig. 32: An example showing a configuration of the display screen of the unit conversion page.
Fig. 33: An example showing actual description in a nozzle catalog.
Fig. 34: A display example showing the data base registration and the search result of the nozzle catalog.
Fig. 35: A display example (1) showing the specification of the nozzle catalog.
Fig. 36: A display example (2) showing the specification of the nozzle catalog.
Fig. 37: A diagram showing an example (1) of registration of a provisional spray angle.
Fig. 38: A diagram showing an example (2) of registration of a provisional spray angle.
Fig. 39: A diagram showing an example (3) of registration of a provisional spray angle.
Fig. 40: A diagram showing an example (4) of registration of a provisional spray angle.
Fig. 41: A diagram showing an example of registration of the provisional spray angle for the two-fluid nozzle.
Fig. 42: A diagram showing an example of configuration of a screen displaying a list of the search results in the standard search.
Fig. 43: A diagram showing an example of configuration of a screen displaying a list of the search results in the expert search.
Fig. 44: A diagram showing a control block configuration of the server system.
Fig. 45: A diagram showing an electronic mail receiving screen according to a first comparative example.
Fig. 46: A diagram showing an electronic mail receiving screen according to a second comparative example (first software).
Fig. 47: A diagram showing an electronic mail receiving screen according to a second comparative example (second software).
Fig. 48: A diagram showing an electronic mail receiving screen according to a third comparative example (first software).
Fig. 49: A diagram showing an electronic mail receiving screen according to a third comparative example (second software).
Fig. 50: A diagram showing an electronic mail receiving screen according to this invention (first software).
Fig. 51: A diagram showing an electronic mail receiving screen according to this invention (second software).
Fig. 52: A table showing the comparative evaluation of each method.
Fig. 53: A flowchart showing the procedure for taking measure against garbage characters.
Fig. 54: A diagram showing a control block configuration of the server system.
Fig. 55: A diagram for explaining the site map of the essential parts.
Fig. 56: A diagram showing an example of a configuration of the top page.
Fig. 57: A diagram showing an example of a configuration of the top page of the search system.
Fig. 58: A diagram showing an example of a configuration of the display screen of the second specified page.
Fig. 59: A diagram showing an example of a configuration of the content page.
Fig. 60: A diagram showing an example of a configuration of the content page.
Fig. 61: A diagram showing an example of a configuration of a quick guide screen.

### BEST MODE FOR CARRYING OUT OF THE INVENTION

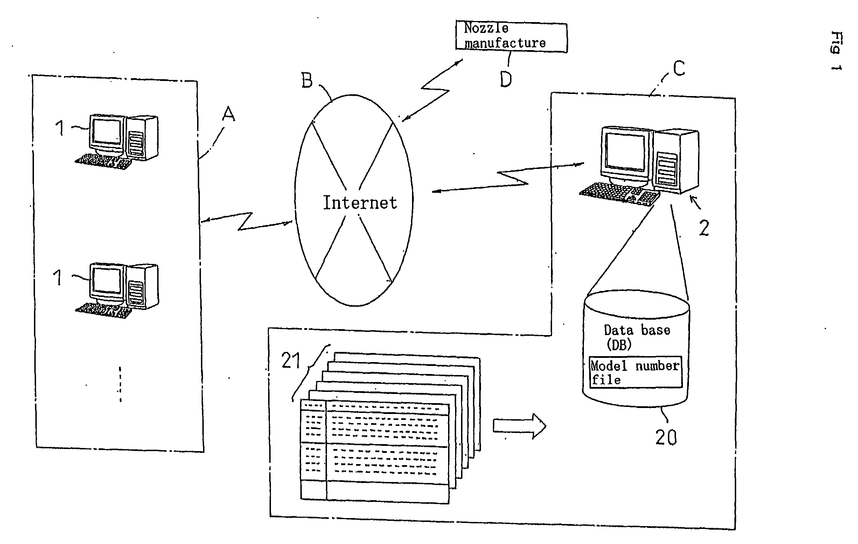

A nozzle search system according to a preferred embodiment of the invention is explained below with reference to the drawings. Fig. 1 is a schematic diagram showing a configuration of the nozzle information search system.

### 1.) First Embodiment (Basic mode and four search methods)

### General system configuration

In this system, a server system 2 managed by a general nozzle consultant company C (hereinafter referred to as the consultant company and corresponds to a server manager) supplying the nozzle information constructed in a data base and a client device 1 of a nozzle user A (hereinafter referred to simply as the user) are connected to each other by an internet B (corresponding to a network). The client device 1 is generally constituted of a personal computer, and has installed therein a browser connected to the internet to browse home pages. Also, the system of the nozzle manufacture D is connected.

The server system 2 is configured with what is called a web server as a nucleus, and various pages (sites) are prepared to use the nozzle information search system. This site map is explained later. The page is held in a hard disk in the form of HTML file. Also, the server system has installed therein an OS and various applications as software required for system operation. Further, a data base 20 of nozzle information is constructed based on a nozzle catalog 21 supplied by the nozzle manufactures of the countries of the world. An outline of this data base 20 is disclosed in Patent Document 1 of the present inventor described above.

As described above, the data base 20 has stored therein the nozzle information based on the nozzle catalogs. The nozzle specification information and the corresponding nozzle model number information are registered in the data base. Also, the nozzle model number information and the corresponding specification information such as pressure, flow rate, injection angle, injection pattern and material are registered. Therefore, the data base 20 can be searched with the numerical values of the injection angle desired by the user as a key word. Also, the catalog image data 21 of each company is input, and in the case where the model number of a given manufacture is designated, the corresponding page of the catalog carrying the nozzle of the particular model number can be retrieved. As a result, the user can acquire the catalog information of the nozzle manufactures over the whole world by using the data base 20.

### Configuration of server system

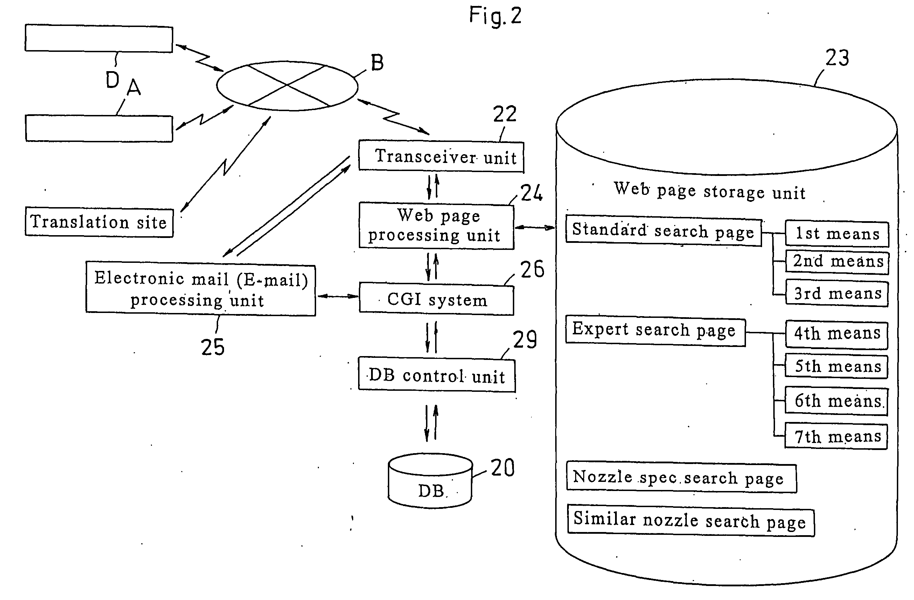

Next, the control block configuration of the server system 2 is explained with reference to Fig. 2. A transceiver unit 22, in response to an access request from the personal computer (hereinafter sometimes referred to as the external personal computer) of such as a user or a consultant company, transmits a web page (home page) data (HTML data) or an electronic mail. Also, the data, electronic mail, etc. input from the external personal computer are received. This transceiver unit 22 can be configured of a communication interface and a program (OS, etc.) installed in the computer making up the server system 2.

A web page storage unit 23 has held therein a web page data in the form of HTML file. A web page processing unit 24, in response to an access request from the external personal computer, causes the web page data stored in the web page storage unit 23 to be transmitted through the transceiver unit 22. Also, the processing result by the CGI program and the search result of the data base 20 are processed in the form of web page (generating the HTML data) and transmitted to the external personal computer.

The electronic mail processing unit 25 processes the electronic mail transmitted from the external personal computer by, for example, analyzing the data written in the electronic mail. Based on the analysis result, the CGI program is started. Also, the electronic mail to be transmitted to the external personal computer is automatically prepared. The CGI system 26 is defined as a function of the server to access and execute an external program (CGI program). A multiplicity of CGI programs constituting the nucleus of the CGI system 26 is stored.

The data base control unit 29, based on the key word information transmitted from the personal computer of the user, searches the data base 20. The search result is returned to the personal computer of the user in the form of web page by the function of the CGI system 26.

The web page storage unit 23 has stored therein a multiplicity of web page data, and those specially related to this invention are shown in Fig. 2. This search system, which provides four search methods, specifically includes the standard search, the expert search, the nozzle specification search and the similar nozzle search. The search page for this purpose is provided. The standard search page includes first, second and third means to supply various input forms. Also, the expert search page includes fourth, fifth, sixth and seventh means to supply various input forms. These means are described in detail later.

### Site map

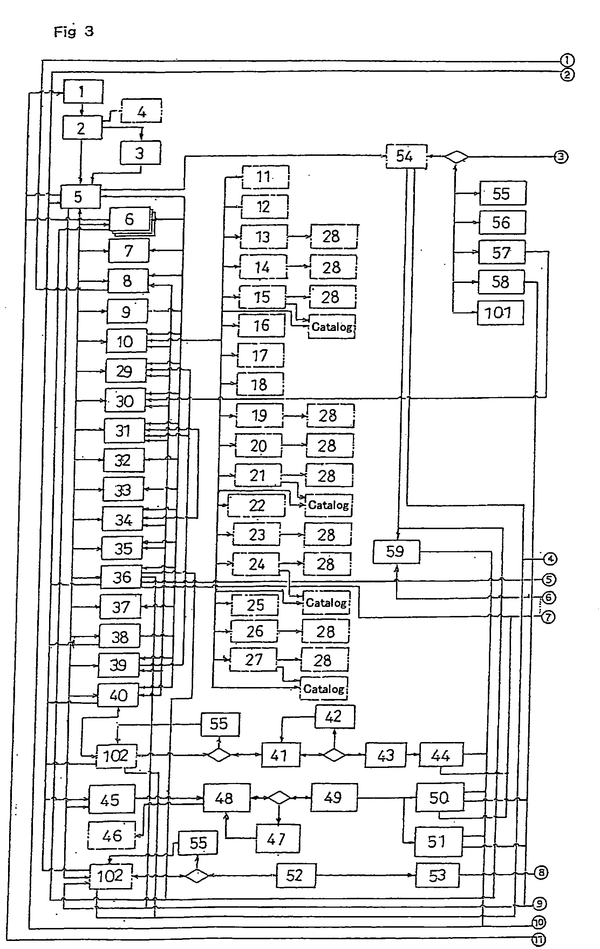

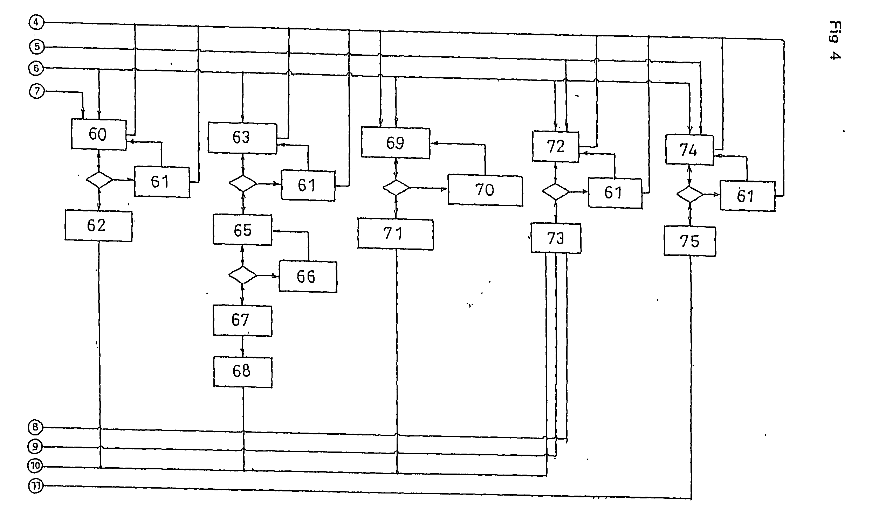

Next, the configuration of the page (site) stored in the web page storage unit 23 is explained with reference to the site map shown in Figs. 3 to 5. Each page is configured of a first page group prepared based on Japanese (first language) and a second page group having the same contents prepared based on English (second language). Therefore, both the first page group and the second page group have the same configuration as a site map. Also, a specified one of the pages included in each page group is described based on German, French, Italian, Spanish, Chinese, Korean, Arabic, Russian and Portuguese (corresponding to the third language) in addition to Japanese and English. In this system, to be used by users existing in various countries of the world, a specified page is prepared based on the languages of 11 countries in all. As a result, a very convenient system is provided.

In Figs. 3, 4, and 5, the pages are designated by numbers. The page in which the number is defined by two-dot chain indicates the page started by another window. The linkage between pages is indicated by arrow. The page is explained briefly, while the page related to this invention is explained in detail later. Figs. 3 to 5 shows the whole site map, and in the case where the linkage between pages covers different drawings, the arrows are connected by a numerical value with a white circle. In the drawings, the rhombic mark indicates that some determination process is executed.

The numeral "1" designates the top page of the consultant company, and "2" designates the top page of the nozzle information search system. The numeral "3" designates a page (second specified page) for explaining that this system is guided in the languages of 11 countries of the world. Numeral "4" designates the page for explaining that the campaign is going on, and numeral "5" designates a content page.

Numeral "6" designates a page (specified page) indicating the quick guide to the nozzle information search system. Numeral "7" designates a page for explaining the features of the system. Numeral "8" designates a page for explaining the contents of the nozzle catalog information forming the data base. Numeral "9" designates a page for explaining the types of the search method. Numeral "10" designates a page for explaining the operation of nozzle search. Numerals "11" to "13" designate pages for explaining the procedure of standard search. Numeral "14" designates a page for displaying the result of standard search. Numeral "15" designates a page for explaining the detailed result of standard search. In the detailed result, the catalog image can be viewed in a PDF file.

Numerals "16" to "19" designate pages for explaining the procedure of expert search. Numeral "20" designates a page indicating the result of expert search. Numeral "21" designates a page for explaining the detailed result of expert search. In the detailed result, the catalog image can be viewed in a PDF file.

Numeral "22" designates a page for explaining the nozzle specification search. Numeral "23" designates a page showing the result of nozzle specification search. Numeral "24" designates a page for explaining the detailed result of nozzle specification search. Numeral "25" designates a page showing the process of similar nozzle search. Numeral "26" designates a page for explaining the result of similar nozzle search. Numeral "27" designates a page for explaining the detailed result of similar nozzle search. Numeral "28" designates a page for unit conversion. This page is linked to the page requiring the unit conversion.

Numeral "29" designates a page for explaining the usage procedure. Numeral "30" designates a page for explaining the service providing time. Numeral "31" designates a page for explaining the usage fee and the payment method. Numeral "32" designates a page for explaining the recommended environment of the personal computer. Numeral "33" designates a page for the usage rule. Numeral "34" designates a page for explaining the security policy. Numeral "35" designates a page for explaining the privacy policy. Numeral "36" designates a page for explaining the FAQ (frequently asked questions). Numeral "37" designates a page for explaining the inquiry. Numeral "38" designates a page for explaining the site map. Numeral "39" designates a page for the display related to the service. Numeral "40" designates a page for explaining the catalog download.

Numeral "102" designates a page for the member to log in. Specifically, to use this system, the membership is required to be registered in advance. After membership registration, the ID and the password are input and then the system can be used. Numeral "41" designates a page for explaining the entry form for the catalog destination information. Numeral "42" designates a page for displaying an error. Numeral "43" designates a page for confirming the contents transmitted. Numeral "44" designates a page for notifying the completion of transmission.

Numeral "45" designates a page for application for membership registration. Numeral "46" designates a page for notifying a guide to the free service. Numeral "47" designates a page for displaying an error. Numeral "48" designates a page for supplying the user with the application form for membership registration. Numeral "49" designates a page for the user to confirm the contents of the membership registration application. Numerals "50" and "51" designate pages for notifying the completion of the membership registration application.

Numeral "52" designates a page for explaining the payment of the usage fee. Numeral "53" designates a page for notifying the completion of settlement of the usage fee.

Numeral "54" designates a page for the member to log in. Numeral "55" designates a page for notifying a log-in error. In the case where this error is displayed, the user inputs the ID and the password again. Numeral "56" designates a page for notifying that the access is restricted. Numeral "57" designates a page for notifying that the system is down. Numeral "58" designates a page for notifying a time over. This system can be used only for a time corresponding to the fee paid. Numeral "59" designates a page for explaining the confirmation and change of the membership information and the confirmation of the usage time.

Numeral "60" designates a page for changing the password. Numeral "61" designates a page for notifying the error of the ID and the password that have been input. Numeral "62" designates a page for notifying the complete change of the password. Numeral "63" designates a page for confirming and changing the address and the contact address of the user. Numeral "65" designates a page for supplying an input form to change the address and the contact address. Numeral "66" designates a page for notifying an input error. Numeral "67" designates a page for confirming the specific change of the address and the contact address. Numeral "68" designates a page for notifying the complete change of the address and the contact address.

Numeral "69" designates a page for confirming the ID and the password. Numeral "70" designates a page for notifying an input error. Numeral "71" designates a page for displaying the ID and the password. Numeral "72" designates a page for confirming the usage condition of the system. Numeral "73" designates a page for notifying the usage condition.

Numeral "74" designates a page for supplying an input form for resignation. Numeral "75" designates a page for notifying the completion of the resignation procedure.

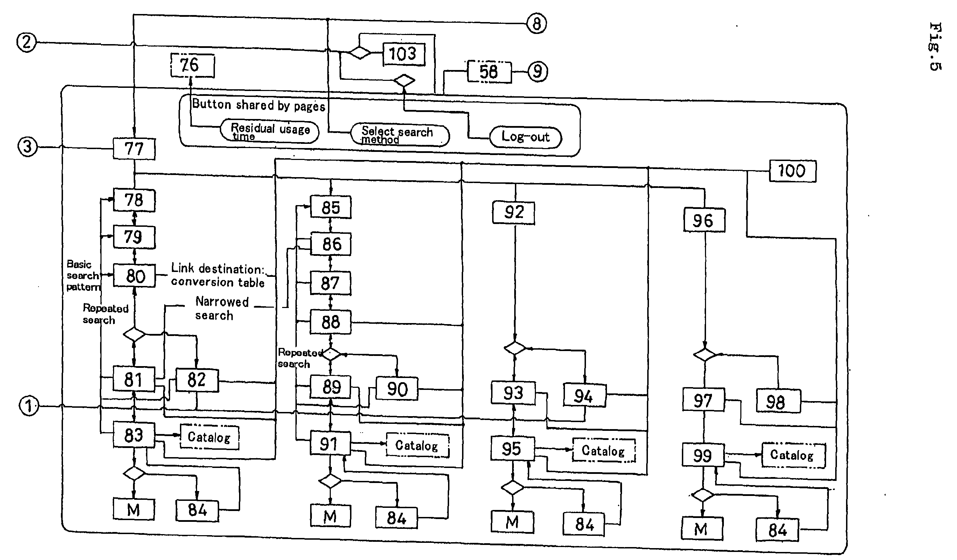

Next, the site map of the basic search pattern is explained with reference to Fig. 5.

Numeral "76" designates a page for displaying the residual usage time. This is set as a button shared by the pages in the basic search pattern. Numeral "77" designates a page for explaining the search method. The search method is divided into the search based on the nozzle model number, the search based on the nozzle specification, and the similar nozzle search capable of retrieving also nozzles of similar performance. The model number search is classified into the standard search for making search by inputting general criteria, and the expert search for making search by inputting detailed criteria. In other words, four search methods are provided.

Numerals "78" to "80" designate pages (first to third means) for supplying an input form for standard search. Numeral "81" designates a page for displaying a list of search results of the standard search. Numeral "82" designates a page for displaying a search error (no search). Numeral "83" designates a page for displaying the result of the standard search in detail. In this page, the catalog image of the retrieved nozzle can be displayed in a PDF file. Character "M" designates the start of the mail software. Specifically, the electronic mail can be transmitted to the manufacture of the nozzle selected by the user, out of the nozzle group retrieved. Numeral "84" designates a page for indicating that the electronic mail cannot be transmitted.

Numerals "85" to "88" designate pages (fourth to seventh means) for supplying an input form for expert search. Numeral "89" designates a page for displaying a list of the search results of the expert search. Numeral "90" designates a page for displaying a search error. Numeral "91" designates a page for displaying the result of the expert search in detail. The catalog image and the electronic mail are processed in the same manner as for the standard search.

Numeral "92" designates a page for supplying an input form for nozzle specification search. Numeral "93" designates a page for displaying a list of the search results of the nozzle specification search. Numeral "94" designates a page for displaying a search error. Numeral "95" designates a page for displaying the result of the nozzle specification search in detail. The catalog image and the electronic mail are processed the same way as for the standard search.

Numeral "96" designates a page for supplying an input form for similar nozzle search. Numeral "97" designates a page for displaying a list of search results of the nozzle specification search. Numeral "98" designates a page for displaying a search error. Numeral "99" designates a page for displaying the result of the nozzle specification search in detail. The catalog image and the electronic mail are processed in the same way as for the standard search.

Numeral "100" designates a page for unit conversion. The units of pressure and flow rate used in the nozzle catalogs are not unified among the manufactures. In view of this, conversion to a unit conveniently used by the user is made possible. Numeral "101" designates a page for notifying a plurality of log-in errors. Numeral "102" designates a page for membership log-in. Numeral "103" designates a page for confirming the log-out.

### Selection of search method

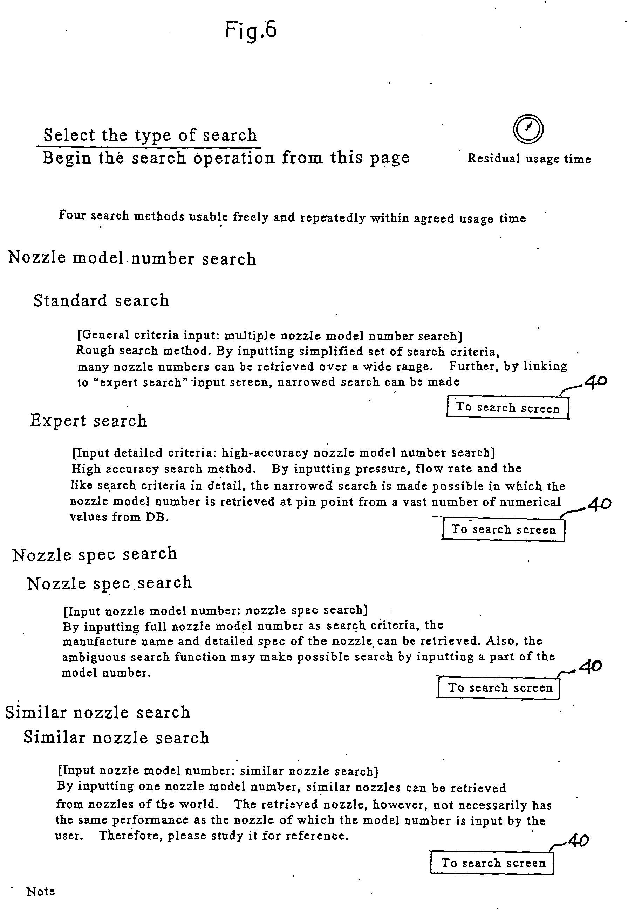

Next, the selection of the four search methods in the nozzle information search system according to the invention is explained. Fig. 6 shows an example of a display configuration of a page for selecting a search method. As shown in Fig. 6, the search system provides the four search methods. Specifically, they are the nozzle model number search including the standard search and the expert search, the nozzle specification search and the similar nozzle search. When the button 40 written as "to search screen" on the screen is clicked, the screen is transferred to each search screen. By clicking "residual usage time" in the upper right part of the screen, the residual usage time can be known (the page designated by "76" in Fig. 5). Each search method is sequentially explained below.

### Standard search

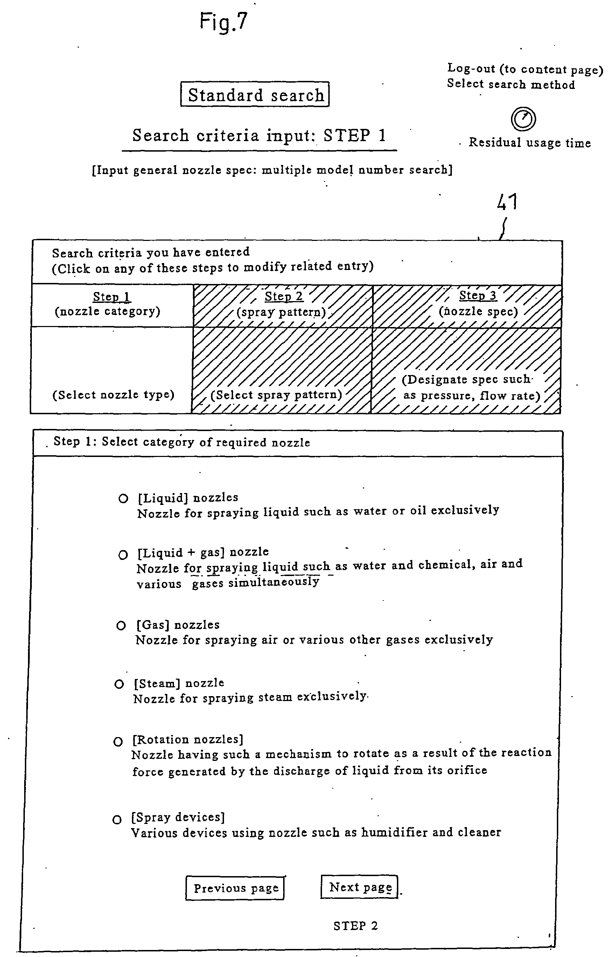

The standard search is a method in which a multiplicity of nozzle model numbers is retrieved by inputting general search criteria. A multiplicity of nozzle model numbers can be retrieved over a wide range. In standard search, the search criteria can be input in three stages. Upon selection of the standard search on the screen shown in Fig. 6, the step-1 search screen (input form) as shown in Fig. 7 comes to appear. This is based on the function of the first means.

In the upper part of the screen, a display area 41 for displaying the search criteria already input is arranged. At step 1, the nozzle category is input as search criteria. The nozzle category includes "liquid nozzle", "gas nozzle" and so on, and by clicking the radio button, one of them can be selected. Upon complete selection, the "next page" button in the lower part of the screen is clicked, and the process proceeds to step 2.

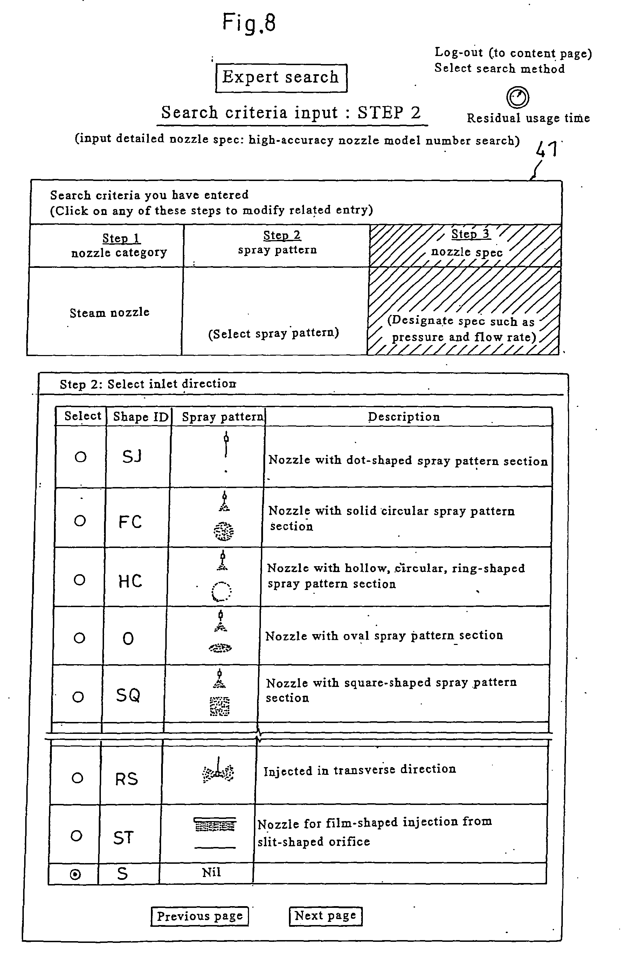

Fig. 8 is a diagram showing a step-2 search screen (input form) for standard search. This is based on the function of the second means, and like step 1, arranged in the display area 41. In this display area 41, the "steam nozzle" is displayed as nozzle category already input. As a result, the search criteria input in the past (at different steps) can be confirmed. In the case where it is desirous to change the criteria of step 1, the portion indicated as "step 1" in the display area 41 is clicked. Then, the search screen of Fig. 7 described above can be restored.

At step 2, the spray pattern is selected. The spray pattern is an injection pattern formed by the fluid ejected outside from the forward end of the nozzle. With regard to the spray pattern, the expression is not unified among the nozzle manufactures and the expression in words is difficult. In the case where the user inputs the spray pattern as search criteria, the form in which it is input is crucial. The form must be easy for the user to input. In view of this, the spray pattern is displayed by illustration. The present inventor studied the nozzle catalogs of the countries of the world, and has classified all the nozzles by spray pattern as an illustration shown in Fig. 8. Each spray pattern is accompanied by the shape ID. In the case where the direction in which the fluid is ejected is different, the nozzles having the same spray pattern section are classified in different categories. The expression of the spray pattern by illustration as well as by words makes it possible for the user to select the desired nozzle spray pattern without hesitation. For selection, one of the radio buttons is clicked. Upon complete input at step 2, the "next page" button is clicked to proceed to step 3.

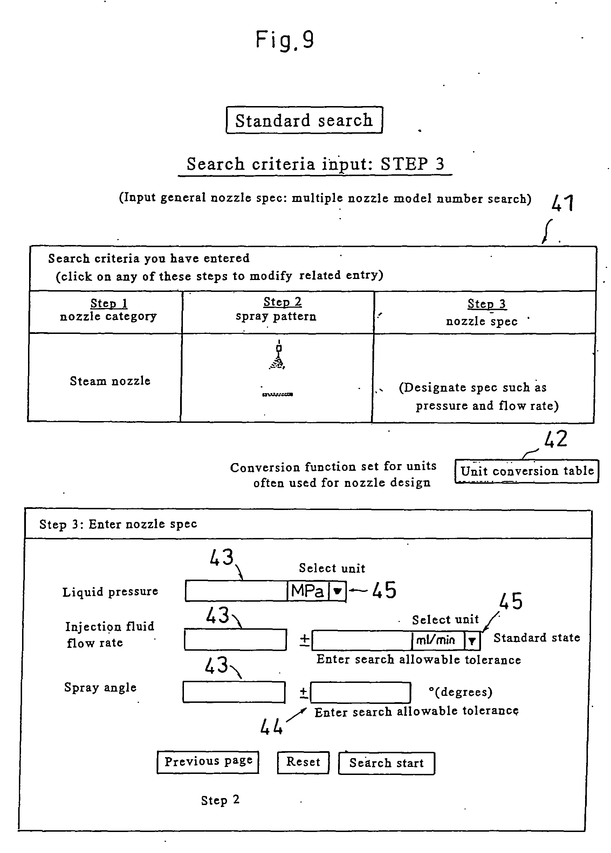

Fig. 9 is a diagram showing an example of a configuration of a step-3 search screen (input form). This is based on the function of the third means. At step 3, a general nozzle specification is input as search criteria. Like the screens of steps 1 and 2, the display area 41 is provided. The nozzle category already input and the illustrated spray pattern is displayed. The function of the display area 41 is the same as already described.

An input form to input the nozzle specification is shown in the lower part of the screen. Specifically, the fluid pressure, the injection fluid flow rate and the spray angle can be input. An input column 43 to input the fluid pressure and an input column 45 to input the unit are provided. A numerical value is input in the input column 43. The unit employed is varied from one manufacture or user to another, and therefore made selectable. Even in the case where the unit selected by the user is different from that described in the manufacture catalog, the arithmetic operation for unit conversion is conducted for search. Therefore, the search result is not different depending on the selected unit. The unit of the injection fluid flow rate can also be selected. When the button 42 described as the unit conversion table is clicked, the page for unit conversion is displayed in another window. In this page, the unit conversion can be carried out and utilized by the user as required.

An input column 44 to input the allowable tolerance of the injection fluid flow rate and the spray angle is also provided. This is by reason of the fact that in the absence of the allowable tolerance, the nozzle having the injection fluid flow rate and the spray angle corresponding to the input fluid pressure are liable to fail to be retrieved. Specifically, in the pin-point search by a numerical value, the nozzle having the characteristic desired by the user, if available, may not be extracted as the search result. In this search system, therefore, the search is secured by inputting the allowable tolerance at the same time.

Once the search criteria of step 3 are completely input, the search start button is clicked. Then, the search is started. In the case where the search criteria already input are input again, the corresponding portion in the display area 41 is clicked. Then, the search screen of the selected step is restored. In executing the search, steps 1 and 2 are essential, while the search is possible without inputting the nozzle specification of step 3. As an alternative, only a part of the nozzle specification can be input. As a result, the nozzles in a wide range of categories can be retrieved.

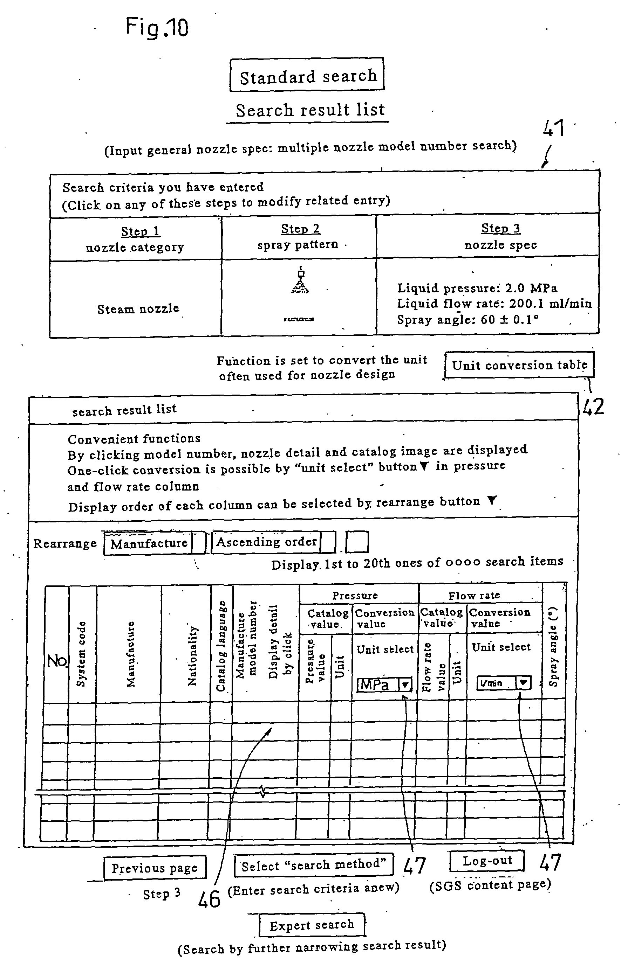

Fig. 10 shows an example of a configuration of the screen displaying a list of the search results in the standard search. Also on this screen, the display area 41 for displaying the search criteria is provided. This area has the same function as described above.

The list is shown in the lower part of the screen. The items in the list include the system code, manufacture, nationality, catalog language, manufacture model number, pressure value, unit, unit selection, flow rate value, unit, unit selection and the spray angle as illustrated. Though not shown for the convenience of illustration, items are also provided such as the material, the standard, size and male or female of a screw, valve and strainer. In this way, the search result can be extracted as a nozzle model number. In the case where a multiplicity of nozzles is retrieved, a list is prepared over a plurality of pages. The user checking this search result and desirous of inputting the search criteria anew clicks the button described as the "search method" in the lower part of the screen. In this case, the numerical value that has already been input is cleared. In the case where it is desired to narrow the search result, the expert search can be resorted to. Also in this case, the button described as the "expert search" in the lower part of the screen is clicked. This is described later.

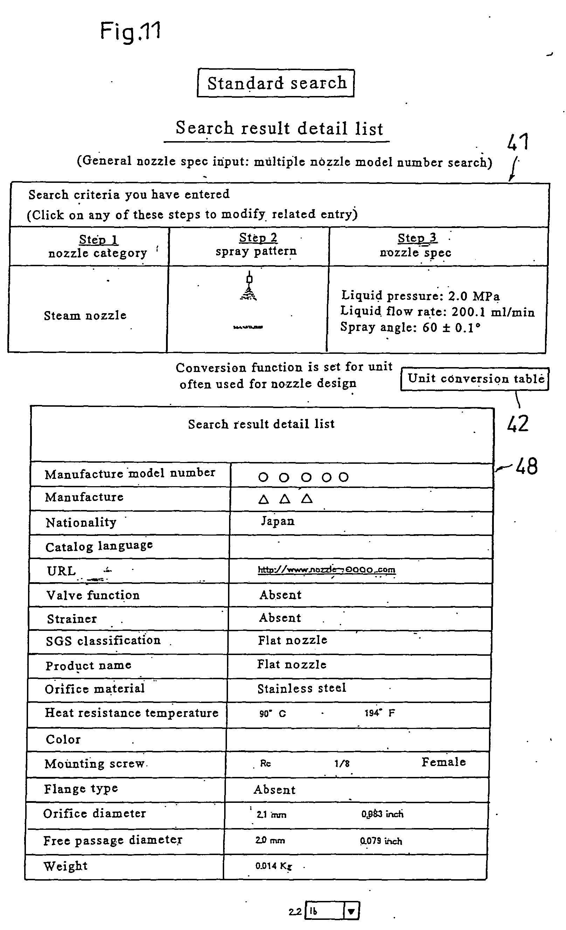

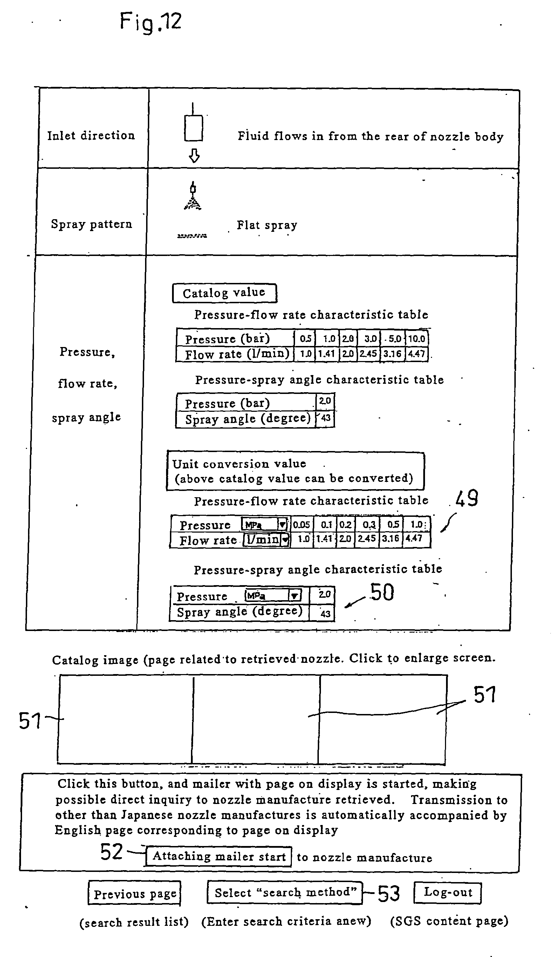

In the case where it is desired to know the detail of the nozzle having a specified nozzle model number among those of various companies indicated in the list, the frame interior (the portion indicated by numeral 46, for example) of the manufacture model number in the list is clicked. Then, the process proceeds to the screen for displaying the detailed search result shown in Figs. 11 and 12. The screen is changed to Fig. 12 by scrolling the screen of Fig. 11 downward.

Also on the screen of Fig. 11, the display area 41 is provided in the upper part thereof. The function is as described already. Also, a click button 42 for the unit conversion table is provided.

The detail of the selected nozzle model number is displayed as a list 48. The URL of the particular nozzle manufacture is also displayed and the home page of the manufacture is also immediately accessible. As shown in Fig. 12, a pressure-flow rate characteristic table 49 and a pressure-spray angle characteristic table 50 are displayed, and the unit can also be selected. In the case where a different unit is selected, the arithmetic operation is performed for conversion to a numerical value corresponding to the selected unit.

In the lower part of the list 48, the page 51 of the nozzle catalog related to the retrieved nozzle is displayed as a thumbnail image. By clicking the particular portion of the page, the image is enlarged and the catalog image can be viewed in normal size.

In the lower part of the screen, the button 52 described as "attaching mailer start" is arranged. The user desirous of making an inquiry to the mailer" clicks this button 52. As a result, the software of the electronic mail is automatically started. Also, the mail address of the particular manufacture is already input in the address.

As in the preceding case, in the case where it is desired to input the search criteria anew, the "search method" is selected and the button 53 clicked.

### Expert search

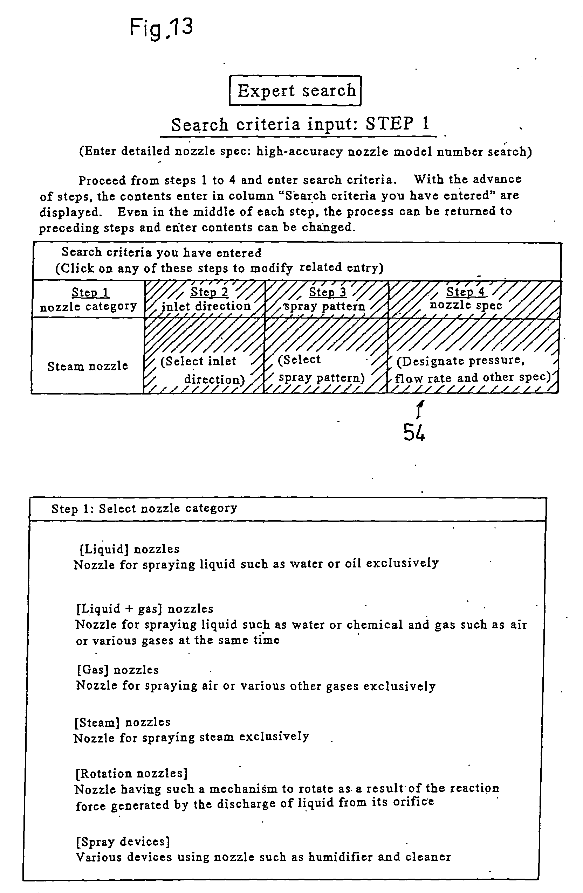

The expert search is a method in which the nozzle model number is narrowed down for search by inputting the detailed search criteria. The pin-point nozzle model number search is also possible. In the expert search, the search criteria can be input in four stages. On the screen shown in Fig. 6, the expert search is selected, and then as shown in Fig. 13, the process proceeds to the step-1 search screen (input form).

Fig. 13 shows the step-1 search screen (input form) for the expert search. This is based on the function of the fourth means. This screen is substantially the same as for the standard search shown in Fig. 7. In the upper part of the screen, a display area 54 for displaying the search criteria already input is arranged. This function is the same as for the standard search. However, the search criteria are input in four stages, and therefore the form of display is different. At step 1, the nozzle category is selected. The method of classification is the same as that for the standard search, and so is the method of selection. Upon complete input at step 1, the process proceeds to step 2.

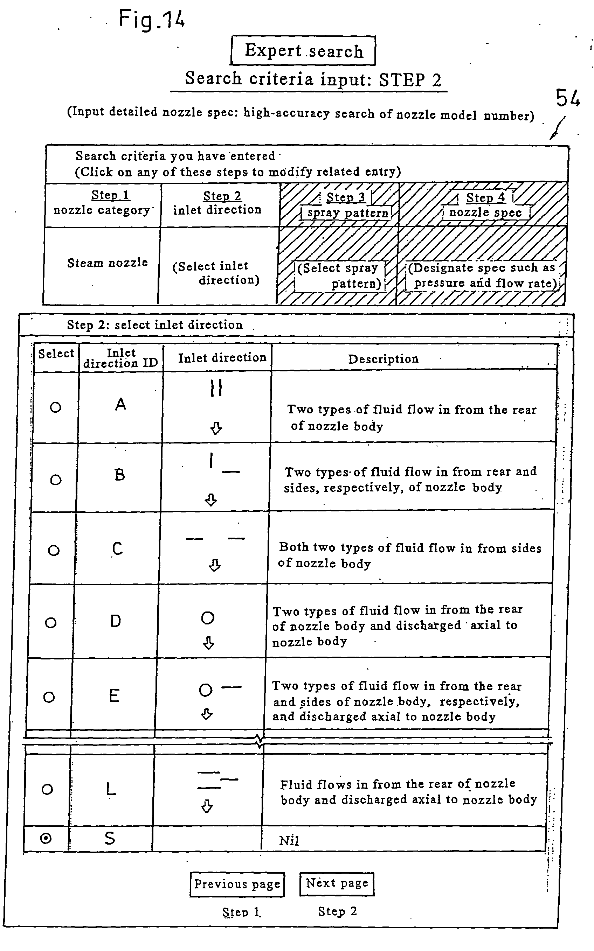

The search screen (input form) of step 2 is shown in Fig. 14. This is based on the function of a fifth means. In the upper part of the screen, the display area 54 is arranged as in the preceding cases. At step 2, the inlet direction in which the fluid flows in is selected. This inlet direction, like the spray pattern, is difficult to express in words and the expression thereof is not unified among the manufactures. Therefore, the inlet direction is also illustrated. As a result, the user can easily input the inlet direction as search criteria. Each inlet direction has an ID. The actual search is conducted with this ID as a key. Upon complete input operation at step 2, the process proceeds to step 3.

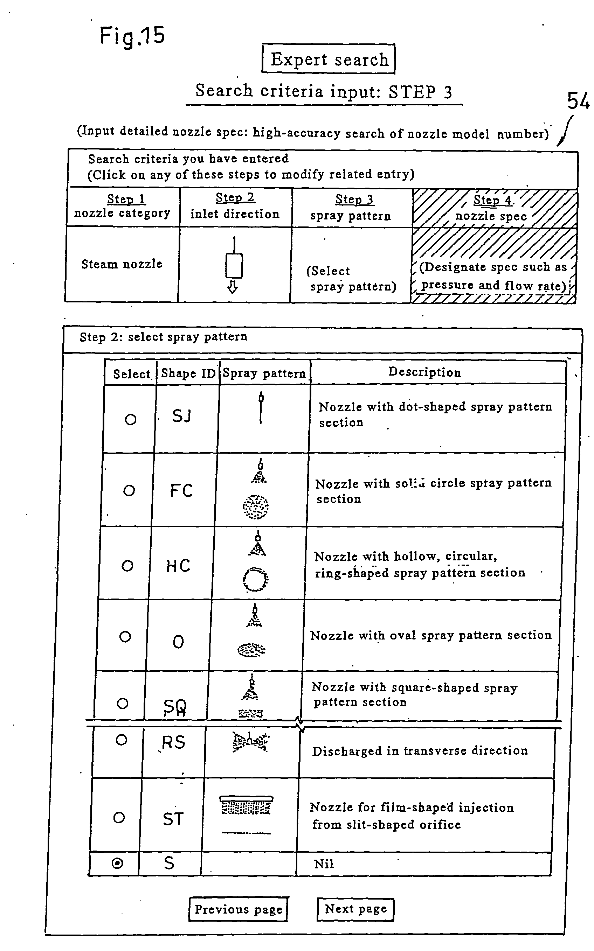

Fig. 15 is a diagram showing a step-3 search screen (input form). This is based on the function of a sixth means. At step 3, the spray pattern is input in the same manner as for the standard search. All the spray patterns are not displayed in this case, but only the spray patterns corresponding to the inlet direction input at step 2 are illustrated. As a result, the input of the contradicting search criteria is prevented and the search can be conducted positively. Upon complete input at step 3, the process proceeds to step 4.

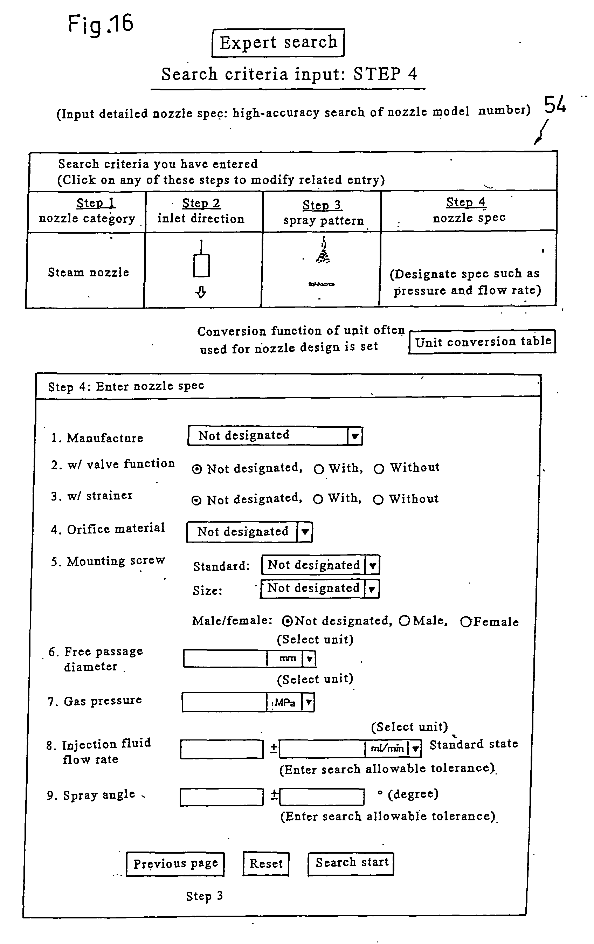

Fig. 16 is a diagram showing a step-4 search screen (input form). This is based on the function of a seventh means. At step 4, the nozzle specification is input. This point is the same as in the case of standard search. In the case of expert search, however, the input form is configured in such a manner that the specification items can be input in considerable detail. Specifically, the items include the nozzle manufacture, the presence or absence of the valve function, the presence or absence of the strainer, the orifice material, the standard, size or male or female of the mounting screws, the free passage diameter, the fluid pressure, the injection fluid flow rate and the spray angle.

The search is possible without inputting the nozzle specification of step 4 at all. In the expert search, steps 1 to 3 constitute essential items. Also, only an arbitrary part of the items of the nozzle specification can be input for search. Incidentally, the form in which the fluid pressure, injection fluid flow rate and the spray angle are input is similar to those for the standard search. Also, as for the free passage diameter, the unit can be selected.

As described above, the search criteria are input for each step, and the search start button is clicked. Then, the search is started. The search criteria already input can also be changed. This point is the same as for the standard search. Upon complete execution of the search process, the search result is displayed in a list, and further can be displayed in detail for a specified nozzle model number. This point is the same as for the standard search, and the display screen is not shown.

### Nozzle specification search

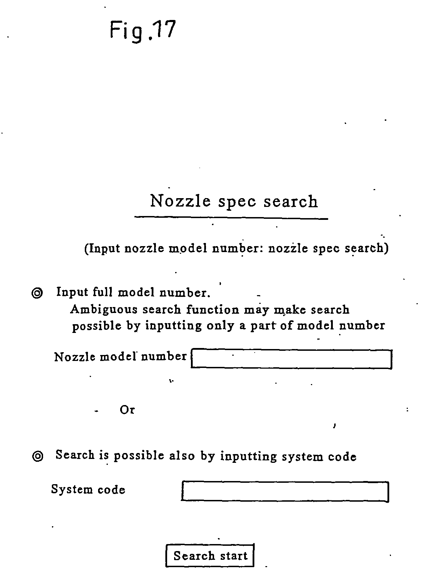

The nozzle specification search is a method in which the nozzle specification is retrieved by inputting the nozzle model number described in the nozzle catalog. Fig. 17 shows a search screen for the nozzle specification search. A full nozzle model number is input in the nozzle model number input column. Also, an ambiguous search function is provided, and in the case where the full nozzle model number is unknown, the search is possible by inputting a part thereof. In this case, however, a plurality of nozzles may be retrieved.

Further, the search is possible by the system code instead of by the nozzle model number. The nozzle model number is attached in a great variety of ways by the nozzle manufactures, and somewhat difficult to handle for the user. In this search system, therefore, a unique system code (ID) is attached to all the nozzles that can be retrieved. These codes can be serial numbers, for example. In place of the nozzle model number attached by the manufacture, this system code can be input for search. Incidentally, the system code is displayed also in the search result list (See Fig. 10).

Upon complete input of the search criteria, the "search start" button in the lower part of the screen is clicked. Then the search is started. The search result display screen and the detailed display screen are similar to those described above and therefore not described or shown again.

### Similar nozzle search

The similar nozzle search is a method to retrieve a nozzle having similar characteristics by inputting the nozzle model number. The user may be desirous of studying the nozzles of other makes having similar characteristics to the nozzle used by him/her. In the case where it is desired to reduce the cost or improve the characteristics of the nozzle now in use, for example, the data to compare the price and performance of other makes having equivalent performance are required as one of the methods that can be employed. In this case, the model number and the specification of the nozzle in use are notified to other nozzle manufactures for investigation, or similar nozzles are searched for manually from the nozzle catalogs of other makes consuming a vast amount of time, which is a bothersome job. The similar nozzle search by the search system according to the invention makes the search of similar nozzles possible positively within a short time.

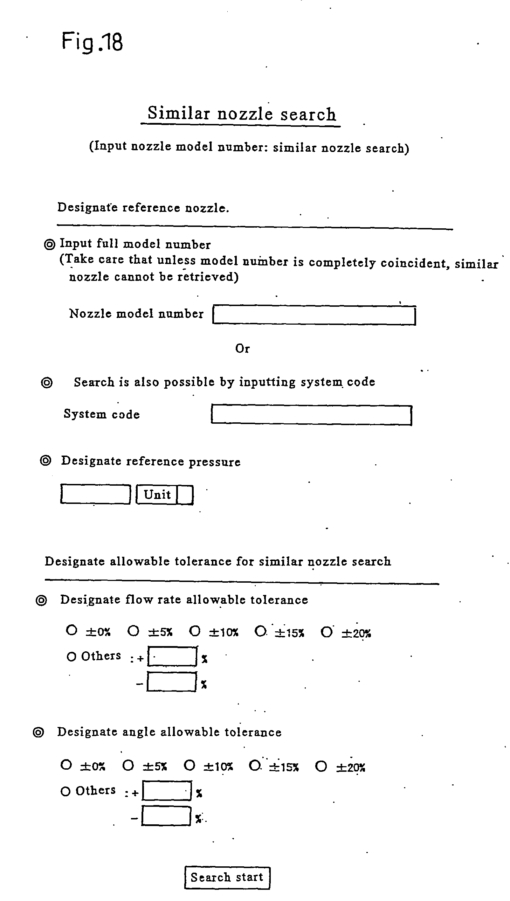

Fig. 18 is a diagram showing a search screen (input form) for similar nozzle search. First, it is necessary to designate a reference nozzle. For this purpose, the nozzle model number or the system code of the reference nozzle is input. A full nozzle model number is required to be input. This is to specify only one reference nozzle.

Next, a reference pressure is designated. The unit of pressure can be selected. The allowable tolerance of the flow rate and the spray angle corresponding to the particular pressure are designated. In the case where the upper and lower limits in positive and negative ranges of allowable tolerance are equal, the allowable tolerance is selected by the radio button. In the case where the upper and lower limit values are not equal to each other, on the other hand, a numerical value is input.

Upon complete input of the required items, the "search start" button in the lower part of the screen is clicked to start the search. The screens for displaying the search result and the detail are similar to those explained above and therefore not shown or described again.

### From standard search to expert search

Next, the process of transferring to the expert search based on the result of the standard search is explained. In the standard search, a multiplicity of nozzles over a wide range may be retrieved. This is convenient in the case where it is desired to make search in a narrower range from the nozzles obtained by the search result. First, the "expert search" button in the lower part of the screen shown in Fig. 10 is clicked.

In transferring to the expert search, the search criteria input for the standard search are taken over by the expert search. Since the nozzle category is already input at step 1, the step-1 search screen shown in Fig. 13 is immediately displayed by clicking the click button described above. In this case, the input search criteria are displayed in the display area 54. Specifically, since the spray pattern of step 3 is also already input, the spray pattern selected in similar manner to the nozzle category is displayed. As for step 4, on the other hand, an item already input, if any, is displayed.

### 2.) Second Embodiment (Similar nozzle search)

The similar nozzle search is explained above with reference to the first embodiment. In the second embodiment, a more preferable similar nozzle search is explained.

From the standpoint of the user desiring a nozzle, a variety of search criteria are considered to exist for nozzle search. One of them may be the information on the nozzles similar in specification, which are made by the manufacture of the same nozzle as the one used by the user or other manufactures. Also, the user having retrieved a nozzle using the data base containing the nozzle catalogs described above may desire to retrieve and study other nozzles having similar specifications to the one already retrieved.

In explaining the configuration of the second embodiment, the description and illustration of the same configuration as the first embodiment are omitted as far as possible, and the explanation is concentrated on the difference.

### Configuration of server system

A control block configuration of the server system 2 according to the second embodiment is explained with reference to Fig. 9.

Among the functions of the web page processing unit 24, the function of the display screen supply means 24a is to provide the web page data to be displayed on the screen of the personal computer of the user. The web page stored in the web page storage unit 23 may be supplied as it is. As an alternative, the web page stored in the web page storage unit 23 can be combined with the nozzle information extracted from the data base 20 to generate a new web page data, which can be transmitted to the personal computer of the user. As another alternative, the various data input from the personal computer of the user may be built in the web page data. Though described in more detail later, the function (the input form supply means 24b) is also provided to supply an input form (which is also a kind of the display screen) to select a reference nozzle in retrieving a similar nozzle or to supply an input form for inputting the similar criteria in retrieving the nozzles similar to the reference nozzle selected. These input forms include the web page data stored in the web page storage unit 23 and the web page data generated based on the data of the reference nozzle retrieved.

The similar criteria processing means 24c, upon receipt of the data of the similar criteria input by the nozzle user, processes them and causes the data base control unit 29 to search the data base 20.

The data base control unit 29 (corresponding to the data base search means), based on the key word information transmitted from the personal computer of the user, searches the data base 20. The result of search is returned to the personal computer of the user in the form of web page by the function of the CGI system 26. The important functions of the invention are to retrieve the reference nozzle and the similar nozzles.

The web page storage unit 23 has stored therein a multiplicity of web page data, of which those specially related to the invention are shown in Fig. 2. In this search system, four search methods are provided. Specifically, they are the standard search, the expert search, the nozzle specification search and the similar nozzle search. The search pages for that purpose are provided. Also, each search page is configured of the web page data to supply various input forms.

### Similar nozzle search

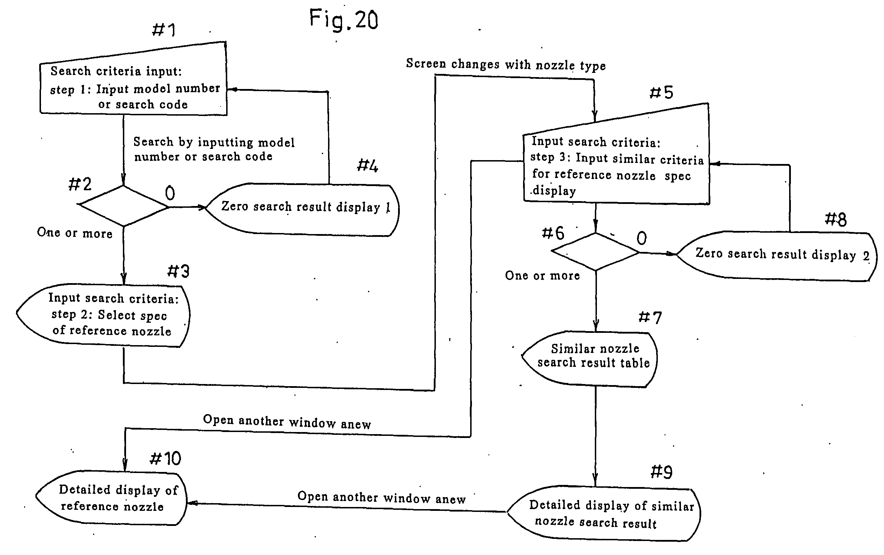

Next, the similar nozzle search is explained. Fig. 20 is a flowchart showing the process followed for similar nozzle search.

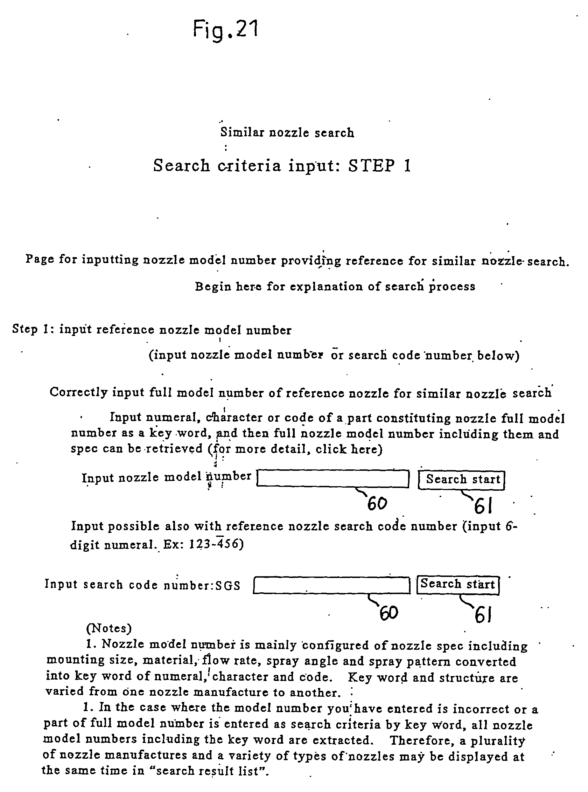

First, the similar nozzle search is selected on the search method select screen (See Fig. 6) described above. Then, the process proceeds to a step-1 search screen shown in Fig. 21. In retrieving similar nozzles, a reference nozzle is required to be designated. Thus, the model number (corresponding to the identification information) of the reference nozzle is input as step 1 (#1). Two methods are available to designate the model number: a method to input the model number and a method to input the system code (expressed as SGS in the drawings). The nozzle model number is the one described in the nozzle catalog of the manufacture. As a nozzle model number, a combination of numerals, characters and signals making up the nozzle model number is input in the input column 60 but not necessarily the full model number information. As long as a part of the model number is input, all the nozzles including the particular part of the model number information are detected. In the case where the full model number is input, on the other hand, only one nozzle is retrieved. Also, the system code is the identification information uniquely assigned in this search system and configured of, for example, 6-digit numerical data. The search based on the system code is possible. The system code is indicated, for example, as a list of the result of the standard search shown in Fig. 10, and the input based on this is possible.

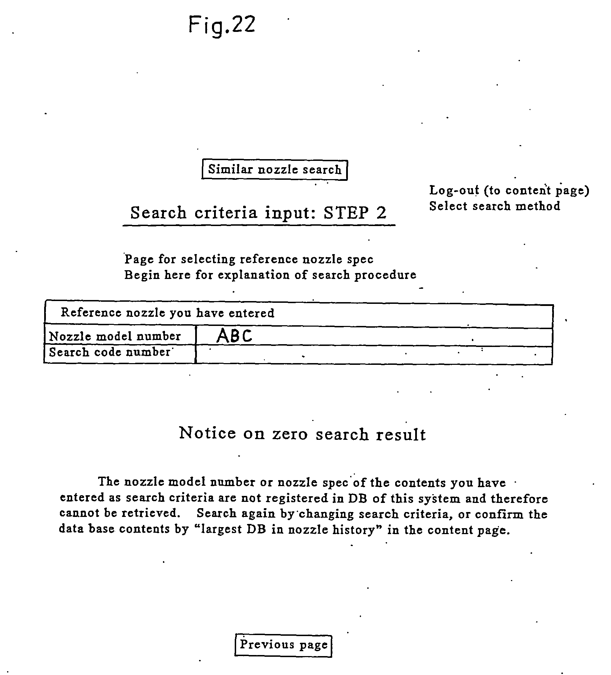

After inputting the identification information of the reference nozzle by any one of the above-mentioned methods, the search start button 61 is clicked. The server system searches the data base 20 based on the nozzle identification information sent thereto. In the case where the result of search shows that the reference nozzle could be retrieved, the process proceeds to the search screen of the step in the next stage. In the case where the search fails, on the other hand, the process proceeds to the display screen indicating the absence of the search result as shown in Fig. 22 (#4). The nozzle of the model number to be retrieved is considered absent in the data base 20 or input erroneously, and therefore the process is returned to the step-1 search screen and the input operation is performed again.

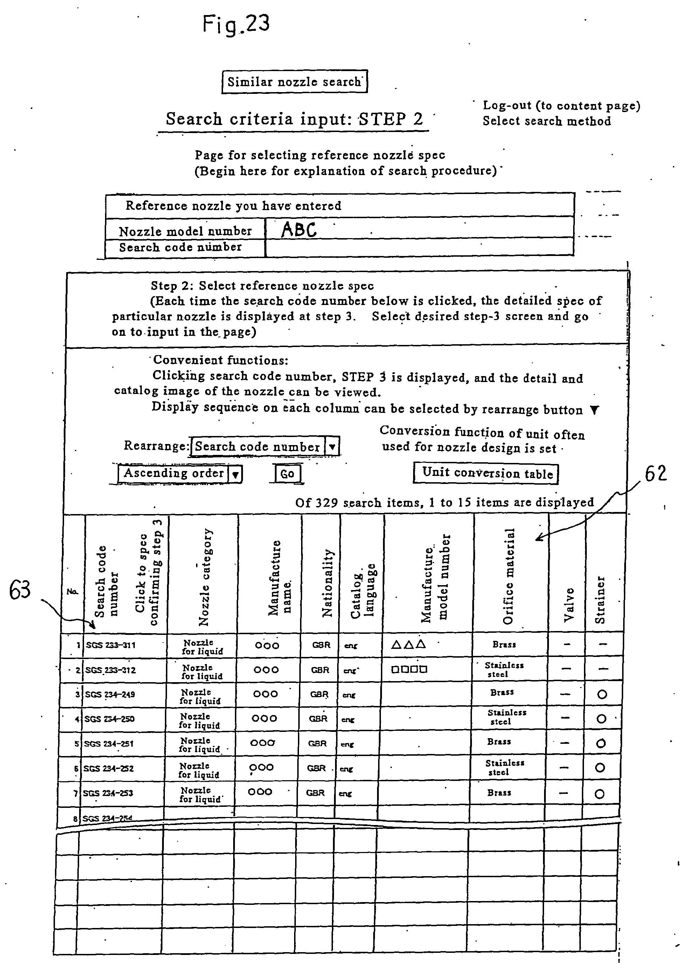

In the case where one or more reference nozzles can be retrieved at step 2, the process proceeds to step #3. The display screen involved is shown in Fig. 23. In this case, the retrieved reference nozzles are displayed in the form of the list 62. The items displayed include, in addition to the system code, the manufacture name, the manufacture model number, the orifice material, the presence or absence of the valve, and the presence or absence of the strainer. In the case where a plurality of reference nozzles are displayed, any one of them is selected and the process can be transferred to the search screen in the next stage. Specifically, the specification of the reference nozzle to retrieve the similar nozzles can be selected. For this purpose, in Fig. 23, any one of the reference nozzles is selected by a method in which the portion 63 of the system code on the screen is clicked.

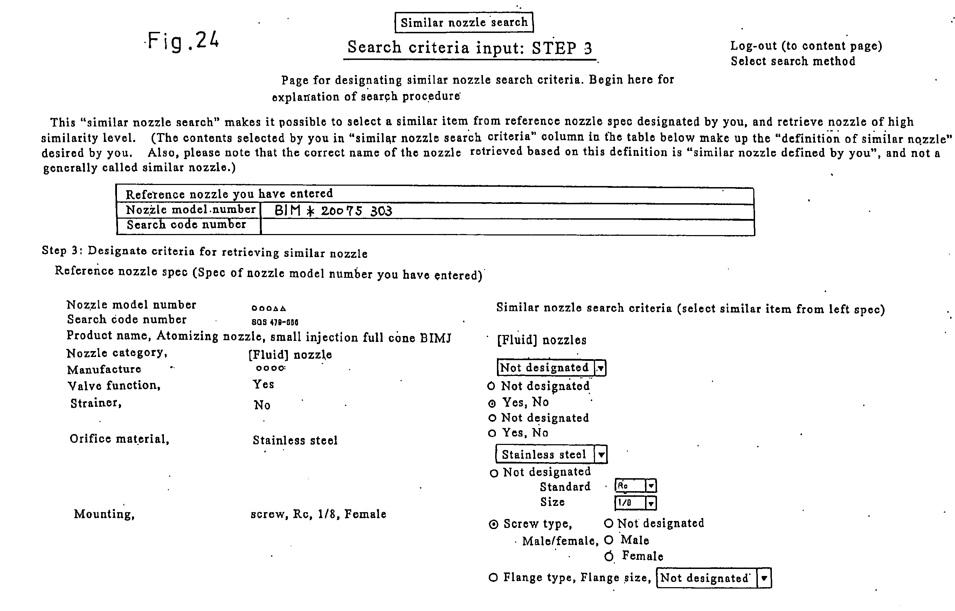

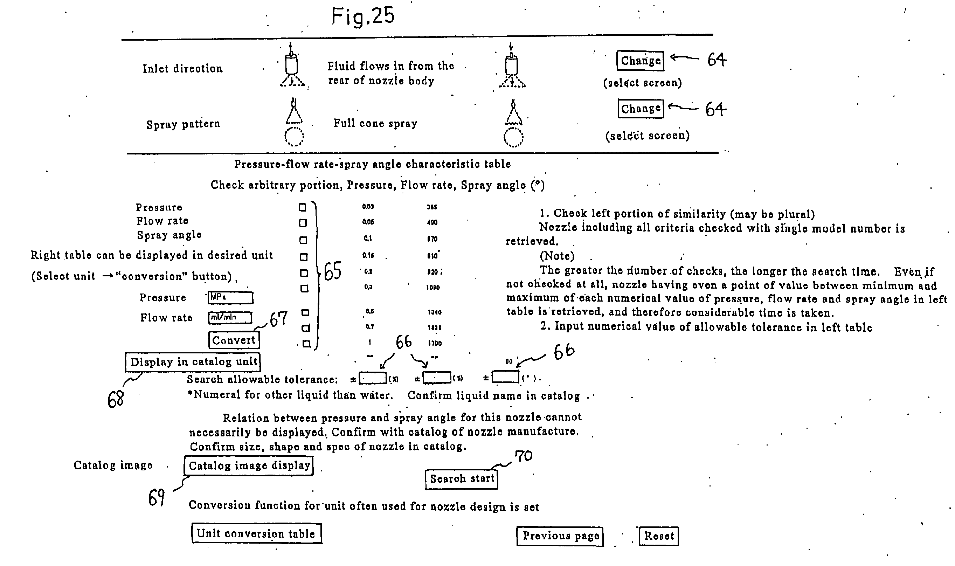

Once one of the reference nozzles is selected, the process proceeds to the step-3 search screen as shown in Figs. 24 and 25. This shows an example of a configuration of the search screen to input the similar criteria for retrieving the similar nozzles. To facilitate the input of similar criteria, the screen is displayed in the form of a table in which the specification of the selected reference nozzle is compared with the specification of the similar nozzle. The similar criteria selectable include the nozzle manufacture, the presence or absence of the valve function and the presence or absence of the strainer. By checking the radio button, the presence or absence can be selected. The nozzle manufacture may not be designated or another nozzle manufacture can be selected. The valve function may not be designated other than the presence or absence thereof. This is also the case with the strainer which may not be designated other than the presence or absence.

With regard to the orifice material, a material different from the reference nozzle may or may not be specifically designated. A specific type of the mounting structure can be selected as shown but may not be designated.

Also, the inlet direction and the spray pattern can be selected as similar criteria, and by clicking the change button 64 displayed on the screen, the select screen is set up as another window. The select screen of the inlet direction and the spray pattern can be configured as shown in Fig. 8 described with reference to the standard search.

Next, the similar criteria of the pressure, flow rate and the spray angle (injection angle) constituting important nozzle characteristics can be selected. Among the characteristics described above, the relation between pressure and flow rate is especially important, and the combination data of the pressure value and the flow rate value is nozzle information carried in almost all nozzle catalogs. In the case shown in Fig. 25, nine (a plurality of) combinations of the pressure value and the flow rate value are available, and only one data exists for the spray angle. Depending on the nozzle model number, a plurality of combination data of the pressure and the spray angle may be available. An arbitrary portion 65 of the nine combinations is checked. No combination may be checked, or one or a plurality of combinations may be checked. Further, the allowable tolerance can be input as similar criteria. A numerical value with plus and minus numerals are input in the input column 66 as an allowable tolerance. By inputting the allowable tolerance, the similar nozzle having the characteristics desired by the user can be positively retrieved. It is also possible to reduce the number of nozzles to be retrieved, by narrowing the allowable tolerance.

As to the units of pressure and flow rate displayed in Fig. 24, the units described in the catalog are set by default. Some users, however, may desire to confirm the characteristics by other than the unit described in the catalog. In view of this, the unit conversion button 67 is provided which can display the pressure and the flow rate in other than the unit described in the catalog. As a result, the user can confirm the characteristic of the similar nozzle by the unit used routinely by the user. In the case where it is desired to restore the unit indicated in the catalog after unit conversion, the button 68 describing "display in catalog unit" is clicked. Also, in the case where it is desired to know the detail of the nozzle characteristics, the catalog image display button 69 is clicked.

In the case of the nozzle shown in Fig. 25, only one spray angle is described in the catalog. In the case where a plurality of combinations of pressure and spray angle are available, however, any one of them can be selected like the combinations of pressure and flow rate.

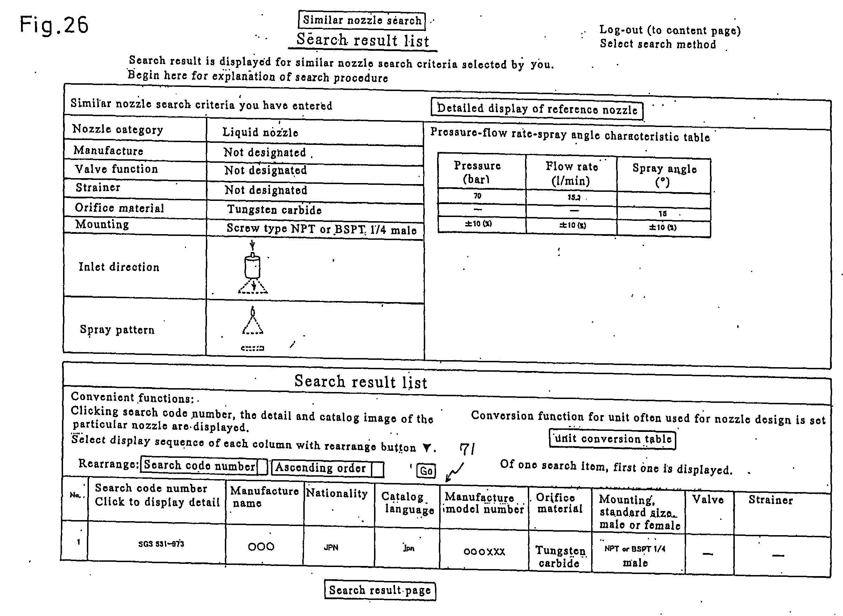

After inputting all the required similar criteria as described above, the search start button 70 is clicked to start the search of similar nozzles. In the case where the similar nozzles are retrieved as the result of search, they are displayed on the screen as shown in Fig. 26 (#6, 7). In the upper part of the screen, the similar criteria of the similar nozzles are displayed. As a result, the user can reconfirm the similar criteria input by him/her. Also, in the case where it is desired to confirm the reference nozzle, the reference nozzle detail display button is clicked. Then, the characteristics of the reference nozzle can be confirmed (#10). In the process, the reference nozzle detail display screen may have the same configuration as shown in Figs. 11 and 12.

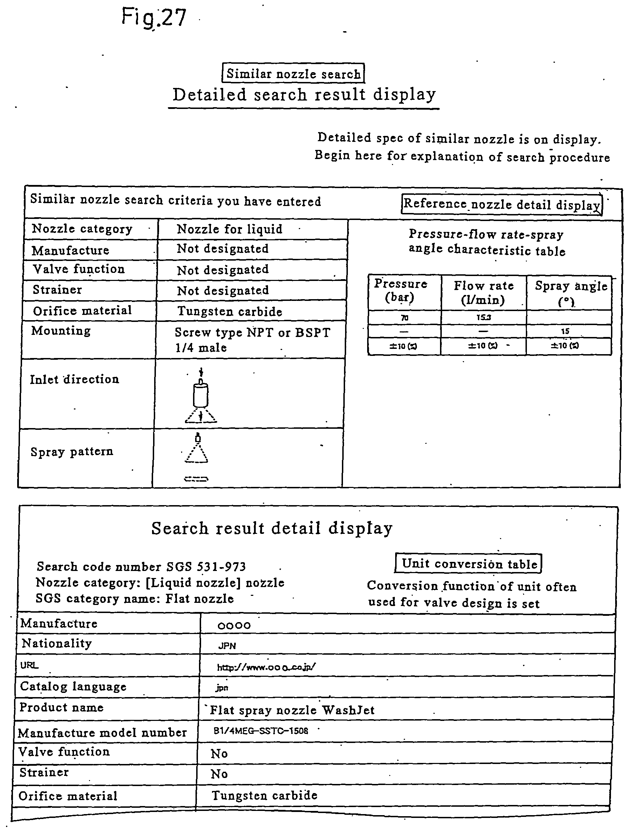

In the lower part of the screen shown in Fig. 26, the similar nozzles retrieved are displayed in a list 71. In the shown case, only one nozzle is retrieved. The "search code No. (System code)" is clicked. Then, the detail of the similar nozzle can be displayed (#9). The display screen at this time is shown in Fig. 27. The upper part of the display screen is similar to the upper part of Fig. 26. In the lower part of the display screen, a specific detailed result is displayed. Since the contents are the same as in Figs. 11 and 12, only a part thereof is shown in Fig. 27.

In the case where no similar nozzle could be retrieved as the result of search (#6), the search failure is displayed on the screen (#8), and the process returns to step #5 to carry out the search again.

### 3.) Third Embodiment (About unit conversion function)

Next, the unit conversion function included in the nozzle information search system according to this invention is explained.

The nozzle catalog carries various characteristic values such as flow rate and pressure. These units, however, are not unified among different manufactures. As units of pressure, for example, MPa, bar, kgf/cm², etc. are used, and different manufactures use different units in their catalogs. The user searching the nozzle information, on the other hand, is required to input the desired characteristic value. In the case where the unit described in the nozzle catalog is required to be input, however, the unit conversion is required to input the characteristic value. Also in the case where the search result is displayed on the display screen with the characteristic values in the unit used by each nozzle manufacture, the unit is varied and the comparison is not easy to make among the manufactures. Also in this case, therefore, the nozzle user is required to unify the unit by unit conversion and evaluate the search result. This requires manual calculation on the portable electronic calculator or the like and therefore very bothersome. Unless the conversion coefficient is known, on the other hand, the unit conversion is impossible. Further, a calculation error may occur.

A means for unit conversion laid open on the web site (such as http://www.espec.co.jp/unitconversion.html) is known. With this means, the unit conversion can be carried out by selecting a specified unit, inputting a numerical value and selecting the desired unit. The unit conversion is calculated by a computer program and therefore no problem of calculation error is posed.

The above-mentioned unit conversion means, however, can be used only on the portable electronic calculator (the calculation itself is accurate) and alleviates the bothersome procedure only to some degree. Even in the case where this is combined with the nozzle information search system, the unit conversion still remains bothersome. This is by reason of the specific fact that the unit conversion is required in both searching the nozzle catalog and displaying for comparative study of the search result. The degree of being bothersome becomes more conspicuous in the case where a multiplicity of model numbers of nozzles is extracted as the result of search. In such a case, each one of them requires unit conversion. Evaluation of the search result, therefore, consumes a vast amount of time.

In view of this, according to this invention, there is provided a nozzle information search system and a search program requiring no bothersome job of unit conversion in searching the nozzle information.

Also in the third embodiment, the explanation is concentrated mainly on the portions and parts different from other embodiments and not yet explained.

### Function block configuration

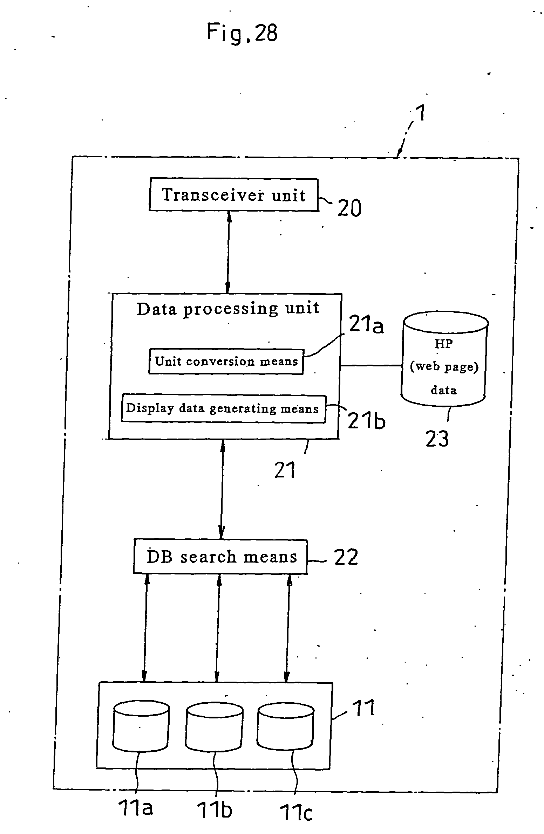

The function blocks of the nozzle information search system 1 according to the third embodiment is explained with reference to Fig. 28. A transceiver unit 20 has the function of transmitting and receiving data. For example, an access request signal is received from the user or the manufacture and the data corresponding to the contents of the access is returned. A data processing unit 21 executes the process based on the data received through the transceiver unit 20. In the case of a request to browse a home page, for example, the data (HTML data) of the home page (web page) corresponding to the URL designated is returned. In the case of a request to search a data base, on the other hand, the data base search means 22 is instructed to search the data base 11 in accordance with the criteria designated. The data base search means 11, based on the instruction from the data processing unit 21, searches the data base 11 designated, and returns the result of search to the data processing unit 21.

The data processing unit 21 executes the various processing operations, of which important functions include the unit conversion means 21a and the display data generating means 21b. The unit conversion means 21 a has the function of converting the designated unit of the characteristic (physical) value based on a unit conversion instruction signal transmitted from the user.

The display data generating means 21b converts the data processing result into the HTML data (corresponding to the display data) and returns it to the user. The user who has received the HTML data from the system 1 can visually recognize the processing result on the computer screen. For example, based on the result of search in the data base search means 22, the display data is generated and returned to the user. The user, taking advantage of the browser function, can view the search result. Also, based on the unit conversion result, the display data is generated and returned to the user.

As explained in the first embodiment, in retrieving the nozzle information, the nozzle specification is input (Figs. 9, 16).

The nozzle specification input includes the manufacture, the presence or absence of the valve function, the presence or absence of the filter, the orifice material and the mounting screws. These may not be designated. Next, the free passage diameter, gas pressure, injection gas flow rate and the spray angle (these correspond to the characteristic values) are input. In inputting the free passage diameter is input, the unit is selected with a numerical value. The gas pressure is also input with a numerical value and a unit. As to the injection gas flow rate, on the other hand, both the central value and the width of the numerical value are input, while at the same time selecting the unit. For spray angle, both the central value and the width value of the numerical value are input. The unit is fixed to "°" (degree) but another unit (rad, etc.) can be selected.

With regard to the free passage diameter, the unit (mm, inch) described in the nozzle catalog is varied from one manufacture to another. Also, a different user routinely uses a different unit. For the convenience of the user making search, therefore, the unit can be selected. The units are displayed in a pull-down menu, from which one is selected.

With regard to the gas pressure, different manufactures use different units including MPa, bar and kgf/cm² in their nozzle catalogs, and therefore a similar select operation can be performed. The units of the injection gas flow rate, on the other hand, include 1/min and GPH and therefore can be selected. The user thus can select an accustomed unit without being conscious of the unit described in the nozzle catalog.

By clicking the search start button, the particular signal is transmitted to the web server. Based on the function of the data base search means 22, the nozzle information data base 11b is searched. In the process, the unit selected by the user may be different from the unit described in the nozzle catalog and registered in the data base 11b. In such a case, the unit conversion is effected by the unit conversion means 21a and the search is carried out with a unified unit. This function eliminates the need of calculation on the part of the user for unit conversion at the time of search, and therefore the search can be carried out efficiently. Upon complete search, the data for displaying the search result is generated by the function of the display data generating means 21 b and returned to the personal computer of the user. In the case where the corresponding nozzle model number cannot be found based on the input search criteria or the number of the extracted nozzle model numbers is excessively great, a search error is displayed. The display data for displaying the search error is stored in the web page storage unit 23 in advance.

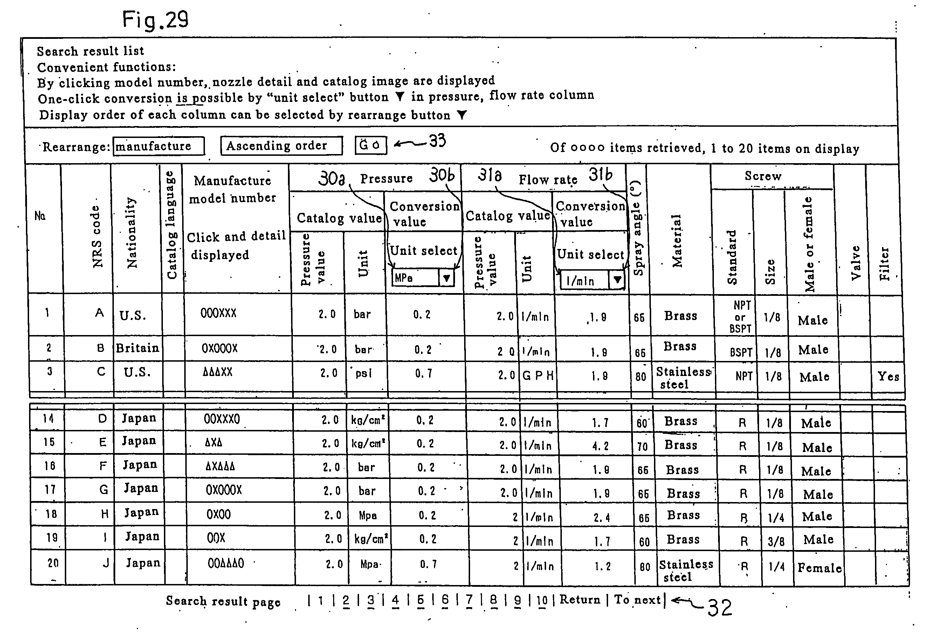

Fig. 29 is a diagram showing a list of the search results (initial screen corresponds to the screen before unit conversion or rearrangement setting, i.e. to the first search result display screen). The list includes the nozzle manufacture names and the nozzle model numbers retrieved, together with the characteristic values of pressure and flow rate. In this list, the display units of pressure and flow rate are the same as those described in the catalog. This is in order to pay respect to the unit described in the catalog, and the nozzle information data base 11b is constructed based on the unit described in the nozzle catalog. Even in the case where the user selects MPa as pressure unit as a search criteria, therefore, bar or kgf/cm², if described in the nozzle catalog, is employed.

In the case where various different units coexist in the list, however, the user cannot easily make comparative determination. To compare numerical values, the units are required to be unified which in turn requires the calculation for conversion. In view of this, the function of selecting the unit is assigned on the search result display screen. Thus, the unit select function is assigned on the search result display screen. As far as pressure and flow rate are concerned, the unit can be selected. For this purpose, a pressure unit selector 30a with a ∇ button 30b and a flow rate selector 31a with a ∇ button 31b are provided. Clicking the ∇ button 30b, selectable pressure units are displayed in a pull-down menu. The user selects one of the units on display. As the result of this select operation, a unit select signal is transmitted to the web server. Based on the function of the unit conversion means 21 a, the units of all the pressure values on display are converted into the selected unit. Next, the display data for displaying a list of the result of unit conversion is generated, returned to the personal computer of the user and displayed on the screen of the personal computer. In the case where the unit MPa is selected, the numerical values in units other than MPa displayed in the list are collectively converted into MPa. As a result, the units for the entire nozzle model numbers displayed on the list are unified to MPa, and therefore the user can easily make comparative determination. This is also the case with the unit of flow rate.

Even after unit conversion, the first search result display screen (the screen displaying the units described in the catalog) can be restored.

As shown in Fig. 29, MPa and 1/min appear on the unit selectors 30a, 31a, respectively, on the first search result display screen. These are units selected on the search criteria input screen (Figs. 9, 16) by the user. The other units not selected by the user are displayed in the pull-down menu as described above. By presenting the selected unit on the screen in this way, the user can confirm the unit selected by him/her. Further, as far as the unit appearing on the screen is selected, the unit conversion can immediately be carried out efficiently.

In the case where the search result involves a multiplicity of nozzle model numbers to be displayed, a list is configured of a plurality of pages. In the case where it is desired to see other pages or pages before or after, an appropriate portion of the page selector 32 is clicked.

In the list of Fig. 29, the nozzle model numbers are arranged by manufacture and can alternatively be arranged by another item. For this purpose, an ascending order setting unit 33 is provided. For example, the pressure and flow rate can be rearranged in the descending order of numerical value. The rearrangement in not ascending but descending order is also possible. The numerical values after unit conversion are rearranged in descending order to facilitate the comparative study.

### Detailed search result information

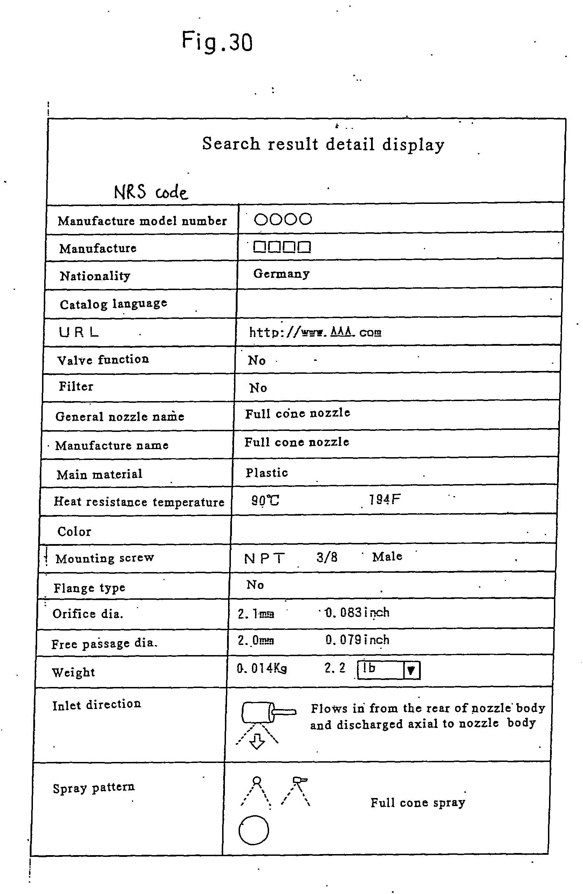

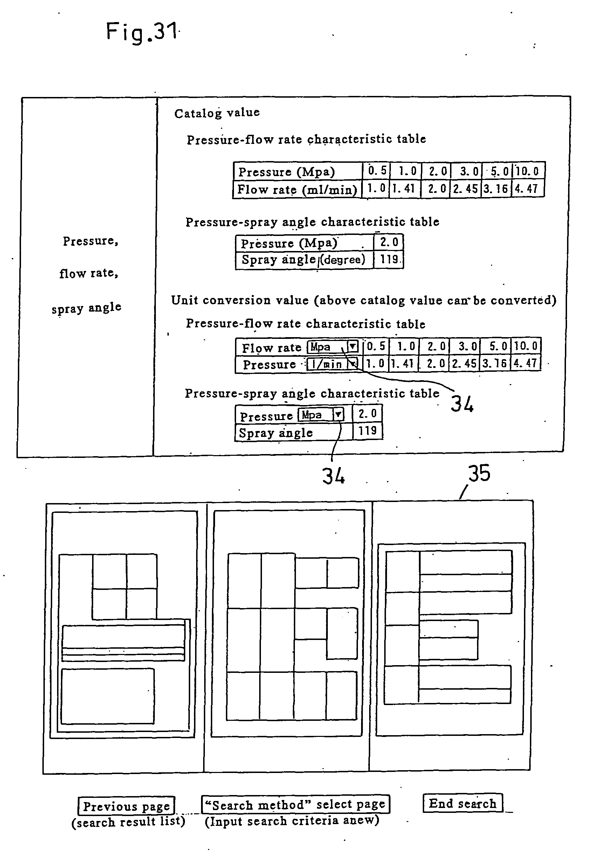

Next, the detailed information is explained. The list shown in Fig. 29 displays only a part of the information including the nozzle model number, the manufacture names and the representative characteristic value. In the case where it is desired to know more detailed information on the nozzles of each model number, the portion where the nozzle model number is displayed is clicked. As a result, as shown in Figs. 30, 31, the detailed information on the selected nozzle can be viewed. Though divided into the two drawings for convenience' sake, the contents of the information of Figs. 30 and 31 are actually displayed on a single screen.

In Fig. 30, the detailed information on the nozzle model number, manufacture name and the nationality, together with the URL of the home page of the particular manufacture. By clicking the URL, the home page of the nozzle manufacture can be accessed.

The heat resistance temperature of the nozzle is described in both °C and °F. Both of them are described for convenience of the user, although only one of them is described in the nozzle catalog. This is also the case with the orifice diameter and the free passage diameter. With regard to the nozzle weight, on the other hand, the unit can be selected from the unit (Kg) described in the catalog and other units. Only two units are used in the catalog for temperature and length, while the weight is described in at least three units, which can be selected by the user.

Fig. 31 is a pressure-flow rate characteristic table and a pressure-spray angle characteristic table described in the catalog. Together with the catalog value, the converted unit value can also be displayed. The process of unit conversion is similar to that shown in the list of Fig. 29. The units (MPa, 1/min) appearing in the unit selector 34 are also those selected by the user on the search criteria input screen.

The detailed information also include the actual catalog image 35 displayed as a thumbnail image. In the case where it is desired to view the catalog image in enlarged form, the thumbnail image of the desired catalog page is clicked. The catalog image is stored in the nozzle information data base 11b.

In leaving the detailed information display screen, the screen of the search result list is restored by clicking the previous page button. A new search can be made by clicking the "search method" select page.

### Unit conversion table

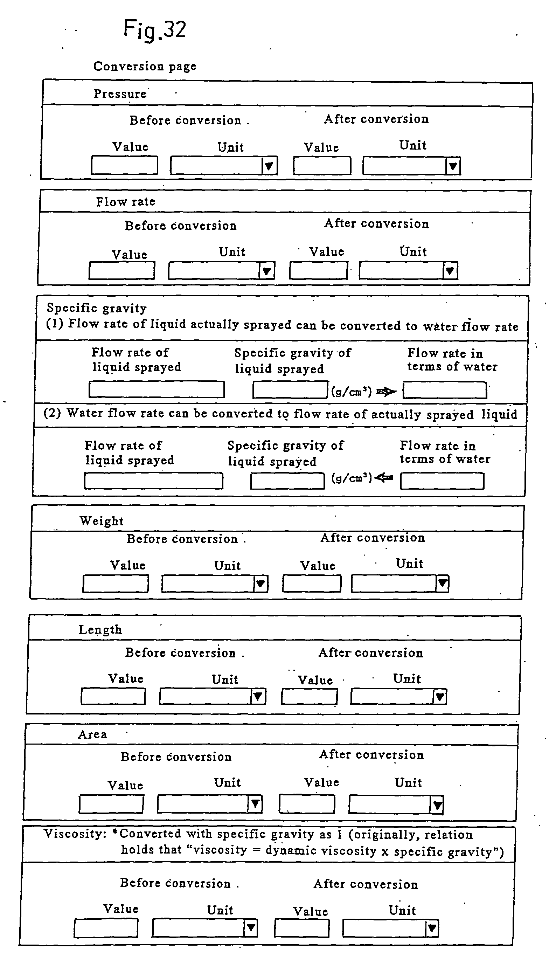

Next, the unit conversion table is explained. In the screens shown in Figs. 9, 16, the unit conversion table button is clicked. Then, the process proceeds to the unit conversion page as shown in Fig. 32. The unit conversion page permits conversion to a unit frequently used for the nozzles. Also, as a conversion unique to the nozzle, the conversion from the liquid flow rate actually sprayed into a water flow rate (or the reverse conversion) is possible.

### 4.) Fourth Embodiment Proper display of spray angle)

Next, a fourth embodiment is explained. A configuration shared by other embodiments is not explained.

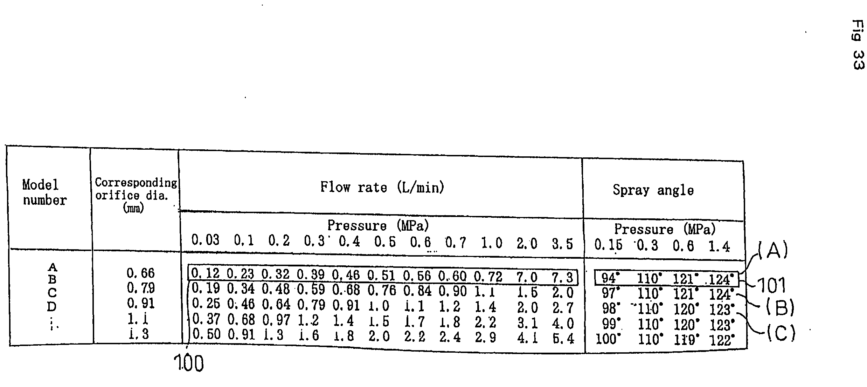

A nozzle catalog data base is constructed based on the data including the pressure, flow rate and the spray angle described in the catalogs of the manufactures. The pressure, flow rate and the spray angle are most important data representing the nozzle characteristics and described in the catalog, for example, in the manner as shown in Fig. 33. This catalog contains the description of the characteristics of the nozzles having the model numbers (A), (B), (C), (D) and so on. With regard to the nozzle of model number (A), the relation between the flow rate (L/min) and the pressure (MPa) is described in the column designated by numeral 100, while the relation between the spray angle (°) and the pressure (MPa) is described in the column designated by numeral 101. Generally, the parameters of pressure in the combination of (relation between) spray angle and pressure are fewer than the parameters of pressure in the combination of (relation between) flow rate and pressure. Also, the pressure for describing the spray angle may assume a different value than the pressure for describing the flow rate. For example, while the pressure values are described as 0.15 MPa, 1.4 MPa in the column 101 of Fig. 33, these pressure values are not employed for describing the flow rate as shown in the column 100. In the case where the nozzle search data base is constructed and nozzle search is made by inputting the pressure, flow rate and the spray angle based on these catalog values, therefore, the following problem is posed.

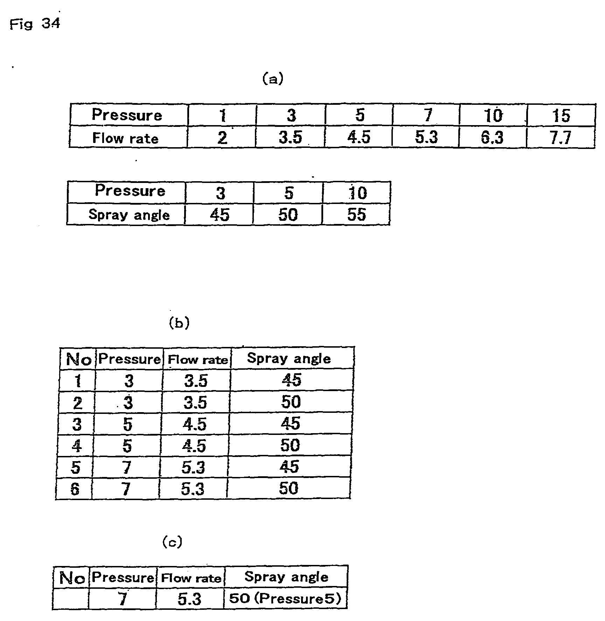

To facilitate the understanding, an explanation is given with reference to Fig. 34. Fig. 34(a) shows an example of the registration based on the values of a given nozzle model number described in the catalog. In the case where the search criteria include the pressure of 5 ± 2, the flow rate of 4.5 ± 1 and the spray angle of 50 ± 5, the specification desired to extract as the search result is one of the two combinations including [pressure 3, flow rate 3.5, spray angle 45 ] and [pressure 5, flow rate 4.5, spray angle 50 ] . Unless a special program is created at the time of search, however, the following problem is posed.

Specifically, as shown in Fig. 34(b), in the case where all combinations of the extracted characteristic values are displayed, nonexistent nozzle specifications other than Nos. 1 and 4 would be inconveniently displayed. In the case where the combinations of the maximum values extracted are displayed (See Fig. 34(c)), on the other hand, a nonexistent nozzle specification would still be displayed, thereby posing the problem. The problem is also encountered that Nos. 1 and 4 actually described in the catalog fail to be displayed. In addition, a method in which a combination of minimum extracted values or a method in which the central value is displayed is conceivable. In any one of these methods, a combination of inaccurate values of pressure, flow rate and the spray angle different from the figures displayed in the catalog is liable to be displayed.

Still another problem is explained. Fig. 35 shows the description of another nozzle model number in the catalog. The spray angle is described for the pressure 3 and 10. In this case, the search criteria [pressure 5 ± 1, flow rate 4.5 ± 1, spray angle 50 ± 5 ] is input to make search. In the case of pressure 5, the flow rate data exists but not the spray angle data. It is therefore impossible to determine whether the search criteria are met or not, and the particular nozzle fails to be retrieved. In this way, regardless of whether the search criteria input by the user are satisfied or not, the search result for this nozzle cannot be obtained for lack of the data on the spray angle. In similar fashion, in Fig. 35, even in the case where the search criteria [pressure 1, flow rate 2, spray angle 50 ± 5 ] and [pressure 15, flow rate 7.7, spray angle 50 ± 5 ] are obtained, the value of the spray angle is not registered in the data base and therefore the search result cannot be extracted even though the criteria desired by the user are satisfied.

Further, as shown in Fig. 36, the spray angle is displayed only for one pressure depending on the nozzle. In another case, only one spray angle is displayed while the pressure value associated with the particular spray angle is not described. In such a case, too, the spray angle cannot be registered, and therefore cannot be extracted by search.

As described above, the data on the combination of pressure and spray angle are considerably smaller than the data on the combination of pressure and flow rate. Even in the case where a data base is constructed based on the catalog values of the nozzle manufactures over the world, therefore, the search is impossible for the range lacking the description of the spray angle. As a result, in spite of the fact that a wide search range exists actually, only a part thereof can be used, thereby failing to sufficiently exhibit the value of the data base. With regard to the portion lacking the description of the spray angle, on the other hand, a proper numerical value may be determined by calculation and used for registration in the data base. In such a case, however, the catalog value of each nozzle manufacture is determined arbitrarily, resulting in the description unexpected by the nozzle manufacture. This is not allowable in commercial transactions from the viewpoint of commodity guarantee.

Accordingly, there is provided according to this invention a nozzle catalog data base and a nozzle information search system reliable for both the user and the manufacture, in which a nozzle can be retrieved even in the pressure range not accompanied by the description of the spray angle in the catalog.

Next, the data registered in the data base 20 (See Fig. 2) is explained. The data base 20 has registered therein all the information on the nozzles described in the catalogs, of which the most important data are the characteristic values of pressure, flow rate and the spray angle. As already described, of these three characteristic values, the data on the combination of pressure and spray angle is considerably smaller in amount than the data on the combination of pressure and flow rate. Even in the absence of the description of the spray angle in the catalog, however, the search range is desirably as wider as possible for the convenience of the user. For this reason, the characteristic values are registered in the data base in such a manner that the combination of pressure, flow rate and spray angle constitutes one unit. In the case where the pressure, flow rate and the spray angle are all described in the catalog, they can be stored in the data base as they are. In the case where the only combination available in the catalog is that of pressure and flow rate, however, an appropriate spray angle corresponding to the pressure is selected from the catalog description and registered as a provisional spray angle. The rule for setting the provisional spray angle is explained below.

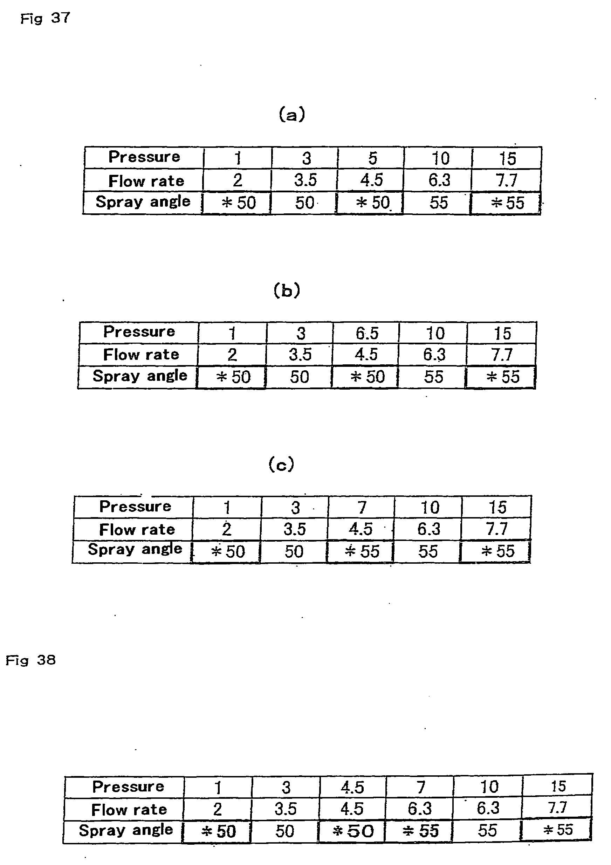

A method of determining the provisional spray angle is explained in the case where, as shown in the example of Fig. 37, the spray angle is described for pressure 3 and 10, while the catalog carries no description of spray angle for the other pressure. First, as to the spray angle corresponding to pressure 5, a spray angle corresponding to pressure 3 or 10 described in the catalog is selected. Pressure 5 is nearer to pressure 3 than pressure 10, and therefore the spray angle 50 corresponding to pressure 3 is selected and, as a provisional spray angle combined with pressure 5, registered in the data base (Fig. 37(a)). Incidentally, the mark "*" in the table indicates the provisional spray angle. Also, suppose that pressure is not 5, but 6.5 as shown in Fig. 37(b). This pressure is just an intermediate value between pressure 3 and pressure 10. In this case, the smaller spray angle 50 (for pressure 3) is employed as a provisional spray angle. The smaller spray angle is employed by reason of the fact that in the case where a plurality of nozzles are arranged, the smaller spray angle is considered to be more safely provided to the user to prevent the lap shortage. As shown in Fig. 37(c), in the case where the pressure without spray angle is 7, the spray angle 55 corresponding to the nearer pressure 10 is employed as a provisional spray angle.

As shown in Fig. 38, in the case where two pressure of 4.5 and 7 without any description of spray angle are available, the provisional spray angle can be registered based on a similar concept to the one described above. Specifically, for pressure 4.5, the spray angle 50 corresponding to pressure 3 is employed, while for pressure 7, the spray angle 55 corresponding to pressure 10 is employed. This similarly applies to the case where there are three or more pressure values available without spray angle.

Returning to the case of Fig. 37, in the absence of the description of a spray angle corresponding to pressure 1 (minimum pressure value), the pressure value nearest to pressure 1 for which the spray angle is described is employed. Specifically, in the shown case, the spray angle 50 corresponding to pressure 3 is employed as a provisional spray angle. Also, in the absence of description of the spray angle corresponding to pressure 15 (maximum pressure value), the spray angle corresponding to the nearest pressure value and described is employed. Specifically, in the shown case, the spray angle 55 corresponding to pressure 10 is employed as a provisional spray angle. The same method can be employed also in the presence of a plurality of pressure values without any description of spray angle for maximum or minimum pressure value.

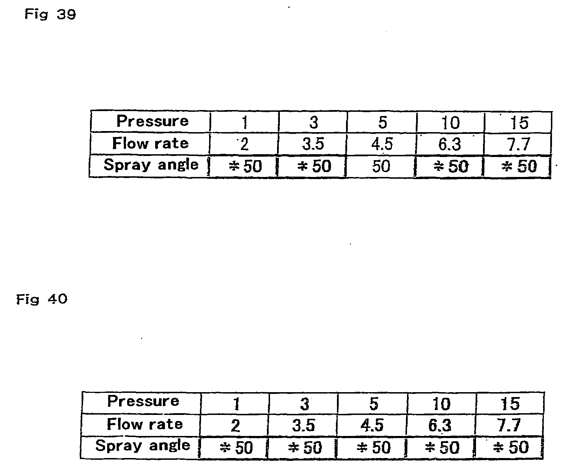

Next, as shown in Fig. 39, in the case where the spray angle is described only for one pressure value, the value of the spray angle is registered as a provisional spray angle for all the pressure without description of the spray angle as shown in Fig. 39. Specifically, all the values of spray angle assume 50. In other cases, in spite of the description of the spray angle in the catalog, the description of a corresponding pressure value is lacking. Also in such a case, as shown in Fig. 40, the particular spray angle is registered as a provisional spray angle corresponding to all the pressure values. In this way, with regard to the nozzle of the model number having only one spray angle described, the particular spray angle is registered as a provisional spray angle. By doing so, the pressure, flow rate and spray angle can be registered as a combination unit. Thus, for all the nozzles, the data can be registered with the pressure, flow rate and spray angle as a combination unit. In the case of the nozzle having the model number shown in Fig. 37(a), five combination units including [1, 2, 50], [3, 3.5, 50 ] , [5, 4.5, 50 ] , [10, 6.3, 55 ] and [15, 7.7, 55 ] are registered in the data base. As described above, the search is possible even in the case where the pressure range lacking the description of the spray angle in the catalog is designated as search criteria. Also, the data registered as a provisional spray angle is registered in the data base together with the identification data indicating a provisional spray angle (not the value described in the catalog). This is to expressly indicate to the user that the provisional spray angle is involved in the case where the search result is displayed. Incidentally, three identification data are prepared and registered in distinguishable manner.

First, the first identification data, as described above, is the data for identifying the registered spray angle as a provisional spray angle (not the value described in the catalog).

Some nozzle catalogs may describe the characteristic value in terms of the spray distance and the spray width instead of the spray angle. In such a case, for the convenience of search, the spray angle is determined by calculation from the spray distance and the spray width, and the spray angle thus determined is registered as a provisional spray angle together with the second identification data in the data base.

Also, for some nozzle types or some nozzle manufactures, the flow rate or the spray angle of a fluid other than water sprayed is described. In such a case, the flow rate or the spray angle is registered together with the third identification data in the data base.

### Two-fluid nozzle

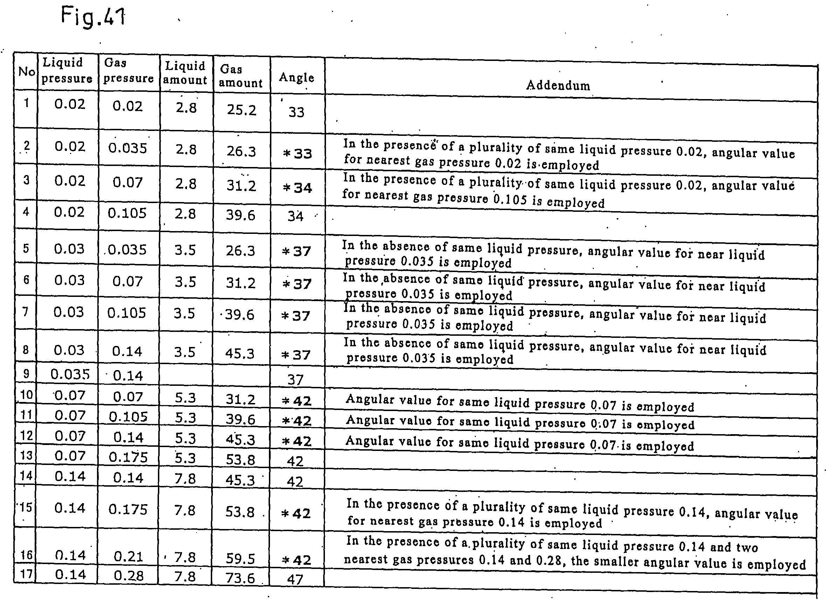

The rule for determining the provisional spray angle is described above for the single-fluid nozzle. A two-fluid nozzle is also available which uses two types of fluid including a gas and a liquid. The liquid pressure has a larger effect on the change of the spray angle. In determining the provisional spray angle, therefore, the liquid pressure is considered in top priority and the gas pressure in the second priority. This is specifically explained with reference to Fig. 41. Fig. 7 shows the characteristics of the two-fluid nozzle of a given nozzle model number. In Fig. 41, the mark "*" indicates a provisional spray angle.

For spray angle No. 2, the liquid pressure is 0.02. The liquid pressure is 0.02 for columns Nos. 1 to 4. For Nos. 1 and 4, the spray angle is described in the catalog. Next, take note of the gas pressure. The gas pressure No. 2 is 0.035. Also, the gas pressure No. 1 is 0.02, and the gas pressure No. 4 is 0.105. The numerical value nearer to 0.035 of the gas pressure No. 2 is 0.02 for No. 1. Thus, the spray angle 33 of No. 1 is employed as a provisional spray angle of No. 2. Next, the provisional spray angle for No. 3 is determined by the same method, and the spray angle 34 for No. 4 is employed. Incidentally, in the case where the gas pressure No. 2 is just an intermediate value between No. 1 and No. 4, the smaller spray angle is registered as a provisional spray angle.

Next, the manner in which the provisional spray angle for No. 5 is determined is explained. The liquid pressure for No. 5 is 0.03. The liquid pressure is 0.03 in the columns Nos. 5 to 8. The spray angle for the liquid pressure 0.03 is not described in the catalog. Thus, the liquid pressure near to 0.03 with the spray angle described is looked for. There are two such liquid pressure, Nos. 4 and 9. The liquid pressure No. 4 is 0.02, and the liquid pressure No. 9 is 0.035. The numerical value near to the liquid pressure 0.03 is the liquid pressure 0.035 for No. 9. Thus, the spray angle 37 for No. 9 is employed and registered as a provisional spray angle for Nos. 5 to 8. In the case where the liquid pressure for No. 5 assumes just an intermediate value between Nos. 4 and 9, the smaller spray angle is registered as a provisional spray angle.

Next, the manner in which the provisional spray angle for Nos. 10 to 12 is determined is explained. The liquid pressure for No. 10 is 0.07. The spray angle for the liquid pressure 0.07 is described in the column of No. 13 and the spray angle is 42. Thus, the provisional spray angle for Nos. 10 to 12 is determined as 42.

The manner in which the provisional spray angle for Nos. 15 and 16 is determined may be the same as for Nos. 2 and 3. In the case of the two-fluid nozzle, the liquid pressure, gas pressure, liquid amount (flow rate), gas amount (flow rate) and the spray angle are registered as one combination unit in the data base.

### Standard search

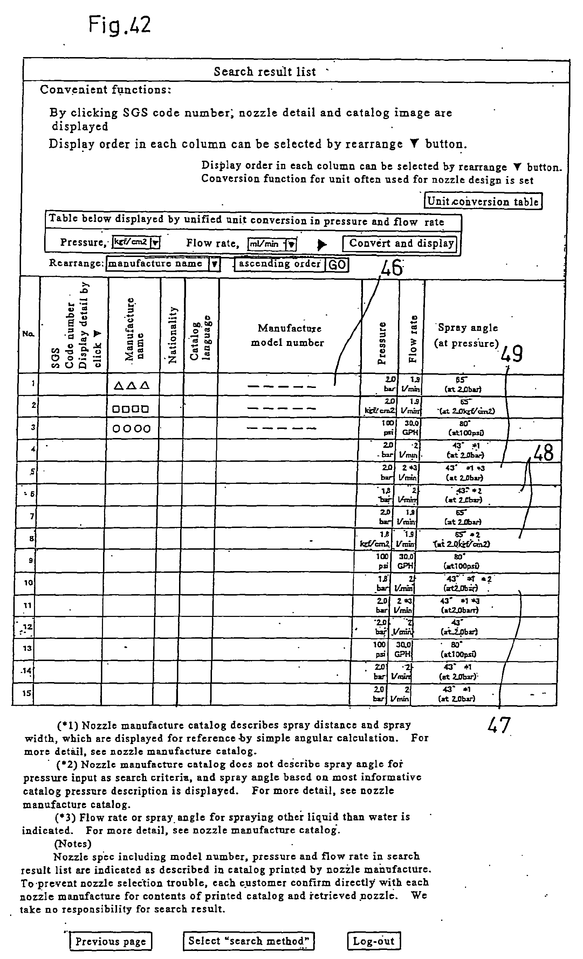

Fig. 42 shows a configuration of the screen for displaying a list of search result for standard search. Though not shown, the display area for displaying the search criteria is provided similarly. The functions are the same.

The items included in the list are the SGS code, manufacture, nationality, catalog language, manufacture model number, pressure value, flow rate value, spray angle, material, screw standard, size and female or male, valve and the strainer (only a part of which is shown by way of illustration). In this way, the search result can be extracted as a nozzle model number (manufacture model number). In the case where a multiplicity of search sessions is involved, a list is prepared over a plurality of pages. The user, viewing this search result and desirous of inputting new search criteria, clicks the button described as "search method" selection in the lower part of the screen. In this case, the input numerical values are cleared. Also, in the case where it is desired to narrow the search result further, the expert search can be resorted to.

In the lower part of the screen, there are notes designated by "*1 ", "*2" and "*3". The mark "*1" indicates that the spray distance and the spray width are described in the catalog but the spray angle in the search result list. This is shown in the column designated by numeral 47. The numerical value 43° (at 2.0 bar) described here is not actually described in the catalog. The user, by checking the note in the column, can recognize that the description is different from the catalog. The user desirous of confirming the contents of the actual catalog can so confirm by the detailed display described later. As already explained, the spray angle displayed here is the provisional spray angle and registered in the data base together with the second identification data. Based on this second identification data, "*1" can be displayed.

The pressure, flow rate and the spray angle shown in the list are the data registered as a combination unit. For nozzle No. 1, for example, the combination unit is [2.0, 1.9, 65]. As shown in Fig. 37(a), a plurality of combinations of pressure, flow rate and spray angle are usually available for one nozzle. Nevertheless, only one of the combinations is displayed as the search result. Of a plurality of the combinations, a particular one to be displayed as a search result is determined appropriately. A combination containing the search criteria near to the central value of the input pressure range (5, if 5 ± 1 is input, for example) is an example.

The mark "*2" is a note indicating that a combination of pressure and spray angle not described in the catalog is displayed. For example, this is indicated in the column designated by numeral 48. In the case of nozzle No. 6, for example, the pressure is 1.8 bar, the flow rate 2 1/min and the spray angle 43°. This spray angle 43° is a provisional spray angle and not the figure for the pressure of 1.8 bar. Thus, note 2 is displayed together with the actual pressure value corresponding to the particular spray angle. Specifically, the degree 43° (at /2.0 bar) is displayed while at the same time indicating to the user that this not the numerical value for the pressure of 1.8 bar. In the case where the spray angle is a provisional one, the pressure value displayed corresponds to the spray angle. For nozzle No. 1, for example, the pressure is indicated as 2.0 bar and the spray angle as 65° (at 2.0 bar), thereby indicating the same pressure value. Note "*2" can be displayed based on the first identification data.

The mark "*3" is a note indicating the fact, if any, that the flow rate and the spray angle for spraying the liquid other than water are described in the catalog. The user searching for the nozzle is considered to assume the use of water as a fluid. In the case where a fluid other than water is described in the catalog, therefore, the fact is displayed so that the user may not select the nozzle erroneously. The note "*3" is indicated in the column designated by numeral 49. This note "*3" can be displayed based on the third identification data.

Not one note but a plurality of notes may be displayed at the same time for a single nozzle. Two notes "*1" and "*3", for example, are displayed in the column designated by numeral 49.

In the case where it is desired to know a nozzle of a specified model number in detail of all the nozzles of the companies displayed in the list, the frame of the manufacture model number in the list (the portion designated by numeral 46, for example) is clicked. As a result, the screen for displaying the detailed search result shown in Figs. 11, 12 appears.

### Expert search

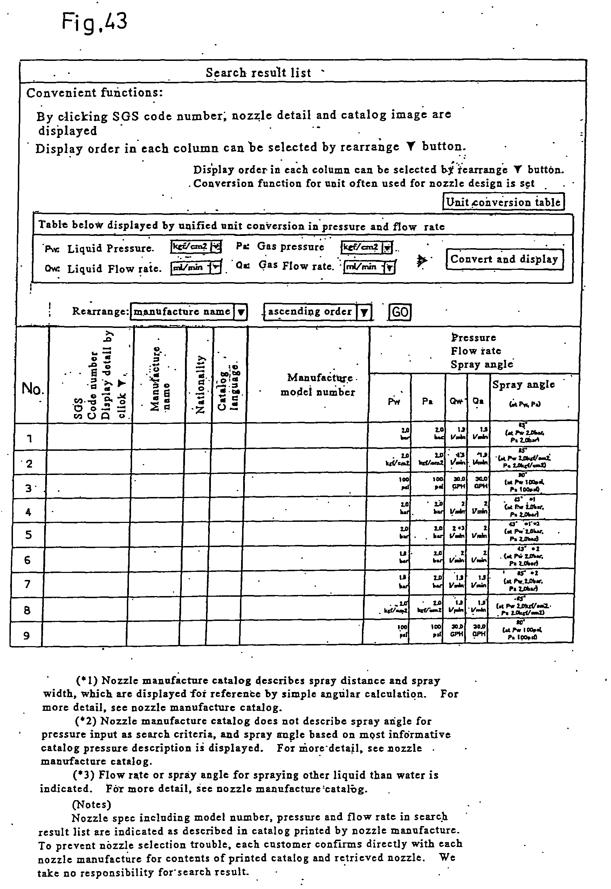

Fig. 43 shows a part of the display screen for expert search, and basically the same as Fig. 42 explained above (the items of the list are also shown partly). Since the search result for the two-fluid nozzle is displayed, however, the pressure, flow rate and the spray angle are displayed in a different form. Specifically, the liquid pressure (Pw), the gas pressure (Pa), the fluid flow rate (Qw), the gas flow rate (Qa) and the spray angle are displayed. The notes *1, *2 and *3 are displayed in the same manner as described above.

### 5.) Fifth Embodiment (Electronic mail transmission means with file attaching function)

In the case where the nozzle user retrieves the nozzle information using the nozzle information search system, a multiplicity of nozzle model numbers are displayed in a list (See Fig. 10, etc.) as the result of search. Also, the search system is so constructed that the catalog information and the catalog image registered in the data base can be viewed for a specified nozzle included in the list. Of all the nozzles thus retrieved, the user may be desirous of making an inquiry to a specified manufacture about the nozzle of the manufacture.

The inquiry may be made to the manufacture using the electronic mail. In transmitting the electronic mail, the information can be probably exchanged smoothly between the user and the manufacture by transmitting also the page showing the nozzle search result at the same time as electronic mail.

In the case where the page describing the search result is transmitted to the manufacture, the following problem is posed. The page (web page) is constituted mainly of the text information and the image information, while only the HTML file is attached and transmitted to the user. The image information is not transmitted as an image file attached to the mail, but when the mail is received and opened, the image file is downloaded by accessing the server. After downloading, a page incorporating the image is displayed on the computer screen of the user. The HTML file contains the description of URL associated with the image information incorporated, and by accessing the server corresponding to the URL, the image file is downloaded.

In order for the user to receive the service using the nozzle information search system, however, the membership registration is required, and the user having not registered the membership cannot freely access the system. Even in the case where the user having registered the membership transmits the electronic mail with the web page to the manufacture, therefore, the image information cannot be downloaded unless the receiving party has not yet registered his/her membership. As a result, the party receiving the electronic mail is forced to view a web page lacking an image and very difficult to see.

In view of this, a nozzle information search system is constructed so that in the case where the page displaying the search result is transmitted in the form attached to the electronic mail, the party receiving the mail can positively see the required information.

### Configuration of server system

Next, the control block configuration of the server system 2 according to a fifth embodiment is explained with reference to Fig. 2. A transceiver unit 22 transmits a web page (home page) data (HTML data) or an electronic mail in response to an access request from the personal computers of the user, a consultant company, etc. (hereinafter sometimes collectively referred to as an external personal computer). Also, the data and the electronic mail input by the external personal computer are received. This transceiver unit 22 can be configured of a program (OS, etc.) installed in the computer making up the server system 2 and a communication interface.

The web page storage unit 23 has held therein the web page data in the form of HTML file. The web page processing unit 24, in response to an access request from the external personal computer, causes the web page data stored in the web page storage unit 23 to be transmitted through the transceiver unit 22. Also, the processing result by the CGI program and the search result of the data base 20 are processed into the form of the web page (generating the HTML data) and transmitted to the external personal computer.

The electronic mail processing unit 25 processes the electronic mail transmitted from the external personal computer and analyzes the data written in the electronic mail. Based on the analysis result, the CGI program is started. Also, the electronic mail to be transmitted to the external personal computer is automatically prepared. The CGI system 26 is a function of causing the server to access and execute the external program (CGI program). A multiplicity of CGI programs making up the nucleus of the CGI system 26 is stored.

The data base control unit 29, based on the key word information transmitted from the personal computer of the user, searches the data base 20. The search result is returned to the personal computer of the user in the form of web page by the function of the CGI system 26.

The web page storage unit 23 has stored therein a multiplicity of web page data. This is the same as in Fig. 2, and therefore not described in detail.

Next, the function of the electronic mail processing unit 25 related to this invention is explained. The electronic mail starting means 25a starts the electronic mail software 19. The address setting means 25b sets the mail address constituting the destination of the electronic mail. The first attaching means 25c (corresponding to the page attaching means) has the function of attaching the thumbnail image of the nozzle catalog and the nozzle information to the electronic mail. The second attaching means 25d has the function of attaching the user information to the electronic mail.

### Description of functions of electronic mail starting means

On the search result detail display screen of Fig. 12 explained above, a button 52 described as "attaching mailer start" is arranged in the lower part of the screen. The user desirous of making an inquiry to the manufacture clicks this button 52. Then, the electronic mail software is automatically started. The mail address of the manufacture is already input to the destination address. This point is described in detail below.

The functions of the electronic mail starting means according to the invention are explained by describing the comparative examples sequentially.

### Comparative Example 1

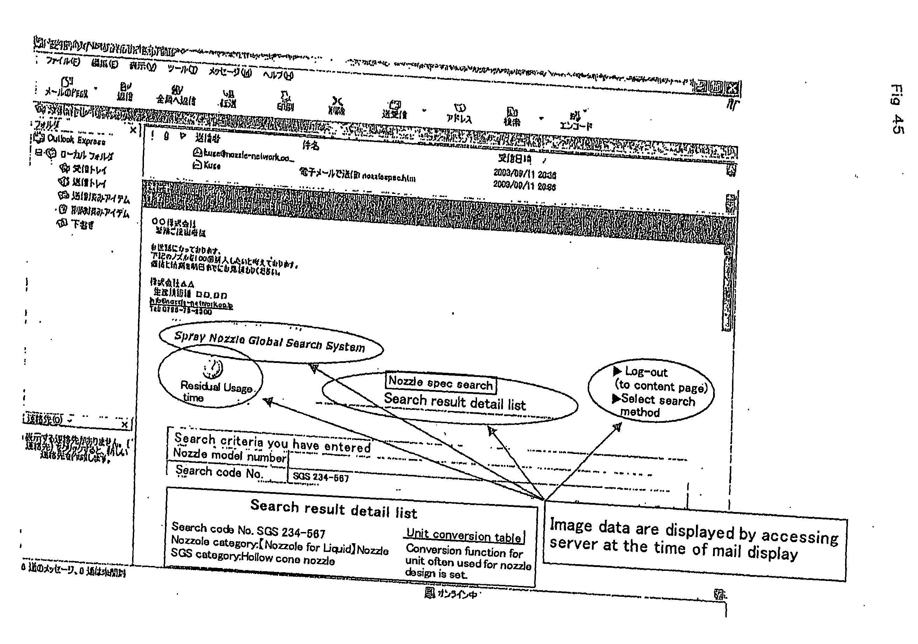

The web page on display (the page of the search result detail screen shown in Figs. 11, 12) is transmitted generally by a method using the "page transmission" function arranged in the browser (Internet Explorer™). In the case where the web page is configured of a HTML file and image information, only the HTML file is transmitted by electronic mail. The image information (image file) is not attached to the electronic mail. Instead, when the HTML file received at the receiving end is opened, the image file is downloaded and displayed in the form incorporating the image information (See Fig. 45). Specifically, the HTML file does not contain the image information itself, but only the description of the URL on the network carrying the image file corresponding to the particular image information. By accessing the URL assigned to each image information, therefore, the image files are downloaded sequentially.

In the case where the electronic mail to which the HTML file is attached as described above is transmitted to the nozzle manufacture or the like, the server system is accessed. In this system which requires the membership registration and authentication, however, the image file cannot be downloaded even in the case where the server system is accessed. The data can be browsed only by the user of the search system who has registered his/her membership, and therefore the party other than the member or even a member who has not paid the usage fee cannot access the data. Even in the case where the HTML file is received, the web page of which the image is invisible would be displayed inconveniently.

Nevertheless, a configuration which can be accessed by every one, on the other hand, would pose the security problem such as data theft.

### Comparative Example 2

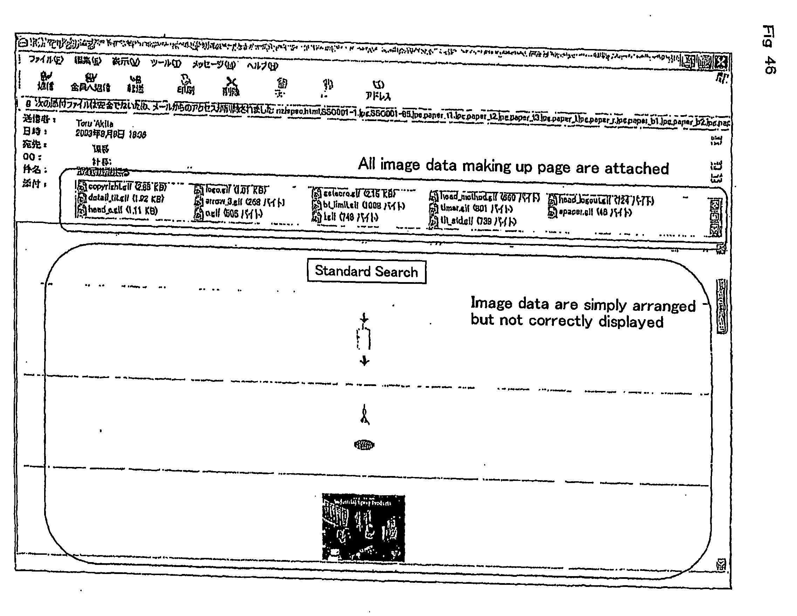

As a second comparative example, a method may be conceived in which all the image files are also attached to eliminate the need of access to the server system. Fig. 46 is a diagram showing the receiving screen in the case where the receiving party uses Outlook Express™ (hereinafter referred to as the first software). As understood from this diagram, all the image information making up the web page are simply arranged and displayed and form a screen very difficult to see.

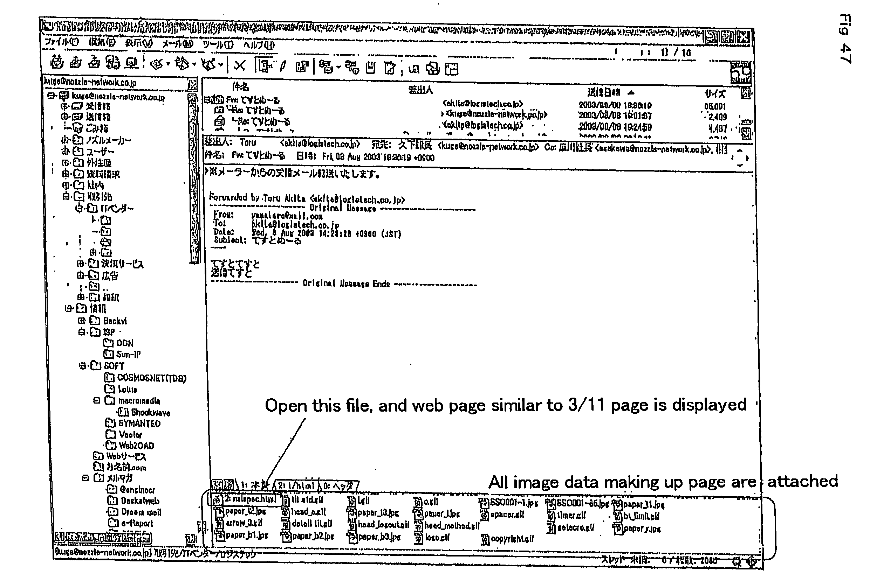

Fig. 47 is a diagram showing the receiving screen in the case where the receiving party uses Becky! (hereinafter referred to as the second software). Also in this case, all the image files making up the page are attached and therefore the receiving party is embarrassed.

### Comparative Example 3

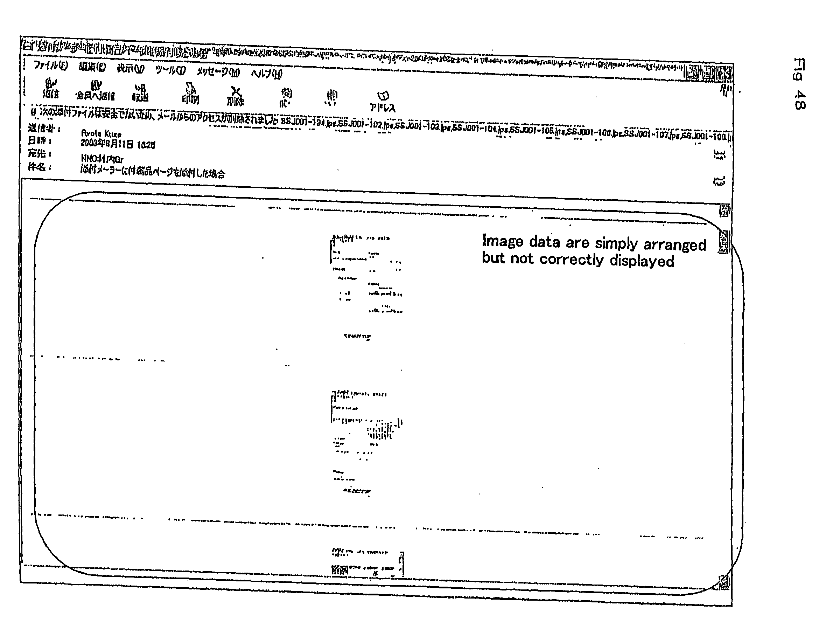

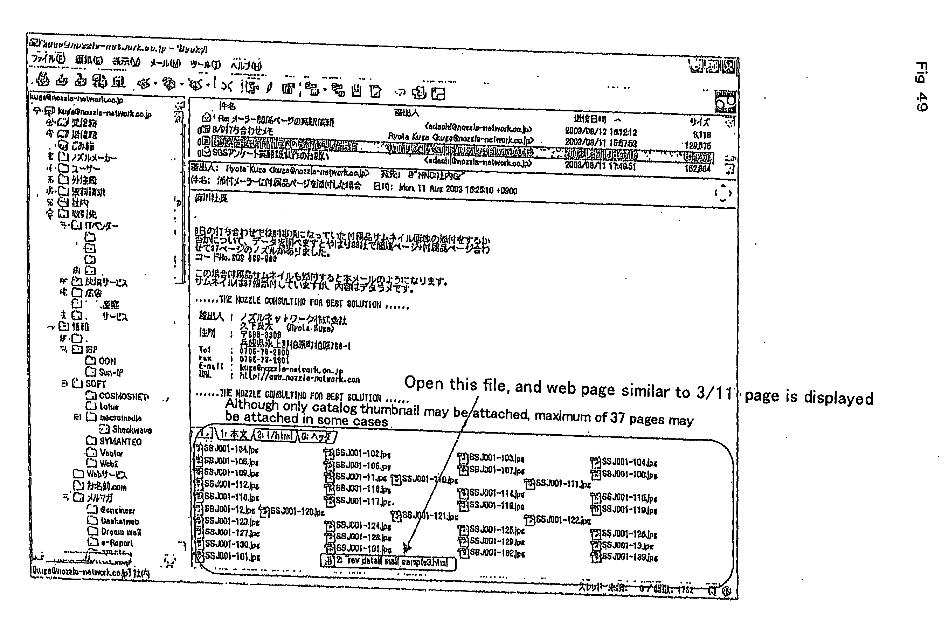

Next, a third comparative example is explained. Specifically, according to this method, the image files not required are not attached but only the thumbnail image of the catalog is attached for transmission. In this case, the receiving image received by the receiving party with the first software is shown in Fig. 48. This is simple arrangement of images and very difficult to see. On the other hand, the receiving screen 49 received with the second software is shown in Fig. 49, which is also very difficult to see. Also, it is bothersome to confirm by opening the image files one by one.

### Method according to the invention

Next, the method according to the invention is explained. This invention is so configured that the party receiving the electronic mail can display the web page as shown in Figs. 11, 12 without accessing the server system using an exclusive software. Specifically, the whole web page shown in Figs. 11, 12 is not transmitted, but only the required information is transmitted. Specifically, only the nozzle information and the thumbnail image of the nozzle catalog are transmitted. The data making up the web page is basically transmitted in the HTML file, and the thumbnail image is transmitted with the image file at the same time. The image file of the thumbnail image transmitted is linked to the HTML file. Since the thumbnail image is transmitted at the same time, the HTML file is linked so that the server system is not required to be accessed even in the case where the HTML file is received. Thus, the web page can be viewed in normal state even in the case where the party receiving the electronic mail has not registered his/her membership.

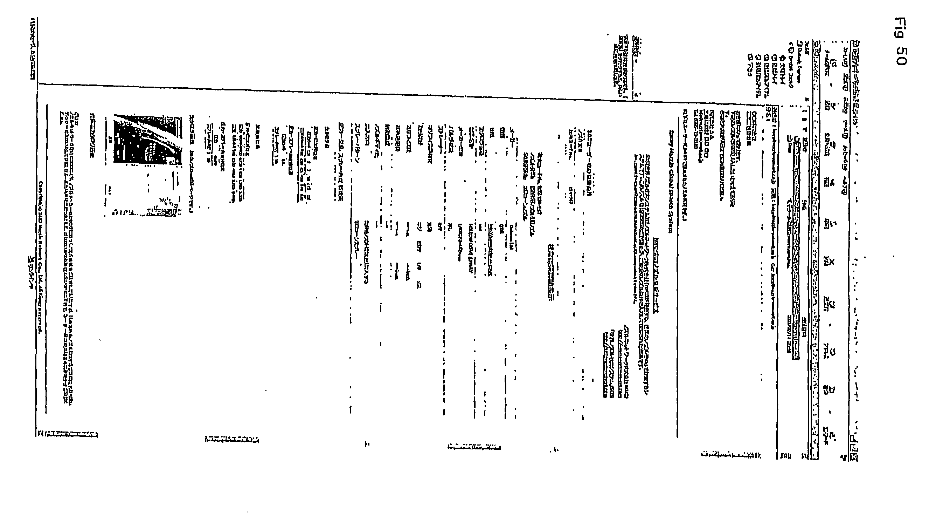

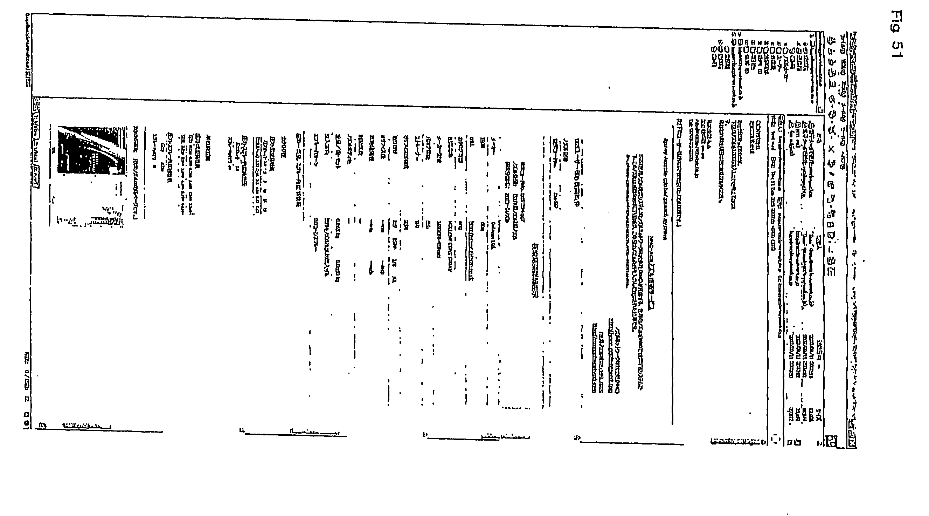

Fig. 50 shows a receiving image representing a state received by the first software. Fig. 51 shows a receiving image by the second software. As understood from these drawings, the page is configured so that the party receiving the electronic mail can easily see the image. Also, with regard to the image file, only the thumbnail image is attached, and the other unnecessary images are deleted. In Fig. 11, for example, the illustrated image of the spray pattern in the input search criteria and the image of various click buttons in the lower part of the screen of Fig. 12 are not required and deleted.

Also, the unnecessary text data other than the nozzle information are deleted into a slim structure. For example, the text data of "standard search" and the text data of "the search criteria you have entered" in Fig. 11 are not required and therefore not included in the HTML data transmitted. As described above, the required data are selected and the unnecessary data are deleted.

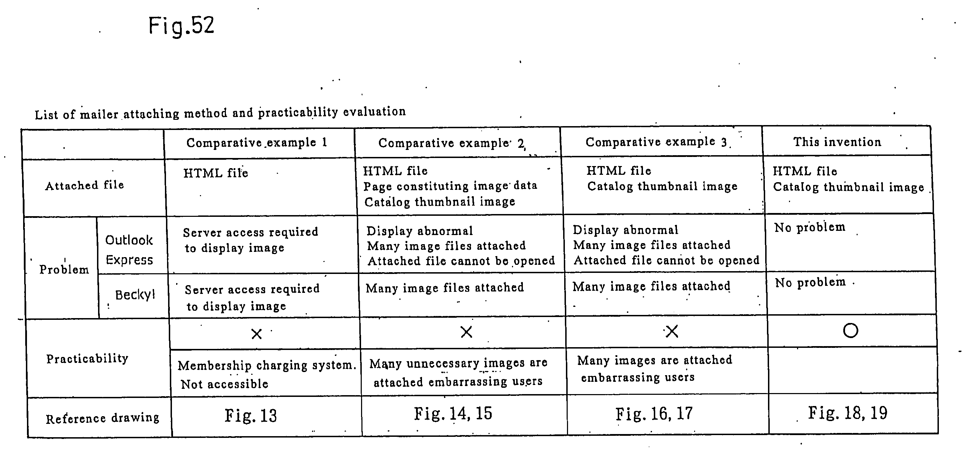

The evaluation of the file attaching method for the mail according to the comparative examples 1 to 3 and this invention described above is collectively shown in a table in Fig. 52. The superiority of the method according to the invention can be confirmed also from this table.

### Measure against garbage character problem

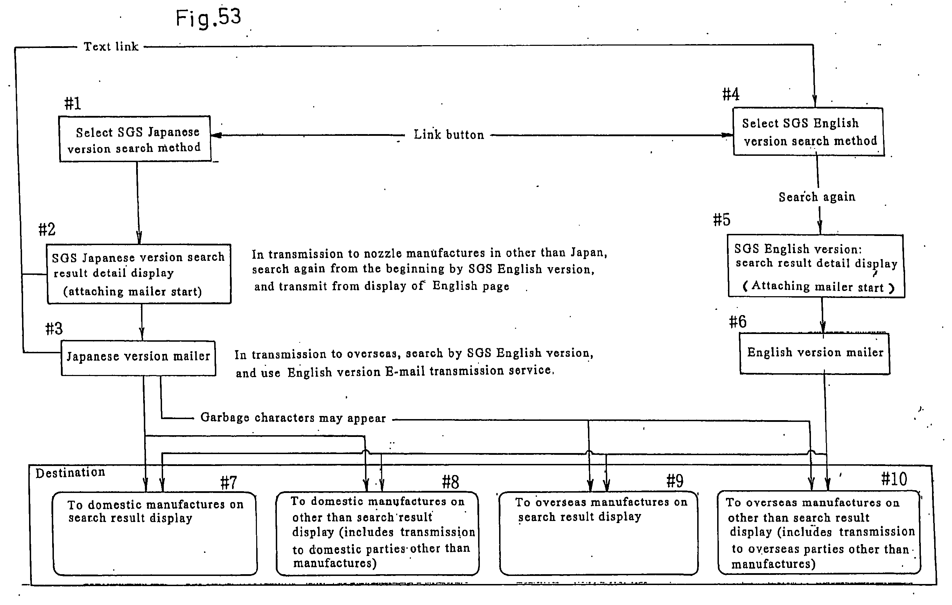

Next, the garbage character problem is explained. Each page of this nozzle information search system basically has a Japanese version and an English version. In the case where the web page is attached to the electronic mail, either the web page of the Japanese version or the page of the English version can be transmitted. In the case where the web page of the Japanese version is transmitted by mail to other than the countries speaking Japanese, however, garbage characters are generated unless the personal computer of the receiving party can recognize Japanese. Thus, a protective measure against garbage characters is necessary. The process for taking this measure is explained with reference to the flowchart of Fig. 53.

First, assume that the user has selected a search method based on Japanese page (#1). As the result of search, the search result detail screen in Japanese is displayed as shown in Figs. 11, 12 (#2). On this page, the attaching mailer start button is clicked as shown in Fig. 12, and the electronic mail software is started. Nevertheless, a nozzle manufacture attempting to transmit the electronic mail may be a foreign company not in Japan. Therefore, a message to restart the search in English version is described as a note in the search result detail screen. Specifically, the process can be transferred to the search method select screen in English version by text link (#4). As a result, the search is repeated with the English version. Incidentally, the process can be transferred to the screen of step #4 by text link also from the screen of step #1.

As the result of search in English version, the search result detail screen of English version is displayed. From this, the electronic mail software of English version can be started (#6). The transmitted web page is also in English version. Incidentally, English, unlike Japanese, can be recognized with higher probability by the personal computer of any country, and the transmission of the web page in English version is considered free of problem.

Incidentally, it is desirable to issue a message prompting to repeat the search in English version even after starting the electronic mail in Japanese version at step #2 (#3). In the case where the page of Japanese version is transmitted to a domestic manufacture (#7, 8), the garbage character problem is not posed. In the case of transmission to overseas manufactures other than Japanese manufactures, however, the garbage characters may be generated (#9, 10).

The transmission of the page in English version is considered free of the garbage character problem regardless of whether the destination is a Japanese manufacture or an overseas manufacture. By issuing this message to call attention (by describing it beforehand), the user can transmit the web page in an appropriate form.

### 6.) Sixth Embodiment (Nozzle information search system based on multi-language site)

As already explained, the nozzle information search system is configured of a multiplicity of web pages. This page group is generally held in the server in the form of HTML file. The page group is configured of the top page of the search system, the page for membership registration, the page for explaining the search method and the page for actual search.

The text in the page group is described based on the mother language of the company managing and administering the nozzle information search system. For example, a page group is prepared based on Japanese (first language). Also, both nozzle manufactures and nozzle users are existent in various countries of the world. As long as the page group constructing the nozzle information search system is prepared only in Japanese, therefore, the users other than Japanese find it hard to use the search system. In view of this, the page group of the same contents as that in Japanese is desirably prepared in English (second language). The provision of the web pages of both Japanese and English versions in this way has already been attempted many times in the field of internet.

A multiplicity of nozzle users are existent in other than Japanese-speaking countries and English-speaking countries, and therefore the nozzle information search system with the Japanese and English versions alone are not sufficiently convenient.

With the increase in the number of pages (sites) making up the page group, on the other hand, preparation of all the pages for a multiplicity of languages leads to a vast amount of page production cost while at the same time exceeding the capacity limit of the hard disk arranged in the server.

In view of this, the nozzle information system is constructed in such a manner as to improve the convenience of the nozzle users over the whole world while at the same time considerably reducing the page production cost.

### <Server system configuration>

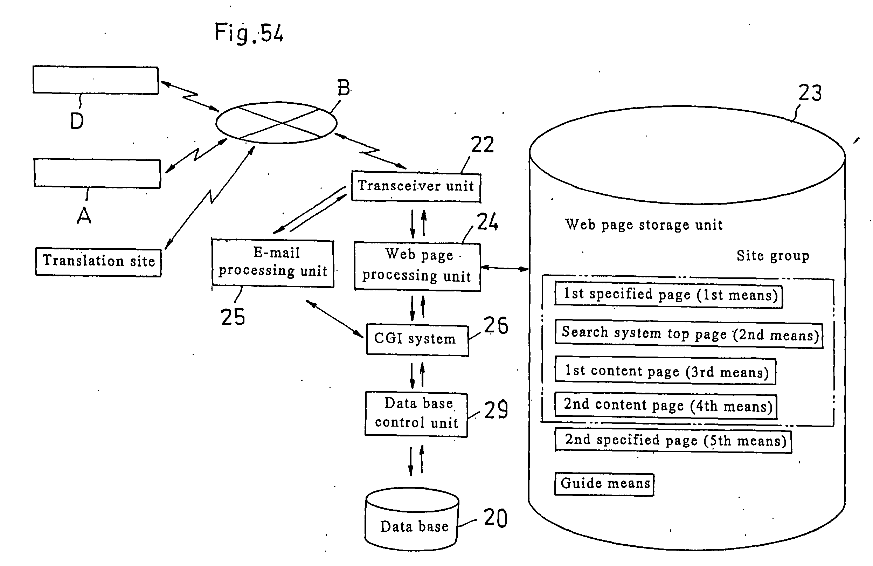

Next, the control block configuration of the server system 2 according to a sixth embodiment is explained with reference to Fig. 54. The portions already explained are not explained again.

The web page storage unit 23 holds the web page data in the form of HTML file. The web page processing unit 24, in response to an access request from the external personal computer, causes the web page data stored in the web page storage unit 23 to be transmitted through the transceiver unit 22. Also, the processing result by the CGI program and the search result of the data base 20 are processed into the form of the web page (by generating HTML data) and transmitted to the external personal computer.

The page group held in the web page storage unit 23 has a multiplicity pages. In Fig. 2, however, only the pages related to the invention are shown. Specifically, they are a specified page (first means), a search system top page (second means), a first content page (third means), a second content page (fourth means), and a second specified page (fifth means). Each page incorporates a mechanism to function as a guide means.

### Quick guide

In the nozzle information search system according to this invention, the whole page group is prepared in both Japanese and English to meet the requirements of the users all over the world. A method is also conceivable in which the whole page group is prepared in a third language other than Japanese and English. As explained in Figs. 3 to 5, however, the number of pages for the whole sites is vast to such an extent that in the case where all these pages are prepared in a third language, therefore, the page production cost also becomes vast. This trend becomes especially conspicuous with the increase in the number of third languages. Further, the storage capacity of the server system has its limit. For this reason, the page of the quick guide (corresponding to the specified page) is provided also in a third language other than Japanese and English. The quick guide is a page to explain the summary of the search system. Since the page of the quick guide cannot be placed at the top page, however, a system (guide means) is required to guide positively from the top page to the quick guide.

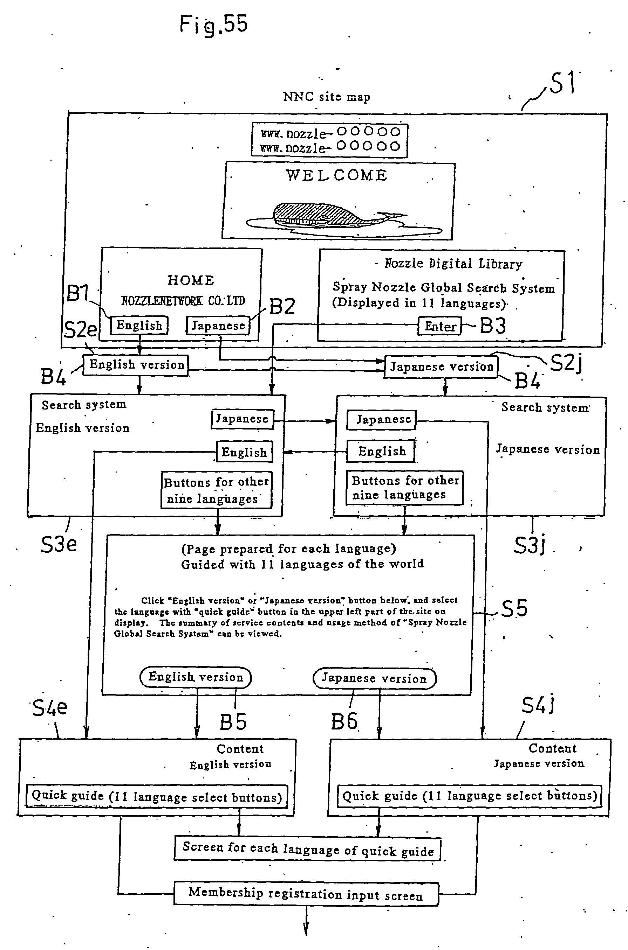

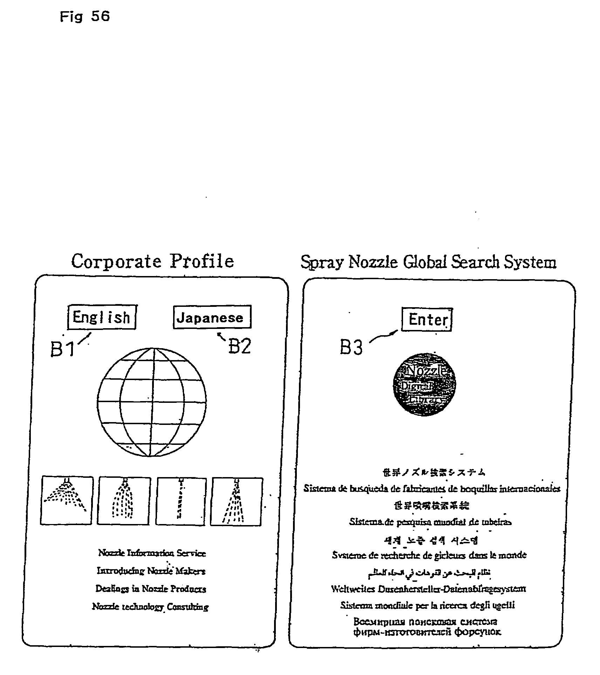

Fig. 55 is a diagram for explaining the site map (specific configuration of the guide means) for the essential parts. S1 designates a page at the very top. An example of a configuration of the display screen of this page is shown in Fig. 56. On this top page, the button B1 is clicked, and then the process proceeds to the home page S2e of a consultant company in English version. When the button B2 is clicked, on the other hand, the process proceeds to the home page S2j of a consultant company in Japanese version. Also, in the case where the button B3 displayed in the frame of the nozzle search system (nozzle digital library), on the other hand, the process proceeds to the top page of the search system in English version. The title "Spray nozzle global search system" is described in 11 languages including Japanese, English, Chinese, German, etc. This indicates the presence of pages described in 11 languages.

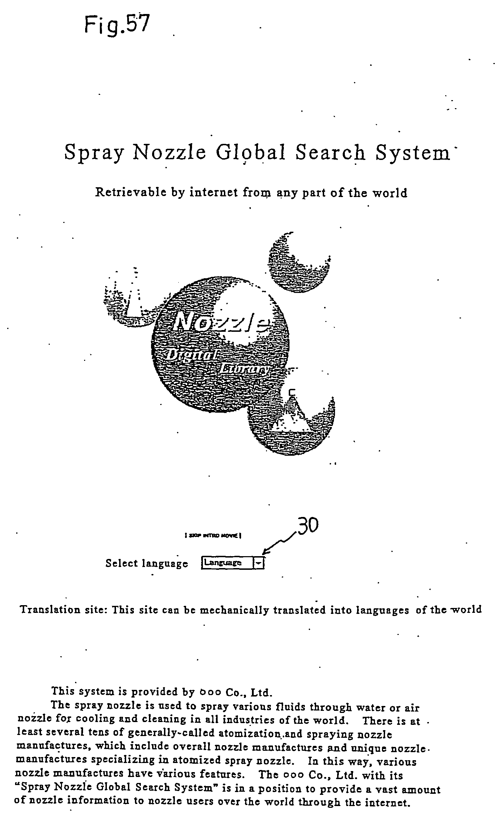

The home page S2e of English version is further linked to the top page S3e of the search system in English version. Also, the home page S2j of Japanese version is linked to the top page S3j of the search system of Japanese version. An example of a display configuration of the top page S3j of the search system of Japanese version is shown in Fig. 57. The English version also has a similar configuration. As shown in Fig. 56, a language select area 30 is provided, where the 11 languages are displayed in a pull-down menu to allow any one of them to be selected. In other words, this page functions as a language select page. Incidentally, the click button may be provided not in pull-down menu but for each language.

Once the button B3 explained above is clicked, the top page S3e of English version is always linked. This is probably by reason of the fact a greater part of the nozzle users are in other than the Japanese-speaking countries. Thus, the process is guided to the top page S3e prepared in English, a language spread over a much wider range than Japanese. The language select function provided in this page indicates the existence of the pages prepared in 11 languages. The pages are thus so configured that the users in other than Japanese- and English-speaking countries can be positively guided to the quick guide.

In the case where English is selected as a language in the top page S3e of English version, the process proceeds to the content page S4e of English version. In the case where Japanese is selected as a language in the top page S3j of Japanese version, on the other hand, the process proceeds to the content page S4j of Japanese version. Also, in the case where Japanese is selected in the top page S3e of English version, the process once proceeds to the top page S3j of Japanese version, while in the case where English is selected in the top page S3j of Japanese version, the process temporarily proceeds to the top page S3e of English version.

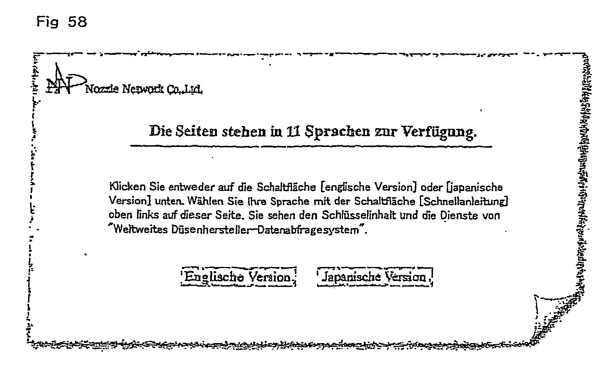

In the case where one (third language) of the nine languages other than Japanese and English is selected in the top pages S3e, S3j of the search system, the content page is not linked immediately but through the page S5 (corresponding to the second specified page). An example of the configuration of this page S5 is shown in Fig. 58. This page includes the description to the effect that the 11 languages of the world are used as a guide and that in the case where a language is selected by the "quick guide" button in the upper left portion of the page to which the process is passed by clicking one of the English version button B5 and the Japanese version button B6, the summary of the method of use and the contents of the service of this search system can be known (See Fig. 55). Specifically, the user of the third language world can be informed of the presence of the quick guide and guided to the quick guide. In Fig. 55, the page S5 is described in Japanese for the convenience of explanation, and there is a system prepared only in a third language but not in Japanese and English.

The pages are so configured that in the case where the button B5 is clicked at page S5, the content page S4e of English version is linked, while by clicking the button B5, the content page S4j of Japanese version is linked. As described above, in the case of a third language, the process is transferred to the content page always through the page 5.

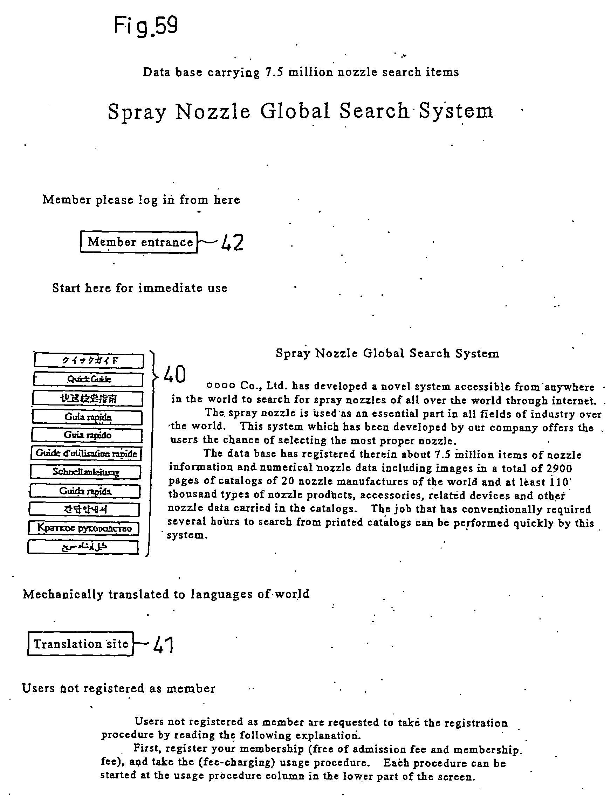

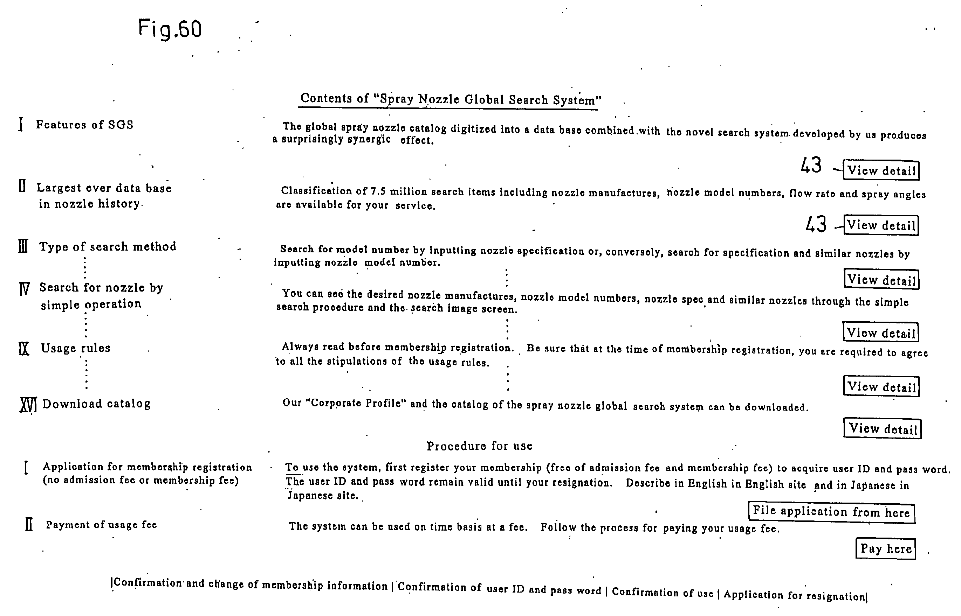

Next, an example of a configuration of the display screen of the content page S4j of Japanese version is shown in Figs. 59, 60. This is also the case with the configuration of English version. Figs. 59, 60 are coupled to each other in the same page, and by scrolling down the screen shown in Fig. 59, the contents of display in Fig. 60 can be sequentially confirmed. The content page S4 is for explaining the contents of the nozzle search system.

As shown in Fig. 59, buttons 40 for linking to the quick guide are arranged in the left part of the screen. A total of 11 buttons 40 are arranged and accompanied by the description "quick guide" in 11 languages. The user who can understand German as a third language, by clicking the button "Schnellanleitug" written in German, can transfer to the quick guide page prepared in German. Click buttons for various languages are available, and therefore the users of various countries of the world can be guided to the quick button.

Further, a button 41 is arranged to link to the translation site. The user can translate the page not prepared in a third language to the third language as required.

To use this search system, the procedure for membership registration is required. Once the membership registration is finished, the process can be transferred to the page where the search system can be used actually, by clicking the click button 42. In the case where the membership has yet to be registered, on the other hand, the membership registration page is entered to register the membership.

Fig. 60 shows the table of contents of the search system. The items of the contents are shown on the left side. The outline of each item is shown on the right side. In the case where it is desired to know the detailed contents of each item, the button 43 described as "view detail" is clicked. The items include "system features", "type of search method", "usage rule", etc. Items of the usage procedure and the usage fee payment are also available.

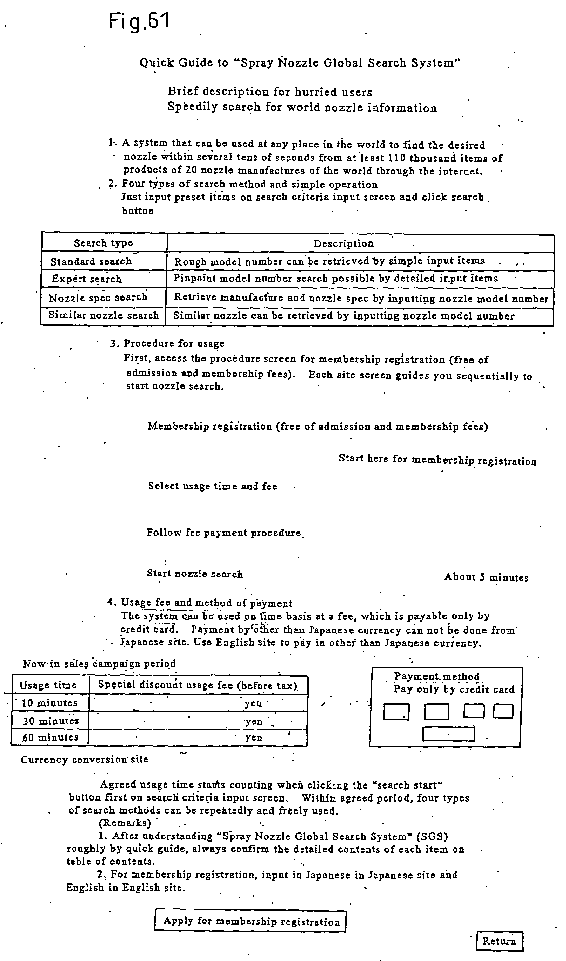

Next, the quick guide is explained. An example of the configuration of a quick guide display screen is shown in Fig. 61. This quick guide is a page for explaining the summary of the search system and corresponds to a specified page. The quick guide is prepared in 11 languages for an improved convenience of the users. The quick guide is for explaining the summary to the user hurried to use the system. This guide includes the description that the desired nozzle can be retrieved from the products of the nozzle manufactures of all over the world and that four types of search methods are available. The type of each search method and the summary thereof is described. Also, the procedure for use and the method of payment of the usage fee are briefly explained. The user who has understood the outline by the quick guide is prompted to confirm the detailed contents in the content page shown in Fig. 60.

As described above, even the user who cannot understand English can recognize the presence of a page in which the detailed contents are described in English (or Japanese). Thus, the user is given the chance of translating (by using the translation site, for example) the detailed contents. As a result, the consultant company can take the protective measure against any legal problem which may arise in transactions.

### Other Embodiments

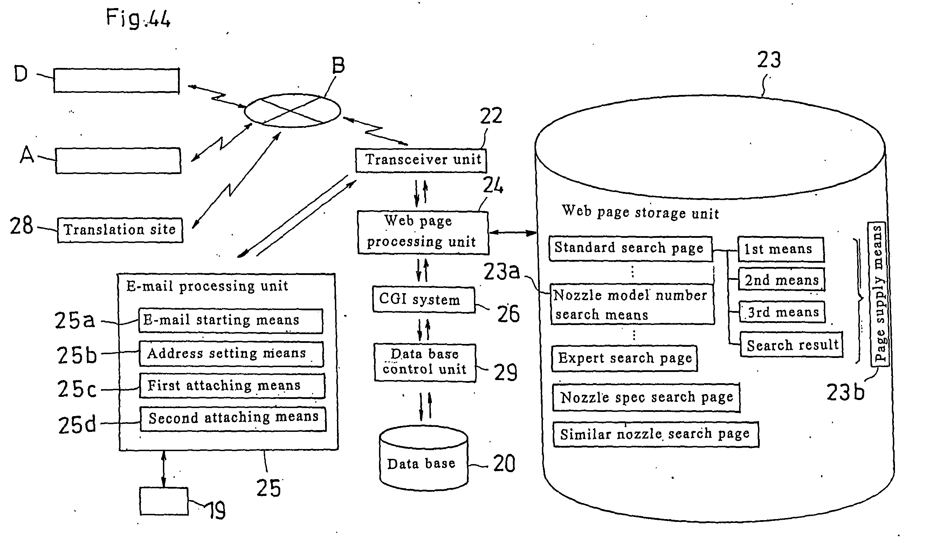

(1) In the search system according to the invention, whether the server system is configured of one or a plurality of server units can be appropriately selected. By configuring the server system of a plurality of server units and distributing the functions, the burden on each server unit can be reduced. For example, the functions of the server system can be distributed among the web server and the data base server. In the case where the server system is configured of a plurality of server units, the server units may be arranged at distributed places.
(2) The form in which the search criteria are input is not limited to a specified one. The selection by a pull-down menu, the input into the input column (box) through a keyboard or the like and the selection using a radio button are some examples appropriately used. Which item is input in what form can be determined arbitrarily.
(3) Another search method may be added to the four search methods described in the first embodiment.
(4) In the second embodiment, even in the case where only one reference nozzle is retrieved at step #2 of the flowchart shown in Fig. 20, the process proceeds to the screen of step #3. This process may be eliminated and may directly proceed to the screen for inputting the similar criteria at step #5.
(5) The input form of the similar nozzle in Figs. 24, 25 shows only an example and may include various modifications.
(6) In the fourth embodiment, "*1", "*2" and "*3" are used as marks indicating a provisional spray angle. However, marks are not limited to them, and characters, numerals, symbols, illustration, etc. or an appropriate combination thereof may alternatively be used.
(7) In the fourth embodiment, the provisional spray angle may be input to the data base manually by the operator or automatically registered in the data base by the automatic arithmetic operation of the computer (provisional spray angle setting means).
(8) The nozzle model number is appropriately set by each manufacture (in many cases, by combination of characters and numerals) and not limited to a specified form. A model number unique to the nozzle search system can be assigned.
(9) In the fifth embodiment, the electronic mail is started for the search result of the standard search. This is also the case with the search result of the expert search.
(10) In this embodiment, the electronic mail is started and the web page is attached. This process may be executed by the personal computer of the user or the server system. Specifically, the process of deleting the image information other than the thumbnail image (erasing the text data for linkage from the HTML data) or erasing the unnecessary text data may be executed by the server or the personal computer of the user. A part or the whole of the functions of the electronic mail processing unit 25 shown in Fig. 44 may be downloaded to and used by the personal computer of the user.
(11) As a mail address at the time of starting the electronic mail, the mail address of the nozzle manufacture of the nozzle included in the search result is automatically inserted. The user desirous of transmitting other than the address of the nozzle manufacture can insert his/her address.
(12) In Figs. 57 and 59, it is explained that the translation site is linked. Also in other pages prepared in Japanese or English, the link button for the translation site is preferably arranged similarly. This improves the convenience.
(13) The language select method in the page shown in Fig. 57 may be the same as the one shown in Fig. 59.
(14) In these embodiments, the first language is Japanese, the second language English, and the third languages nine languages including German, French, etc. The languages are not limited to them, and arbitrary languages can be selected appropriate as the first, second and third languages. Also, the number of third languages which is nine in the embodiments may alternatively be at least one.

## Claims

1. A nozzle information search system, wherein a data base is constructed based on nozzle catalogs in a server system installed on a network, and the nozzle user can retrieve the nozzle information by accessing the server system, **characterized in that** the server system includes:
a first nozzle model number search means to extract the nozzle model number information from the data base by inputting the search criteria of a first level;
a second nozzle model number search means adapted to extract the nozzle model number information narrowed more than the first nozzle model number information by inputting more detailed search criteria than the first level;
a nozzle specification search means to search the data base for the nozzle specification information by inputting the nozzle model number information; and
a similar nozzle search means adapted to extract the nozzle model number information of nozzles having similar specifications from the data base by inputting the reference nozzle information.

2. A nozzle information search system according to claim 1,
wherein the first nozzle model number search means and the second nozzle model number search means include at least a means for supplying an input form to input the first-step search criteria and a means for supplying an input form to input the second-step search criteria, each step being executed by changing the page, and
wherein a display area is provided to display the search criteria already input on the display screen for displaying the input form and the display screen for displaying the search result.

3. A nozzle information search system according to claim 1,
wherein the first nozzle model number search means includes a first means to supply an input form for inputting the nozzle category as a search criteria, a second means to supply an input form for inputting the spray pattern, and a third means to supply an input form for inputting the nozzle specification.

4. A nozzle information search system according to claim 1,
wherein the second nozzle model number search means includes a fourth means to supply an input form for inputting the nozzle category, a fifth means to supply an input form for inputting the inlet direction of an fluid, a sixth means to supply an input form for inputting the spray pattern and a seventh means to supply an input form for inputting the nozzle specification, as search criteria.

5. A nozzle information search system according to claim 3,
wherein the input form is so configured that a plurality of the spray patterns are displayed by illustration to permit selection of one of the spray patterns.

6. A nozzle information search system according to claim 4,
wherein the input form displays by illustration a plurality of the inlet directions and a plurality of the spray patterns, so that any one of the inlet directions and the spray patterns are selectable.

7. A nozzle information search system according to claim 6,
wherein in the case where one of the inlet directions is selected, only the spray pattern corresponding to the selected inlet direction is displayed by illustration.

8. A nozzle information search system according to claim 1, **characterized by** comprising:
a means to search the data base based on the reference nozzle identification information that has been input;
a means to supply a display screen to display a list of reference nozzles extracted by search and select one reference nozzle from the displayed list;
a means to supply an input form for inputting the similar criteria of nozzles having similar specifications to the reference nozzle selected through the display screen; and
a means to extract a similar nozzle by searching the data base according to the similar criteria input by the input form.

9. A nozzle information search system according to claim 8,
wherein the input form is supplied in the form of table comparing the specification of the reference nozzle with the specification of the similar nozzles.

10. A nozzle information search system according to claim 8,
wherein the similar criteria include the pressure, flow rate and spray angle characteristics.

11. A nozzle information search system according to claim 10,
wherein in the presence of a plurality of combination data of the pressure value and the flow rate value of the reference nozzle as a pair, one or a plurality of combinations can be designated as the similar criteria.

12. A nozzle information search system according to claim 8,
wherein the spray pattern and the inlet direction of the fluid can be selected as search criteria.

13. A nozzle information search system according to claim 1, **characterized by** comprising:
a display data generating means to generate the display data for displaying the result of search by the data base search means on the computer screen of the nozzle user; and
a unit conversion means in which in the case where the unit of the characteristic value input by the nozzle user for search is different from the unit displayed in the nozzle catalog, one of the units is converted to unify the two units;
wherein the data base search means is so configured that the data base is searched based on the result of conversion by the unit conversion means, and
wherein the display data is generated in such a manner that the unit to be displayed can be selected by the nozzle user through the search result display screen.

14. A nozzle information search system according to claim 13,
wherein the data base is constructed based on the unit described in the nozzle catalog.

15. A nozzle information search system according to claim 13,
wherein the display data is generated in such a manner that the units displayed by the nozzle manufactures can be collectively converted by selecting the unit to be displayed.

16. A nozzle information search system according to claim 13,
wherein the display data is generated in such a manner that the unit input by the nozzle user on the nozzle search screen is visually recognizable in the unit selector for collective unit conversion on the first search result display screen.

17. A nozzle information search system according to claim 13,
wherein the nozzle information including the nozzle manufactures and the model numbers retrieved are displayed as a list on the search result display screen and the display data is generated in such a manner as to display the detailed information on the nozzle of the particular model number by selecting a specific one of the model numbers.

18. A nozzle information search system according to claim 17,
wherein the table of the pressure and flow rate can be displayed as the detailed information and the unit conversion can be carried out at the same time.

19. A nozzle catalog data base used for the nozzle information search system according to claim 1,
wherein the pressure, flow rate and the spray angle described in the catalog are handled as a combination unit and this combination unit is registered with corresponding nozzle model number information;
wherein in the absence of the description of the spray angle corresponding to the combination of pressure and flow rate in the catalog, the appropriate one of the spray angles described in the catalog which corresponds to the pressure is registered as a provisional spray angle;
wherein the provisional spray angle is registered together with the identification data indicating the fact that the spray angle is provisional; and
wherein in the case where the nozzle model number information is retrieved based on the pressure, flow rate and spray angle, the fact that the spray angle is provisional can be displayed on the search result display screen.

20. A nozzle catalog data base according to claim 19,
wherein in the absence of description of the spray angle corresponding to the combination of a first pressure and flow rate in the catalog but the spray angle corresponding to a different combination, the spray angle corresponding to a second pressure nearest to the first pressure is registered as a provisional spray angle.

21. A nozzle catalog data base according to claim 19,
wherein in the presence of description of only one spray angle, the particular spray angle is registered as a provisional spray angle.

22. A nozzle catalog data base according to claim 19, a described in any one of claims 1 to 3,
wherein in the presence of description of the spray distance and the spray width in the catalog, the spray distance and the spray width converted into a spray angle is registered as a provisional spray angle together with the second identification data.

23. A nozzle information search system according to claim 1, wherein the server system includes:
a page supply means to supply the search result page for displaying the nozzle information and the thumbnail image of the catalog of the particular nozzle as a result of the search by the data base search means; and
an electronic mail starting means arranged on the search result page;
the server system further including a page attaching means to attach the search result page to the electronic mail on the electronic mail generating screen arranged in the search result page;
wherein the page attaching means executes the process in such a manner as to attach the nozzle information and the thumbnail image while at the same time deleting the predetermined text information not required to be transmitted and the predetermined image information other than the thumbnail image from the page.

24. A nozzle information search system according to claim 23,
wherein the attached information is the HTML file and the image file of the thumbnail image.

25. A nozzle information search system according to claim 1, wherein the server system includes:
a means to supply a first page group generated based on a first language to supply the user with a nozzle search service;
a means to supply a second page group with the same contents as the first page group generated based on the second language;
a means to supply a specified page constituting a part included in the page group for explaining at least the summary of the search system; and
a guide means to guide the user to the specified page; and
wherein the specified page is generated based on at least one third language in addition to the first and second languages.

26. A nozzle information search system according to claim 25, wherein the server system includes:
a second means to supply a page at the top of the search system or a page linked to the top page, at least one of the pages functioning as a language select page adapted to select one of the first, second and third languages, the system further including:
a third means to supply a first content page prepared based on the first language, arranged for explaining the table of contents of the search system and linked to the specified page prepared based on the language selected by selecting the language type;
a fourth means to supply a second content page having the same content as the first content page and prepared based on the second language; and
a fifth means to supply a second specified page prepared based on the third language for explaining the presence of the specified page;
wherein the guide means is so configured that the first content page is linked in the case where the first language is selected, the second content page is linked in the case where the second language is selected and the second specified page is linked in the case where the third language is selected in the language select page.

27. A nozzle information search system according to claim 25,
wherein the guide means is so configured that the second specified page is linked to one of the first content page and the second content page.

28. A nozzle information search system according to claim 25,
wherein the guide means is so configured that the first content page and the second content page are linked to the specified page and have the function to select the first, second and third languages, and wherein by selecting one of these languages, the specified page prepared based on the selected language is linked.

29. A nozzle information search system according to claim 25,
wherein at least a part of pages included in the first page group and the second page group is linked to a translation site for translating the first or second language to the third language.
